(19) Europäisches Patentamt
European Patent Office
Office européen des brevets

(11) EP 3 431 533 A1

(12) EUROPEAN PATENT APPLICATION
published in accordance with Art. 153(4) EPC

(43) Date of publication:
**23.01.2019 Bulletin 2019/04**

(21) Application number: **17766782.1**

(22) Date of filing: **16.03.2017**

(51) Int Cl.:
***C08J 9/04*** *(2006.01)* ***C08F 8/30*** *(2006.01)*
***C08K 9/04*** *(2006.01)* ***C08L 101/02*** *(2006.01)*

(86) International application number:
**PCT/JP2017/010663**

(87) International publication number:
**WO 2017/159786 (21.09.2017 Gazette 2017/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.03.2016 JP 2016054226**

(71) Applicant: **JXTG Nippon Oil & Energy Corporation**
**Chiyoda-ku**
**Tokyo 1008162 (JP)**

(72) Inventors:
- **CHINO Keisuke**
  **Tokyo 1008162 (JP)**
- **SUZUKI Hiroaki**
  **Tokyo 1008162 (JP)**
- **JIN Zhengzhe**
  **Tokyo 1008162 (JP)**
- **MATSUO Yusuke**
  **Tokyo 1008162 (JP)**

(74) Representative: **Hoffmann Eitle**
**Patent- und Rechtsanwälte PartmbB**
**Arabellastraße 30**
**81925 München (DE)**

# (54) COMPOSITION FOR FOAM, FOAM, METHODS FOR PRODUCING THESE, AND MOLDED FOAM ARTICLE

(57) A composition for foam comprises at least one elastomer component selected from the group consisting of elastomeric polymers (A) each of which has a side chain containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below; an organically modified clay; and a foaming agent, in which an amount of the organically modified clay contained is 20 parts by mass or less relative to 100 parts by mass of the elastomer component.

EP 3 431 533 A1

## Description

[Technical Field]

The present invention relates to a composition for foam, a foam, a method for producing them, and a foam molded article.

[Background Art]

Heretofore, thermoplastic elastomers have been known as materials that use physical cross-linking, and that can be easily molded by heating and melting without requiring complicated vulcanization and molding steps including preliminary molding or the like. In order to make use of characteristics of such thermoplastic elastomers, it has been proposed in recent years to foam a thermoplastic elastomer to form a foam.

For example, International Publication No. WO2006/090687 (PTL 1) discloses a composition for foam comprising a thermoplastic elastomer having a side chain containing a carbonyl-containing group and at least one selected from the group consisting of an imino group, a nitrogen-containing heterocycle, and a covalent-bond cross-linkable moiety. In addition, Japanese Unexamined Patent Application Publication No. 2012-57132 (PLT 2) discloses a composition for foam comprising a thermoplastic elastomer having a side chain containing a nitrogen-containing heterocycle and a carbonyl group, and thermally expandable microcapsules.

[Patent Literature]

[PLT 1] International Publication No. WO 2006/090687
[PLT 2] Japanese Unexamined Patent Application Publication No. 2012-57132

[Summary of Invention]

[Technical Problem]

However, the compositions for foam described in PLTs 1 and 2 mentioned above are not necessarily sufficient from the viewpoints that the composition is capable of foaming at a sufficiently high level of foaming ratio, and forming a foam having all of properties including modulus at 100% elongation, tensile strength at break, and resistance to compression set at high levels in a well-balanced manner.

The present invention has been made in view of the problems in the conventional technique, and an object of the present invention is to provide a composition for foam capable of foaming at a sufficiently high level of foaming ratio and forming a foam having high levels of modulus at 100% elongation, tensile strength at break, and resistance to compression set in a well-balanced manner, a method for producing a composition for foam capable of producing the composition for foam, a foam obtained by using the composition for foam, a method for forming the foam, and a foam molded article comprising the foam.

[Solution to Problem]

The present inventors have conducted intensive study to achieve the above-described object, and consequently have found that a composition for foam is made capable of foaming at a sufficiently high level of foaming ratio and forming a foam having higher levels of modulus at 100% elongation, tensile strength at break, and resistance to compression set in a well-balanced manner, when the composition for foam is a composition comprising: at least one elastomer component selected from the group consisting of elastomeric polymers (A) each of which has a side chain containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below; an organically modified clay; and a foaming agent, wherein an amount of the organically modified clay contained is 20 parts by mass or less relative to 100 parts by mass of the elastomer component. This finding has led to the completion of the present invention.

Specifically, a composition for foam of the present invention comprises:

at least one elastomer component selected from the group consisting of elastomeric polymers (A) each of which

has a side chain containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below;
an organically modified clay; and
a foaming agent, wherein
an amount of the organically modified clay contained is 20 parts by mass or less relative to 100 parts by mass of the elastomer component.

In the composition for foam of the present invention, the organically modified clay is preferably a clay organically modified by at least one organically modifying agent selected from ammonium salts represented by the following general formula (I):

$$R_2N^+ (CH_3)_2 \cdot X^- \qquad (I)$$

(in the formula (I), Rs each independently represent at least one selected from alkyl groups and aralkyl groups and $X^-$ represents a counter anion). In addition, the organically modifying agent contains both an ammonium salt (A) represented by the above general formula (I) in which the two Rs in the formula (I) are alkyl groups, and an ammonium salt (B) in which one of the two Rs in the general formula (I) is an alkyl group whereas the other one is an aralkyl group.

Moreover, in the composition for foam of the present invention, the foaming agent is preferably at least one kind selected from the group consisting of thermally expandable microcapsules, physical foaming agents, and chemical foaming agents.

Further, in the composition for foam of the present invention, the elastomer component is preferably at least one selected from the group consisting of reaction products of a maleic anhydride-modified elastomeric polymer with at least one compound selected from triazoles optionally having at least one substituent selected from hydroxy groups, thiol groups, and amino groups, pyridines optionally having at least one substituent selected from hydroxy groups, thiol groups, and amino groups, thiadiazoles optionally having at least one substituent selected from hydroxy groups, thiol groups, and amino groups, imidazoles optionally having at least one substituent selected from hydroxy groups, thiol groups, and amino groups, isocyanurates optionally having at least one substituent selected from hydroxy groups, thiol groups, and amino groups, triazines optionally having at least one substituent selected from hydroxy groups, thiol groups, and amino groups, hydantoins optionally having at least one substituent selected from hydroxy groups, thiol groups, and amino groups, tris(hydroxyethyl) isocyanurates, sulfamides, and polyether polyols.

Meanwhile, a method for producing a composition for foam of the present invention comprises:

a first step of mixing an organically modified clay into an elastomeric polymer having a cyclic acid anhydride group in a side chain to obtain a mixture;
a second step of adding, to the mixture, at least one raw material compound of a compound (I) that forms a hydrogen-bond cross-linkable moiety upon a reaction with the cyclic acid anhydride group, and a mixed raw material of the compound (I) with a compound (II) that forms a covalent-bond cross-linking moiety upon a reaction with the cyclic acid anhydride group, to allow a reaction to proceed between the polymer and the raw material compound, thereby obtaining a thermoplastic elastomer composition; and
a third step of adding a foaming agent to the thermoplastic elastomer composition to obtain a composition for foam, wherein
the composition for foam is a composition comprising at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below;
the organically modified clay; and
the foaming agent, and
in the first step, the organically modified clay is mixed into the elastomeric polymer having a cyclic acid anhydride group in a side chain at such a ratio that an amount of the organically modified clay contained in the composition for foam is 20 parts by mass or less relative to 100 parts by mass of the elastomer component.

In the method for producing a composition for foam of the present invention, it is preferable that the elastomeric polymer having a cyclic acid anhydride group in a side chain be a maleic anhydride-modified elastomeric polymer, the raw material compound be at least one compound selected from triazoles optionally having at least one substituent selected from hydroxy groups, thiol groups, and amino groups, pyridines optionally having at least one substituent

selected from hydroxy groups, thiol groups, and amino groups, thiadiazoles optionally having at least one substituent selected from hydroxy groups, thiol groups, and amino groups, imidazoles optionally having at least one substituent selected from hydroxy groups, thiol groups, and amino groups, isocyanurates optionally having at least one substituent selected from hydroxy groups, thiol groups, and amino groups, triazines optionally having at least one substituent selected from hydroxy groups, thiol groups, and amino groups, hydantoins optionally having at least one substituent selected from hydroxy groups, thiol groups, and amino groups, tris(hydroxyethyl) isocyanurates, sulfamides, and polyether polyols, and the elastomer component be at least one selected from the group consisting of reaction products of the maleic anhydride-modified elastomeric polymer with the raw material compound.

Moreover, in the method for producing a composition for foam of the present invention, the organically modified clay is preferably a clay organically modified by at least one organically modifying agent selected from ammonium salts represented by the following general formula:

$$R_2N^+(CH_3)_2 \cdot X^- \qquad (I)$$

(in the formula (I), Rs each independently represent at least one selectged from alkyl groups and aralkyl groups and $X^-$ represents a counter anion).

Further, a foam of the present invention is formed by foaming the composition for foam of the present invention.

Still further, a foam molded article of the present invention comprises the foam of the present invention. The foam molded article of the present invention is preferably a molded article for use in any application selected from the group consisting of civil engineering and construction materials, industrial parts, electric and electronic parts, and daily necessities, and is preferably a molded article for use in one application selected from the group consisting of automotive parts, gap filling materials, sealing materials for construction, sealing materials for pipe joints, pipe protecting materials, wiring protecting materials, heat insulating materials, packing materials, cushioning materials, electrical insulating materials, contact rubber sheets, sports and leisure articles, and miscellaneous goods.

Even still further, a method for producing a foam in the present invention is a method comprising obtaining a foam by foaming the composition for foam of the present invention.

[Advantageous Effects of Invention]

According to the present invention, it is possible to provide a composition for foam capable of foaming at a sufficiently high level of foaming ratio, and forming a foam having high levels of modulus at 100% elongation, tensile strength at break, and resistance to compression set in a well-balanced manner, and also provide a method for producing a composition for foam capable of producing the composition for foam, a foam obtained by using the composition for foam, a method for producing the foam, and a foam molded article comprising the foam.

[Description of Embodiments]

Hereinafter, the present invention will be described in detail based on preferred embodiments thereof.

[Composition for Foam]

A composition for foam of the present invention comprises:

at least one elastomer component selected from the group consisting of elastomeric polymers (A) each of which has a side chain containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below;
an organically modified clay; and
a foaming agent, wherein
an amount of the organically modified clay contained is 20 parts by mass or less relative to 100 parts by mass of the elastomer component.

(Elastomer Component)

The elastomer component is at least one selected from the group consisting of the above-described elastomeric polymers (A) and (B). In each of the elastomeric polymers (A) and (B), the "side chain" refers to a side chain and a terminal of the elastomeric polymer. In addition, "a side chain containing a hydrogen-bond cross-linkable moiety having

a carbonyl-containing group and/or a nitrogen-containing heterocycle (hereinafter, sometimes simply referred to as "side chain (a)" for convenience)" means that a carbonyl-containing group and/or a nitrogen-containing heterocycle (more preferably a carbonyl-containing group and a nitrogen-containing heterocycle) serving as a hydrogen-bond cross-linkable moiety is chemically stably bonded (covalently bonded) to an atom (generally, a carbon atom) forming a main chain of the elastomeric polymer. In addition, the "containing a hydrogen-bond cross-linkable moiety and a covalent-bond cross-linking moiety in a side chain" is a concept including a case where side chains of both a side chain having a hydrogen-bond cross-linkable moiety (hereinafter, sometimes referred to as "side chain (a')" for convenience) and a side chain having a covalent-bond cross-linking moiety (hereinafter, sometimes referred to as "side chain (b)" for convenience) are contained, so that the side chains of the polymer contain both a hydrogen-bond cross-linkable moiety and a covalent-bond cross-linking moiety, as well as a case where a side chain having both a hydrogen-bond cross-linkable moiety and a covalent-bond cross-linking moiety (a single side chain containing both a hydrogen-bond cross-linkable moiety and a covalent-bond cross-linking moiety therein: hereinafter, such a side chain is sometimes referred to as "side chain (c)" for convenience) is contained, so that the side chain of the polymer contain both a hydrogen-bond cross-linkable moiety and a covalent-bond cross-linking moiety.

The main chain (polymer forming a main chain portion) of each of the elastomeric polymers (A) and (B) may be generally a known natural polymer or a synthetic polymer, wherein the polymer has a glass-transition point of room temperature (25°C) or lower (the main chain may be a so-called elastomer), and is not particularly limited. Accordingly, the elastomeric polymers (A) and (B) may be, for example, those which have an elastomeric polymer being a natural polymer, a synthetic polymer, or the like and having a glass-transition point of room temperature (25°C) or lower as a main chain, and which contain a side chain (a) containing a hydrogen-bond cross-linkable moiety having a carbonyl-containing group and/or a nitrogen-containing heterocycle; those which have an elastomeric polymer being a natural polymer, a synthetic polymer, or the like and having a glass-transition point of room temperature (25°C) or lower as a main chain, and which contain a side chain (a') having a hydrogen-bond cross-linkable moiety and a side chain (b) having a covalent-bond cross-linking moiety as side chains; those which have an elastomeric polymer being a natural polymer, a synthetic polymer, or the like and having a glass-transition point of room temperature (25°C) or lower as a main chain, and which contain a side chain (c) containing both a hydrogen-bond cross-linkable moiety and a covalent-bond cross-linking moiety; or the like.

Examples of the main chains (polymers forming main chain portions) of these elastomeric polymers (A) and (B) include diene-based rubbers such as natural rubber (NR), isoprene rubber (IR), butadiene rubber (BR), 1,2-butadiene rubber, styrene-butadiene rubber (SBR), acrylonitrile-butadiene rubber (NBR), chloroprene rubber (CR), butyl rubber (IIR), and ethylene-propylene-diene rubber (EPDM), as well as hydrogenated products thereof; olefin-based rubbers such as ethylene-propylene rubber (EPM), ethylene-acrylic rubber (AEM), ethylene-butene rubber (EBM), chlorosulfonated polyethylene, acrylic rubber, fluororubber, polyethylene rubber, and polypropylene rubber; epichlorohydrin rubber; polysulfide rubbers; silicone rubbers; urethane rubbers; and the like.

The main chains of the elastomeric polymers (A) and (B) (polymers forming main chain portions) may also be those formed of an elastomeric polymer containing a resin component, and examples thereof include optionally hydrogenated polystyrene-based elastomeric polymers (for example, SBS, SIS, SEBS, and the like), polyolefin-based elastomeric polymers, polyvinyl chloride-based elastomeric polymers, polyurethane-based elastomeric polymers, polyester-based elastomeric polymers, polyamide-based elastomeric polymers, and the like.

The main chains of the elastomeric polymers (A) and (B) are each preferably at least one selected from diene-based rubbers, hydrogenated products of diene-based rubbers, olefin-based rubbers, optionally hydrogenated polystyrene-based elastomeric polymers, polyolefin-based elastomeric polymers, polyvinyl chloride-based elastomeric polymers, polyurethane-based elastomeric polymers, polyester-based elastomeric polymers, and polyamide-based elastomeric polymers. In addition, the main chains of the elastomeric polymers (A) and (B) are each preferably a hydrogenated product of a diene-based rubber or an olefin-based rubber from the viewpoint of the absence of a double bond susceptible to aging, and preferably a diene-based rubber from the viewpoints of the low cost and the high reactivity (the presence of many double bonds capable of an ene reaction with a compound such as maleic anhydride).

Moreover, the elastomeric polymers (A) and (B) may be liquid or solid, and the molecular weights thereof are not particularly limited. The molecular weights may be selected, as appropriate, according to an application for which a foam obtained by using the composition for foam of the present invention is used, or a required physical property or the like of the foam.

In the composition for foam of the present invention, the above-described elastomeric polymers (A) and (B) are preferably liquid when an importance is placed on the flowability in a state where de-cross-linking of the elastomer component or the like is caused by heating a foam obtained after foaming of the composition for foam. For example, when the main chain portion is a diene-based rubber such as isoprene rubber or butadiene rubber, the weight average molecular weight of the main chain portion is preferably 1, 000 to 100, 000 and is particularly preferably about 1, 000 to 50, 000 in order to make the elastomeric polymers (A) and (B) liquid.

On the other hand, in the composition for foam of the present invention, the elastomeric polymers (A) and (B)

are preferably solid when an importance is placed on the strength of a foam obtained by foaming the composition for foam. For example, when the main chain portion is a diene-based rubber such as isoprene rubber or butadiene rubber, the weight average molecular weight of the main chain portion is preferably 100,000 or higher, and particularly preferably about 500, 000 to 1, 500, 000 in order to make the elastomeric polymers (A) and (B) solid.

The weight average molecular weight is a weight average molecular weight (in terms of polystyrene) measured by gel permeation chromatography (GPC). It is preferable to use tetrahydrofuran (THF) as a solvent for the measurement.

In the composition for foam of the present invention, a mixture of two or more of the elastomeric polymers (A) and (B) can be used. In this case, the mixing ratio of the elastomeric polymers can be any ratio according to an application for which a foam obtained by using the composition for foam of the present invention is used, or a required physical property or the like of the foam.

In addition, the glass-transition points of the elastomeric polymers (A) and (B) are 25°C or below as mentioned above. This is because when the glass-transition points of the elastomeric polymers are within this range, the composition for foam of the present invention and the foam obtained after the foaming exhibit rubber-like elasticity at room temperature. Meanwhile, the "glass-transition point" in the present invention is a glass-transition point measured by differential scanning calorimetry (DSC). For the measurement, the rate of temperature rise is preferably 10°C/min.

The main chains of the elastomeric polymers (A) and (B) are preferably diene-based rubbers such as natural rubber (NR), isoprene rubber (IR), butadiene rubber (BR), 1,2-butadiene rubber, styrene-butadiene rubber (SBR), ethylene-propylene-diene rubber (EPDM), or butyl rubber (IIR); or olefin-based rubbers such as ethylene-propylene rubber (EPM), ethylene-acrylic rubber (AEM), or ethylene-butene rubber (EBM), because the resultant elastomeric polymers (A) and (B) have glass-transition points of 25°C or below, and a foam obtained after the foaming of the composition for foam shows rubber-like elasticity at room temperature (25°C). In addition, when an olefin-based rubber is used as the main chain of each of the elastomeric polymers (A) and (B), the absence of double bonds in the structure develops tendencies to improve the modulus of a foam obtained by using the composition for foam, and to more sufficiently suppressing deterioration of the composition for foam and the foam obtained by using this composition.

The bound styrene content of the styrene-butadiene rubber (SBR) which can be used as the elastomeric polymers (A) and (B), the hydrogenation ratio of the hydrogenated elastomeric polymer which can be used as the elastomeric polymers (A) and (B), and the like are not particularly limited, but can be adjusted to any ratio according to an application for which a foam obtained by using the composition for foam of the present invention is used, physical properties required for the composition and the foam, or the like.

In addition, when ethylene-propylene-diene rubber (EPDM), ethylene-acrylic rubber (AEM), ethylene-propylene rubber (EPM), or ethylene-butene rubber (EBM) is used as the main chain of the above-described elastomeric polymer (A) or (B), the degree of crystallinity therein is preferably less than 10% (more preferably 5 to 0%) especially from the viewpoint of expression of favorable rubber-like elasticity at room temperature. Moreover, when ethylene-propylene-diene rubber (EPDM), ethylene-acrylic rubber (AEM), ethylene-propylene rubber (EPM), or ethylene-butene rubber (EBM) is used as the main chain of the above-described elastomeric polymer (A) or (B), the ethylene content therein is preferably 10 to 90% by mole, and more preferably 30 to 90% by mole. The ethylene content within this range is preferable. This is because, when a foam is formed by using the composition for foam of the present invention, the foam thus obtained is excellent in compression set and mechanical strengths (especially, tensile strength).

Further, the above-described elastomeric polymer (A) or (B) is preferably amorphous from the viewpoint that the composition for foam of the present invention and the foam obtained by using the same can express favorable rubber-like elasticity at room temperature. Moreover, such elastomeric polymer (A) or (B) may be an elastomer partially having crystallinity (crystal structure), but even in this case, the degree of crystallinity is preferably less than 10% (particularly preferably 5 to 0%) . Here, such a degree of crystallinity can be obtained in such a way that diffraction peaks are measured by using an X-ray diffraction instrument (for example, one manufactured by Rigaku Corporation under the trade name "MiniFlex 300") as a measurement instrument and an integral ratio between the scattering peaks derived from the crystalline and amorphous structures is calculated.

In addition, as described above, the above-described elastomeric polymers (A) and (B) have, as a side chain, at least one of a side chain (a) containing a hydrogen-bond cross-linkable moiety having a carbonyl-containing group and/or a nitrogen-containing heterocycle; a side chain (a') containing a hydrogen-bond cross-linkable moiety and a side chain (b) containing a covalent-bond cross-linking moiety; and a side chain (c) containing a hydrogen-bond cross-linkable moiety and a covalent-bond cross-linking moiety. Note that, in the present invention, the side chain (c) can also be regarded as a side chain functioning as a side chain (a') and also as a side chain (b). Each of the side chains is described below.

<Side Chain (a') : Side Chain Containing Hydrogen-bond Cross-linkable Moiety>

The side chain (a') containing a hydrogen-bond cross-linkable moiety may be any, and the structure thereof is not particularly limited, as long as the side chain has a group that can form a cross-linkage by a hydrogen bond (for

example, a hydroxy group, a hydrogen-bond cross-linkable moiety contained in the side chain (a) described later, or the like), and forms a hydrogen bond on the basis of the group. Here, the hydrogen-bond cross-linkable moiety is a moiety through which polymer molecules (elastomer molecules) are cross-linked by a hydrogen bond. Note that the cross-linkage by a hydrogen bond is formed only when there are a hydrogen acceptor (a group containing an atom containing lone pair electrons, or the like) and a hydrogen donor (a group having a hydrogen atom covalently bonded to an atom having a high electronegativity, or the like). On the other hand, when both a hydrogen acceptor and a hydrogen donor are not present in side chains of elastomer molecules, no cross-linkage by a hydrogen bond is formed. For this reason, only when both a hydrogen acceptor and a hydrogen donor are present in side chains of elastomer molecules, a hydrogen-bond cross-linkable moiety can be present in the system. Note that, in the present invention, if both a portion that can function as a hydrogen acceptor (for example, a carbonyl group or the like) and a portion that can function as a hydrogen donor (for example, a hydroxy group or the like) are present in side chains of elastomer molecules, the portion that can function as a hydrogen acceptor and the portion that can function as a hydrogen donor in the side chains are considered to be hydrogen-bond cross-linkable moieties.

The hydrogen-bond cross-linkable moiety in such a side chain (a') is preferably a hydrogen-bond cross-linkable moiety having a carbonyl-containing group and/or a nitrogen-containing heterocycle (a hydrogen-bond cross-linkable moiety contained in the side chain (a)), which will be described below, from the viewpoints of the formation of a stronger hydrogen bond and the like. Specifically, the side chain (a') is more preferably the side chain (a) described later. Moreover, from the same viewpoints, the hydrogen-bond cross-linkable moiety in the side chain (a') is more preferably a hydrogen-bond cross-linkable moiety having a carbonyl-containing group and a nitrogen-containing heterocycle.

<Side Chain (a) : Side Chain Containing Hydrogen-bond cross-linkable moiety Having Carbonyl-Containing Group and/or Nitrogen-Containing Heterocycle>

The side chain (a) containing a hydrogen-bond cross-linkable moiety having a carbonyl-containing group and/or a nitrogen-containing heterocycle may be any, as long as the side chain (a) has a carbonyl-containing group and/or a nitrogen-containing heterocycle, and the other aspect of the structure are not particularly limited. The hydrogen-bond cross-linkable moiety more preferably has a carbonyl-containing group and a nitrogen-containing heterocycle.

The carbonyl-containing group is not particularly limited, as long as the group contains a carbonyl group. Specific examples thereof include amide, ester, imide, carboxy group, carbonyl group, and the like. The carbonyl-containing group may be a group introduced to the main chain (the polymer of the main chain portion) by using a compound capable of introducing a carbonyl-containing group to a main chain. The compound capable of introducing a carbonyl-containing group to a main chain is not particularly limited, and specific examples thereof include ketones, carboxylic acids, derivatives thereof, and the like.

Examples of the carboxylic acids include organic acids having saturated or unsaturated hydrocarbon groups, and the hydrocarbon groups may be any of aliphatic, alicyclic, or aromatic ones, and the like. Specific examples of the carboxylic acid derivatives include carboxylic anhydrides, amino acids, thiocarboxylic acids (mercapto group-containing carboxylic acids), esters, amino acids, ketones, amides, imides, dicarboxylic acids and their monoesters, and the like.

In addition, specific examples of the carboxylic acids, the derivatives thereof, and the like include carboxylic acids such as malonic acid, maleic acid, succinic acid, glutaric acid, phthalic acid, isophthalic acid, terephthalic acid, p-phenylenediacetic acid, p-hydroxybenzoic acid, p-aminobenzoic acid, and mercaptoacetic acid, as well as these carboxylic acids containing substituents; acid anhydrides such as succinic anhydride, maleic anhydride, glutaric anhydride, phthalic anhydride, propionic anhydride, and benzoic anhydride; aliphatic esters such as maleic acid esters, malonic acid esters, succinic acid esters, glutaric acid esters, and ethyl acetate; aromatic esters such as phthalic acid esters, isophthalic acid esters, terephthalic acid esters, ethyl-m-aminobenzoate, and methyl-p-hydroxybenzoate; ketones such as quinone, anthraquinone, and naphthoquinone; amino acids such as glycine, tyrosine, bicine, alanine, valine, leucine, serine, threonine, lysine, aspartic acid, glutamic acid, cysteine, methionine, proline, and N-(p-aminobenzoyl)-β-alanine; amides such as maleamide, maleamidic acid (maleic monoamide), succinic monoamide, 5-hydroxyvaleramide, N-acetylethanolamine, N,N'-hexamethylene bis(acetamide), malonamide, cycloserine, 4-acetamidophenol, and p-acetamidebenzoic acid; imides such as maleimide and succinimide; and the like.

Of these examples, the compound capable of introducing a carbonyl group (carbonyl-containing group) is preferably a cyclic acid anhydride such as succinic anhydride, maleic anhydride, glutaric anhydride, or phthalic anhydride, and is particularly preferably maleic anhydride.

Meanwhile, when the side chain (a) has a nitrogen-containing heterocycle, the structure or the like of the nitrogen-containing heterocycle is not particularly limited as long as the nitrogen-containing heterocycle is introduced to the main chain directly or through an organic group. It is also possible to use, as the nitrogen-containing heterocycle, one containing a hetero atom other than a nitrogen atom, such as a sulfur atom, an oxygen atom, or a phosphorus atom, in the heterocycle, as long as a nitrogen atom is contained in the heterocycle. Here, use of the nitrogen-containing heterocycle in the side chain (a) is preferable because the presence of the heterocycle structure results in a stronger

hydrogen bond forming the cross-linkage, so that the foam obtained by using the obtained composition for foam of the present invention has an improved tensile strength.

In addition, the above-described nitrogen-containing heterocycle may have a substituent, and examples of the substituent include alkyl groups such as a methyl group, an ethyl group, an (iso)propyl group, and a hexyl group; alkoxy groups such as a methoxy group, an ethoxy group, and an (iso)propoxy group; groups consisting of a halogen atom such as a fluorine atom, a chlorine atom, a bromine atom, or an iodine atom; a cyano group; an amino group; an aromatic hydrocarbon group; an ester group; an ether group; an acyl group; a thioether group; and the like, any ones of which can also be used in combination. The position of substitution of such a substituent is not particularly limited, and the number of such substituents is not limited.

Moreover, the above-described nitrogen-containing heterocycle may or may not have aromatic properties. However, a nitrogen-containing heterocycle having aromatic properties is preferable, because the composition for foam of the present invention and the foam obtained by foaming the same are further improved in compression set and mechanical strength.

In addition, such a nitrogen-containing heterocycle is preferably, but not particularly limited to, a 5-membered ring or a 6-membered ring, from the viewpoints that the hydrogen bond becomes more strongly, and the compression set and the mechanical strength are further improved. Specific examples of the nitrogen-containing heterocycle include pyrrololine, pyrrolidone, oxindole (2-oxindole), indoxyl (3-oxindole), dioxindole, isatin, indolyl, phthalimidine, β-isoindigo, monoporphyrin, diporphyrin, triporphyrin, azaporphyrin, phthalocyanine, hemoglobin, uroporphyrin, chlorophyll, phylloerythrin, imidazole, pyrazole, triazole, tetrazole, benzimidazole, benzopyrazole, benzotriazole, imidazoline, imidazolone, imidazolidone, hydantoin, pyrazoline, pyrazolone, pyrazolidone, indazole, pyridoindole, purine, cinnoline, pyrrole, pyrroline, indole, indoline, oxylindole, carbazole, phenothiazine, indolenine, isoindole, oxazole, thiazole, isoxazole, isothiazole, oxadiazole, thiadiazole, oxatriazole, thiatriazole, phenanthroline, oxazine, benzoxazine, phthalazine, pteridine, pyrazine, phenazine, tetrazine, benzoxazole, benzoisoxazole, anthranyl, benzothiazole, benzofurazan, pyridine, quinoline, isoquinoline, acridine, phenanthridine, anthrazoline, naphthyridine, thiazine, pyridazine, pyrimidine, quinazoline, quinoxaline, triazine, histidine, triazolidine, melamine, adenine, guanine, thymine, cytosine, hydroxyethyl isocyanurate, derivatives thereof, and the like. Of these examples, preferred examples of particularly the 5-membered nitrogen-containing rings include the compounds described below (cyclic structures represented by the chemical formulae), triazole derivatives represented by the following general formula (10), and imidazole derivatives represented by the following general formula (11). In addition, these may have the above-described various substituents, and may be subjected to hydrogen addition or elimination.

[Chem. 1]

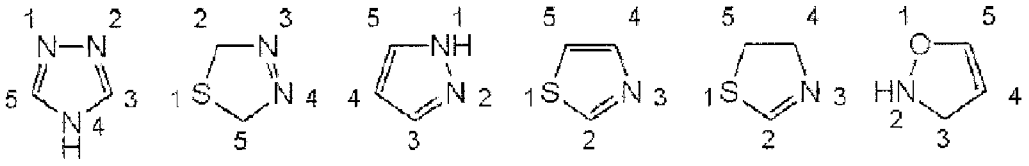

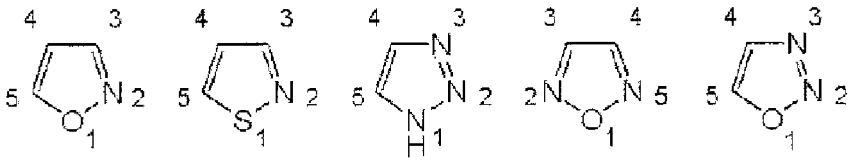

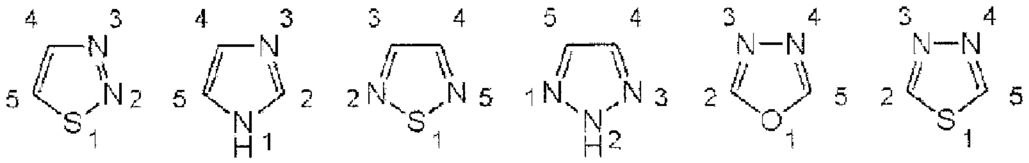

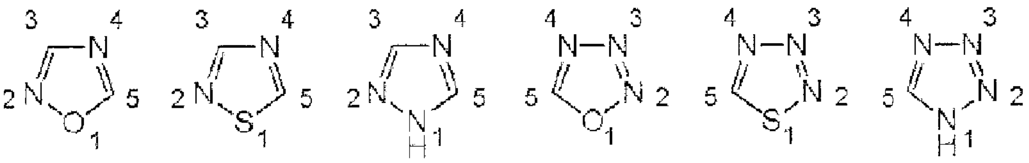

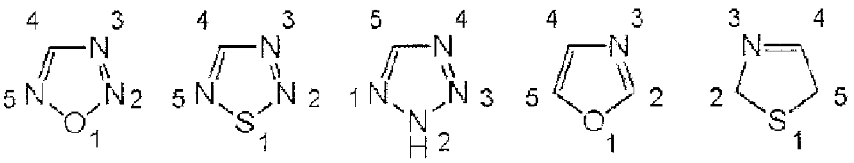

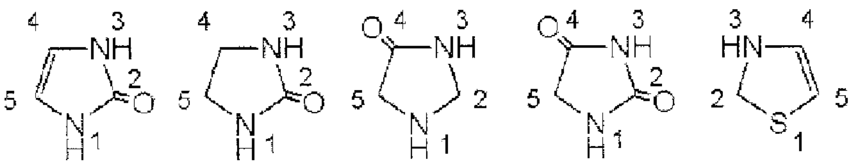

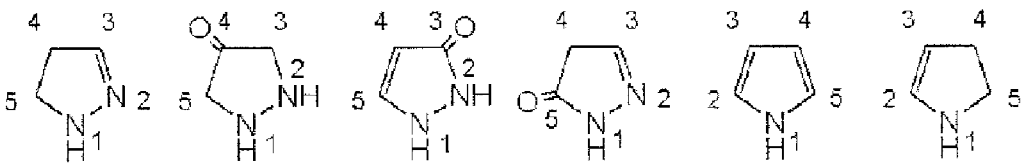

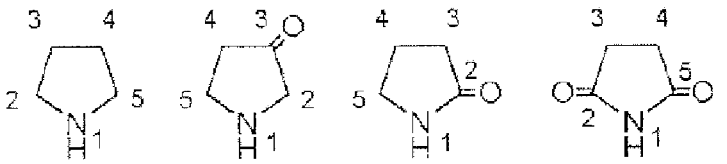

[Chem. 2]

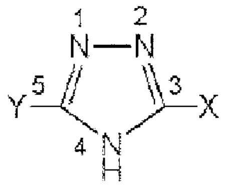

(10)

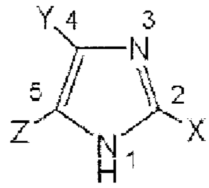

(11)

The substituents X, Y, and Z in the general formulae (10) and (11) are each independently a hydrogen atom, an alkyl group having 1 to 30 carbon atoms, an aralkyl group having 7 to 20 carbon atoms, an aryl group having 6 to 20 carbon atoms, or an amino group. Note that one of X and Y in the above-described general formula (10) is not a hydrogen atom, and similarly at least one of X, Y, and Z in the above-described general formula (11) is not a hydrogen atom.

In addition to a hydrogen atom and an amino group, specific examples of the substituents X, Y, and Z include, linear-chain alkyl groups such as a methyl group, an ethyl group, a propyl group, a butyl group, a pentyl group, an octyl group, a dodecyl group, and a stearyl group; branched alkyl groups such as an isopropyl group, an isobutyl group, a s-butyl group, a t-butyl group, an isopentyl group, a neopentyl group, a t-pentyl group, a 1-methylbutyl group, a 1-methylheptyl group, and a 2-ethylhexyl group; aralkyl groups such as a benzyl group and a phenethyl group; aryl groups such as a phenyl group, tolyl groups (o-, m-, and p-), a dimethylphenyl group, and a mesityl group; and the like.

Of these examples, the substituents X, Y, and Z are each preferably an alkyl group, especially, a butyl group, an octyl group, a dodecyl group, an isopropyl group, or a 2-ethylhexyl group, because the obtained composition for foam of the present invention has good processability.

Meanwhile, preferred examples of the nitrogen-containing 6-membered rings include the compounds described below. These compounds may also have the above-described various substituents (for example, the substituents which may be possessed by the above-described nitrogen-containing heterocycles), or may also be subjected to hydrogen addition or hydrogen elimination.

[Chem. 3]

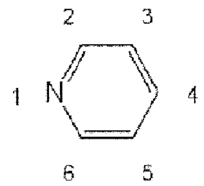

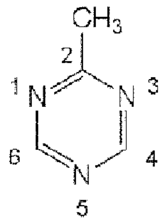

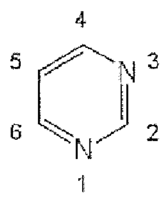

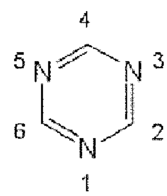

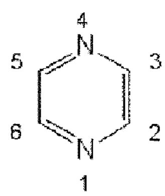

In addition, it is also possible to use condensation products of any one of the above-described nitrogen-containing heterocycles with a benzene ring or condensation products of any ones of the nitrogen-containing heterocycles, and specific preferred examples thereof include condensed rings shown below. These condensed rings may also have the above-described various substituents, and may also be subjected to addition or elimination of hydrogen atoms.

[Chem. 4]

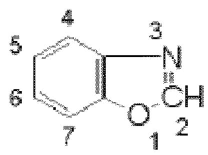 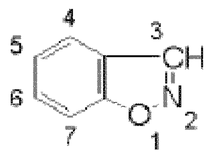 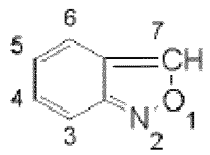 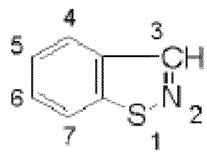

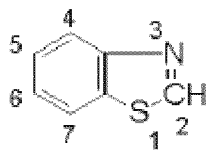 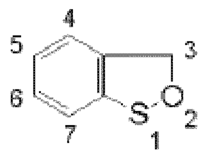 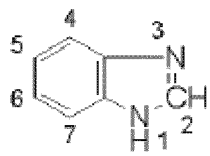 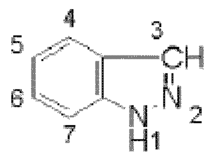

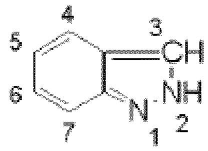 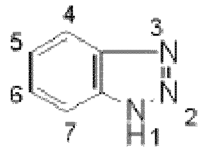 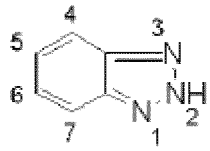 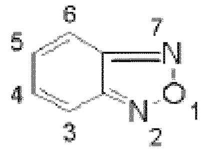

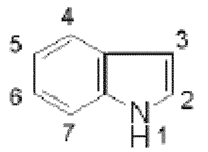 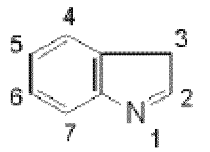 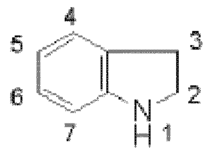 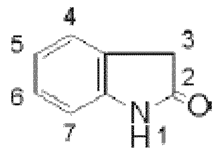

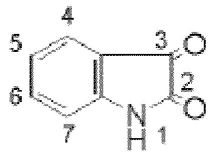 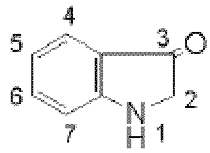 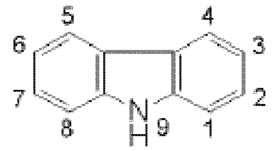

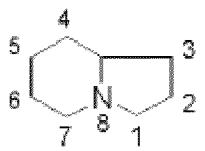 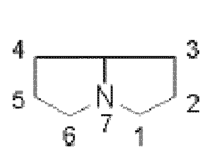 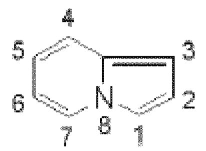 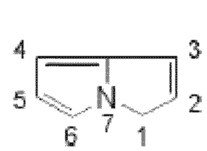

Among others, the nitrogen-containing heterocycle is preferably at least one selected from a triazole ring, an isocyanurate ring, a thiadiazole ring, a pyridine ring, an imidazole ring, a triazine ring, and a hydantoin ring, and is preferably at least one selected from a triazole ring, a thiadiazole ring, a pyridine ring, an imidazole ring, and a hydantoin ring, because the obtained composition for foam of the present invention and the foam formed by using the same are excellent in recyclability, compression set, hardness, and mechanical strengths, especially, tensile strength.

In addition, when the side chain (a) contains both the above-described carbonyl-containing group and the above-described nitrogen-containing heterocycle, the above-described carbonyl-containing group and the above-described nitrogen-containing heterocycle may be introduced to the main chain as side chains independent from each other, and are preferably introduced to the main chain as a single side chain in which the above-described carbonyl-containing group and the above-described nitrogen-containing heterocycle are linked to each other through another group. Accordingly, as the side chain (a), it is preferable that a side chain containing a hydrogen-bond cross-linkable moiety having the above-described carbonyl-containing group and the above-described nitrogen-containing heterocycle be introduced to the main chain as a single side chain, and it is more preferable that a side chain containing a structural portion represented by the following general formula (1):

[Chem. 5]

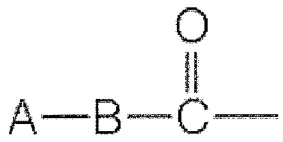

(1)

[in the formula (1), A is a nitrogen-containing heterocycle, and B is a single bond; an oxygen atom, an amino group represented by a formula NR' (R' is a hydrogen atom or an alkyl group having 1 to 10 carbon atoms), or a sulfur atom; or an organic group optionally containing any of the atoms or groups] be introduced to the main chain as a single side chain. Accordingly, the hydrogen-bond cross-linkable moiety of the side chain (a) preferably contains a structural portion represented by the above-described general formula (1).

Here, a specific example of the nitrogen-containing heterocycle A in the above-described formula (1) is any of the nitrogen-containing heterocycles listed above as the examples. In addition, a specific example of the substituent B in the above-described formula (1) is a single bond; an oxygen atom, a sulfur atom, or an amino group represented by the formula NR' (where R' is a hydrogen atom or an alkyl group having 1 to 10 carbon atoms) (hereinafter, an amino group represented by the formula NR' is simply referred to as "amino group NR'" for convenience); an alkylene or aralkylene group having 1 to 20 carbon atoms and optionally containing any of the atoms or groups; an alkylene ether group (an alkyleneoxy group, for example,$-O-CH_2CH_2-$ group), an alkyleneamino group (for example, $-NH-CH_2CH_2-$ group or the like), or an alkylene thioether group (an alkylenethio group, for example, $-S-CH_2CH_2-$ group) having 1 to 20 carbon atoms and having any of the atoms or groups at a terminal; an aralkylene ether group (an aralkyleneoxy group), an aralkyleneamino group, or an aralkylene thioether group having 1 to 20 carbon atoms and having any of them at a terminal; or the like.

Here, examples of the alkyl group having 1 to 10 carbon atoms selectable as R' in the above amino group NR' include a methyl group, an ethyl group, a propyl group, a butyl group, a pentyl group, a hexyl group, a heptyl group, an octyl group, a nonyl group, a decyl group, isomers thereof, and the like. One serving as the substituent B in the above-described formula (1), i.e., any of the oxygen atom, the sulfur atom, and the amino group NR' ; as well as the oxygen atoms, amino groups NR', and sulfur atoms in the alkylene ether group, alkyleneamino group, alkylene thioether group, aralkylene ether group, aralkyleneamino group, aralkylene thioether group having 1 to 20 carbon atoms and having any of the atoms or groups at a terminal, preferably forms a conjugated system, such as an ester group, an amide group, an imide group, or a thioester group, in combination with the adjacent carbonyl group.

Of these examples, the substituent B is preferably an oxygen atom, sulfur atom, or amino group forming a conjugated system; or an alkylene ether group, an alkyleneamino group, or an alkylene thioether group having 1 to 20 carbon atoms, having any of the atoms or groups at a terminal, and forming a conjugated system, and particularly preferably an amino group (NH), an alkyleneamino group ($-NH-CH_2-$group, $-NH-CH_2CH_2-$group, or $-NH-CH_2CH_2CH_2-$group), an alkylene ether group ($-O-CH_2-$group, $-O-CH_2CH_2-$group, or $-O-CH_2CH_2CH_2-$group).

In addition, when the side chain (a) is a side chain containing a hydrogen-bond cross-linkable moiety having the above-described carbonyl-containing group and the above-described nitrogen-containing heterocycle, the hydrogen-bond cross-linkable moiety having the above-described carbonyl-containing group and the above-described nitrogen-containing heterocycle is more preferably a single side chain represented by the following formula (2) or (3), which is introduced to the main chain of the above-described polymer at the $\alpha$ position or $\beta$ position of the side chain.

[Chem. 6]

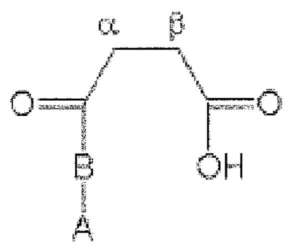

(2)

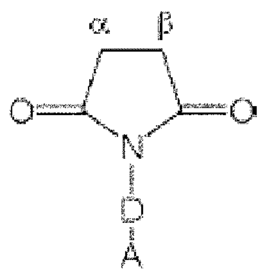

(3)

[In the formula, A is a nitrogen-containing heterocycle, B and D are each independently a single bond; an oxygen atom, an amino group NR' (where R' is a hydrogen atom or an alkyl group having 1 to 10 carbon atoms), or a sulfur atom; or an organic group optionally containing any of the atoms or groups.]

Here, the nitrogen-containing heterocycle A is basically the same as the nitrogen-containing heterocycle A of the above-described formula (1), and the substituents B and D are each independently basically the same as the substituent B in the above-described formula (1). Note that, among the examples listed for the substituent B in the above-described formula (1), the substituent D in the above-described formula (3) is preferably a single bond; an alkylene or aralkylene group having 1 to 20 carbon atoms, optionally containing an oxygen atom, a nitrogen atom, or a sulfur atom, and forming a conjugated system, and is particularly preferably a single bond. Specifically, it is preferable to form an alkyleneamino group or an aralkyleneamino group having 1 to 20 carbon atoms and optionally containing an oxygen atom, a nitrogen atom, or a sulfur atom, together with the imide nitrogen of the above-described formula (3), and it is particularly preferable that the nitrogen-containing heterocycle be directly bonded (through a single bond) to the imide nitrogen of the above-described formula (3). Specific examples of the above-described substituent D include a single bond; the above-described alkylene ether, aralkylene ether group, or the like having 1 to 20 carbon atoms and having an oxygen atom, a sulfur atom, or an amino group at a terminal; a methylene group, an ethylene group, a propylene group, a butylene group, a hexylene group, a phenylene group, and a xylylene group, isomers thereof, and the like.

In addition, when the side chain (a) is a side chain containing a hydrogen-bond cross-linkable moiety having the above-described carbonyl-containing group and the above-described nitrogen-containing heterocycle, the hydrogen-bond cross-linkable moiety of the side chain (a) preferably contains a structural portion represented by the following general formula (101):

[Chem. 7]

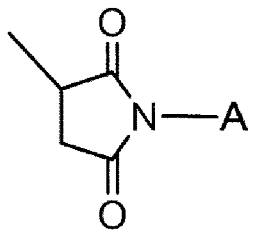

(101)

[in the formula (101), A is a nitrogen-containing heterocycle]. The nitrogen-containing heterocycle A in the formula (101) is basically the same as the nitrogen-containing heterocycle A of the above-described formula (1). In addition, from the viewpoints of high modulus and high strength at break, the hydrogen-bond cross-linkable moiety of the side chain (a) is more preferably one having the structure represented by the following general formula (102):

[Chem. 8]

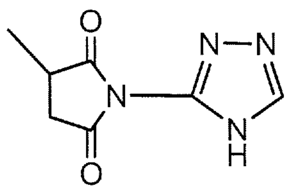

(102)

Moreover, the side chain (a) is particularly preferably a group represented by the above-described general formula (102).

The ratio of the above-described carbonyl-containing group to the above-described nitrogen-containing heterocycle contained in the elastomer component ([the above-described carbonyl-containing group]:[the above-described nitrogen-containing heterocycle]) is preferably in, but not particularly limited to, a range of 1:1 to 3:1 (more preferably 1:1, 2:1, or 3:1), because complementary interaction is more likely to be created, and because such an elastomer component is easy to produce.

The side chain (a) containing a hydrogen-bond cross-linkable moiety having a carbonyl-containing group and/or a nitrogen-containing heterocycle is preferably introduced at a ratio (introduction ratio) of 0.1 to 50% by mole, and more preferably introduced at a ratio of 1 to 30% by mole, relative to 100% by mole of the main chain portion. If the introduction

ratio of the side chain (a) is lower than 0.1% by mole, the tensile strength upon the cross-linking may be insufficient in some cases. Meanwhile, if the introduction ratio exceeds 50% by mole, the cross-linking density increases, so that the rubber elasticity may be lost in some cases. Specifically, it is preferable that the introduction ratio be within the above-described range, because the interaction between side chains of the elastomer component leads to efficient formation of cross-linkages between molecules, so that the tensile strength at cross-linking is high, and the recyclability is excellent.

When a side chain (a-i) containing a hydrogen-bond cross-linkable moiety having the above-described carbonyl-containing group and a side chain (a-ii) containing a hydrogen-bond cross-linkable moiety having the above-described nitrogen-containing heterocycle are each independently introduced as the side chain (a), the above-described introduction ratio is calculated by taking a set of the side chain (a-i) containing a carbonyl-containing group and the side chain (a-ii) containing a nitrogen-containing heterocycle as a single side chain (a) based on the ratio between these side chains. Note that when any one of the side chains (a-i) and (a-ii) is in excess, the above-described introduction ratio can be obtained based on the fewer side chains.

In addition, for example, when the main chain portion is ethylene-propylene rubber (EPM), the above-described introduction ratio is such that the amount of monomers to which the side chain portion is introduced is about 0.1 to 50 units per 100 ethylene and propylene monomer units.

In addition, the side chain (a) is preferably a side chain (a) introduced as a side chain of a polymer by using, as a polymer (elastomeric polymer-forming material) which forms the main chain after reaction, a polymer (an elastomeric polymer having a cyclic acid anhydride group in a side chain) having a cyclic acid anhydride group (more preferably a maleic anhydride group) as a functional group, and reacting the functional group (cyclic acid anhydride group) with a compound (a compound capable of introducing a nitrogen-containing heterocycle) that forms a hydrogen-bond cross-linkable moiety upon a reaction with the cyclic acid anhydride group, to form a hydrogen-bond cross-linkable moiety. The compound capable of introducing a nitrogen-containing heterocycle may be one of the nitrogen-containing heterocycles listed as examples above itself, or may be a nitrogen-containing heterocycle having a substituent (for example, a hydroxy group, a thiol group, an amino group, or the like) that reacts with a cyclic acid anhydride group such as maleic anhydride.

Here, the position at which the nitrogen-containing heterocycle is bonded in the side chain (a) is described. Note that the nitrogen heterocycle is referred to as a "nitrogen-containing n-membered ring compound (n≥3)" for convenience.

The bonding positions ("positions 1 to n") described below are based on the IUPAC nomenclature. For example, in a case of a compound having three nitrogen atoms having unshared electron pairs, the bonding position is determined according to the order based on the IUPAC nomenclature. Specifically, the bonding positions are shown in the 5-membered, 6-membered, and condensed nitrogen-containing heterocycles listed as examples above.

In the side chain (a), the bonding position of the nitrogen-containing n-membered ring compound which is bonded to the copolymer directly or through an organic group is not particularly limited, and may be any bonding position (position 1 to position n). Preferably, the bonding position is position 1 or position 3 to position n of the nitrogen-containing n-membered ring compound.

When the nitrogen-containing n-membered ring compound contains one nitrogen atom (for example, a pyridine ring or the like), position 3 to position (n-1) are preferable, because intramolecular chelate formation easily occurs, and the composition formed therefrom is excellent in physical properties such as tensile strength. By the selection of the bonding position of the nitrogen-containing n-membered ring compound, the elastomeric polymer tends to easily undergo cross-linking among molecules of the elastomeric polymer by hydrogen bonds, ionic bonding, coordinate bonds, or the like, and tends to be excellent in recyclability and excellent in mechanical properties, especially, tensile strength.

<Side Chain (b) : Side Chain Containing Covalent-Bond Cross-Linking Moiety>

In the present description, the "side chain (b) containing a covalent-bond cross-linking moiety" means that a covalent-bond cross-linking moiety (a functional group or the like capable of forming at least one bond selected from the group consisting of amide, ester, lactone, urethane, ether, thiourethane, and thioether upon a reaction with "a compound that forms a covalent bond " such as an amino group-containing compound described later) is chemically stably bonded (covalently bonded) to an atom (generally, a carbon atom) forming the main chain of an elastomeric polymer. Here, the side chain (b) is one containing a covalent-bond cross-linking moiety. Note that when the side chain (b) further has a group capable of forming a hydrogen bond to form a cross-linkage by a hydrogen bond between side chains, while having the covalent-bonding moiety, such a side chain (b) is used as a side chain (c) described later (note that, when both a hydrogen donor and a hydrogen acceptor, which allow the formation of a hydrogen bond between side chains of the elastomer, are not contained, for example, when only a side chain simply containing an ester group (-COO-) is present in the system, such a group does not function as the hydrogen-bond cross-linkable moiety, because two ester groups (-COO-) do not form a hydrogen bond. Meanwhile, for example, when each side chain of the elastomer contains a structure having both a moiety serving as a hydrogen donor and a moiety serving as a hydrogen acceptor in

a hydrogen bond, such as a carboxy group or a triazole ring, a hydrogen bond is formed between the side chains of the elastomer, and hence a hydrogen-bond cross-linkable moiety is considered to be contained. In addition, for example, when an ester group and a hydroxy group are coexistent in side chains of an elastomer, and these groups form a hydrogen bond between the side chains, the moiety forming the hydrogen bond serves as a hydrogen-bond cross-linkable moiety. For this reason, the side chain (b) may be used as the side chain (c) in some cases depending on the structure of the side chain (b) itself, the structure of the side chain (b) and the type of the substituent of another side chain, or the like) . In addition, the "covalent-bond cross-linking moiety" used herein is a moiety which cross-links polymer molecules (elastomer molecules) to each other by a covalent bond.

The side chain (b) containing a covalent-bond cross-linking moiety is not particularly limited, and is preferably, for example, one containing a covalent-bond cross-linking moiety formed by a reaction of an elastomeric polymer having a functional group in a side chain (the polymer for forming a main chain portion) with a compound that forms a covalent-bond cross-linking moiety upon a reaction with the functional group (a compound that forms a covalent bond). The cross-linkage at the covalent-bond cross-linking moiety of the side chain (b) is preferably formed by at least one bond selected from the group consisting of amide, ester, lactone, urethane, ether, thiourethane, and thioether. For this reason, the functional group of the polymer constituting the main chain is preferably a functional group capable of forming at least one bond selected from the group consisting of amide, ester, lactone, urethane, ether, thiourethane, and thioether.

Examples of the "compound that forms a covalent-bond cross-linking moiety (the compound that forms a covalent bond) " include polyamine compounds having two or more amino and/or imino groups in one molecule (when both amino and imino groups are present, the total number of these groups is two or more) ; polyol compounds having two or more hydroxy groups in one molecule; polyisocyanate compounds having two or more isocyanate (NCO) groups in one molecule; polythiol compounds having two or more thiol groups (mercapto groups) in one molecule; and the like. The "compound that forms a covalent-bond cross-linking moiety (the compound that forms a covalent bond)" herein can be a compound capable of introducing both the hydrogen-bond cross-linkable moiety and the covalent-bond cross-linking moiety depending on the type of the substituent contained in the compound, the degree of the progress of a reaction in a case where the reaction is carried out by using such compound, or the like (for example, when a covalent bond cross-linking moiety is formed by using a compound having three or more hydroxy groups, two of the hydroxy groups react with a functional group of an elastomeric polymer having the functional group in side chains, and the remaining one hydroxy group is left as a hydroxy group in some cases depending on the degree of the progress of the reaction, and in this case, a moiety that can form a hydrogen-bond cross-linking can also be introduced). For this reason, "compounds that each form a covalent-bond cross-linking moiety (compounds that each forms a covalent bond)" listed as examples herein also include "compounds that each form both a hydrogen-bond cross-linkable moiety and a covalent-bond cross-linking moiety." From such a viewpoint, in the case of forming the side chain (b), the side chain (b) may be formed by selecting a compound from the "compounds that each form a covalent-bond cross-linking moiety (compounds that each form a covalent bond) " according to a target design, as appropriate, controlling the degree of the progress of the reaction, as appropriate, or doing the like. Note that when the compound that forms a covalent-bond cross-linking moiety has a heterocycle, it is possible to also simultaneously produce a hydrogen-bond cross-linkable moiety more efficiently, and it is possible to efficiently form a side chain having a covalent-bond cross-linking moiety as the side chain (c) described later. For this reason, specific examples of such compounds each having a heterocycle are described especially together with the side chain (c) as preferred compounds for producing the side chain (c). Note that because of its structure, the side chain (c) can also be regarded as a preferred mode of side chains such as the side chain (a) and the side chain (b) .

Examples of the polyamine compound usable as the "compound that forms a covalent-bond cross-linking moiety (the compound that forms a covalent bond) " include alicyclic amines, aliphatic polyamines, aromatic polyamines, nitrogen-containing heterocyclic amines, and the like shown below.

Specific examples of the alicyclic amines include 1-amino-3-aminomethyl-3,5,5-trimethylcyclohexane, bis-(4-aminocyclohexyl)methane, diaminocyclohexane, di-(aminomethyl)cyclohexane, and the like.

In addition, examples of the aliphatic polyamines include, but are not particularly limited to, methylenediamine, ethylenediamine, propylenediamine, 1,2-diaminopropane, 1,3-diaminopentane, hexamethylenediamine, diaminoheptane, diaminododecane, diethylenetriamine, diethylaminopropylamine, N-aminoethylpiperazine, triethylenetetramine, N,N'-dimethylethylenediamine, N,N'-diethylethylenediamine, N,N'-diisopropylethylenediamine, N,N'-dimethyl-1,3-propanediamine, N,N'-diethyl-1,3-propanediamine, N,N'-diisopropyl-1,3-propanediamine, N,N'-dimethyl-1,6-hexanediamine, N,N'-diethyl-1,6-hexanediamine, N,N',N''-trimethylbis(hexamethylene)triamine, and the like.

Examples of the aromatic polyamines and the nitrogen-containing heterocyclic amines include, but are not particularly limited to, diaminotoluene, diaminoxylene, tetramethylxylylenediamine, tris(dimethylaminomethyl)phenol, m-phenylenediamine, diaminodiphenylmethane, diaminodiphenyl sulfone, 3-amino-1,2,4-triazole, and the like.

In addition, one or more hydrogen atoms in each of the polyamine compounds may be substituted by an alkyl group, an alkylene group, an aralkylene group, an oxy group, an acyl group, a halogen atom, or the like, or the skeleton of each polyamine compound may contain a heteroatom such as an oxygen atom or a sulfur atom.

In addition, one of the polyamine compounds may be used alone, or two or more thereof may be used in combination. When two or more thereof are used in combination, the mixing ratio can be adjusted to any ratio according to an application for which the composition for foam of the present invention and a foam obtained by using the same are used, or physical properties required for the composition for foam and the foam of the present invention, and the like .

Among the polyamine compounds listed as examples above, hexamethylenediamine, N,N'-dimethyl-1,6-hexanediamine, diaminodiphenyl sulfone, and the like are preferable, because they provide high effects of improvement in compression set and mechanical strengths, especially, tensile strength.

The molecular weights or skeletons of the polyol compounds are not particularly limited, as long as the polyol compounds have two or more hydroxy groups. Examples of the polyol compounds include polyether polyols, polyester polyols, and other polyols shown below, mixed polyols thereof, and the like.

Specific examples of the polyether polyols include polyols each obtained by addition of at least one selected from ethylene oxide, propylene oxide, butylene oxide, and styrene oxide to at least one selected from polyols such as ethylene glycol, diethylene glycol, propylene glycol, dipropylene glycol, glycerin, 1,1,1-trimethylolpropane, 1,2,5-hexanetriol, 1,3-butanediol, 1,4-butanediol, 4,4'-dihydroxyphenylpropane, 4,4'-dihydroxyphenylmethane, and pentaerythritol; polyoxytetramethylene oxide; and the like. One of these polyether polyols may be used alone, or two or more thereof may be used in combination.

Specific examples of the polyester polyols include condensation polymers of one, two, or more low-molecular weight polyols such as ethylene glycol, propylene glycol, butanediol, pentanediol, hexanediol, cyclohexanedimethanol, glycerin, 1,1,1-trimethylolpropane, and others with one, two, or more low-molecular weight carboxylic acids or oligomeric acids such as glutaric acid, adipic acid, pimelic acid, suberic acid, sebacic acid, terephthalic acid, isophthalic acid, dimer acids, and others; ring-opening polymers of propiolactone, valerolactone, and the like; and the like. One of these polyester polyols may be used alone, or two or more thereof may be used in combination.

Specific examples of the other polyols include polymer polyols, polycarbonate polyols; polybutadiene polyols; hydrogenated polybutadiene polyols; acrylic polyols; low-molecular weight polyols such as ethylene glycol, diethylene glycol, propylene glycol, dipropylene glycol, butanediol, pentanediol, hexanediol, polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), and polypropylene glycol stearylamine (for example, N,N-bis(2-methyl-2-hydroxyethyl)stearylamine); and the like. One of these polyols may be used alone, or two or more thereof may be used in combination.

Examples of the polyisocyanate compounds include diisocyanate compounds including aromatic polyisocyanates such as 2,4-tolylene diisocyanate (2,4-TDI), 2,6-tolylene diisocyanate (2,6-TDI), 4,4'-diphenylmethane diisocyanate (4,4'-MDI), 2,4'-diphenylmethane diisocyanate (2,4'-MDI), 1,4-phenylene diisocyanate, xylylene diisocyanate (XDI), tetramethylxylylene diisocyanate (TMXDI), tolidine diisocyanate (TODI), and 1,5-naphthalene diisocyanate (NDI), aliphatic polyisocyanates such as hexamethylene diisocyanate (HDI), trimethylhexamethylene diisocyanate (TMHDI), lysine diisocyanate, and norbornane diisocyanatomethyl (NBDI), alicyclic polyisocyanates such as trans-cyclohexane-1,4-diisocyanate, isophorone diisocyanate (IPDI), $H_6XDI$ (hydrogenated XDI), $H_{12}MDI$ (hydrogenated MDI), and $H_6TDI$ (hydrogenated TDI), and the like; polyisocyanate compounds such as polymethylene polyphenylene polyisocyanate; carbodiimide-modified polyisocyanates of these isocyanate compounds; isocyanurate-modified polyisocyanate of these isocyanate compounds; urethane prepolymers obtained by reactions of these isocyanate compounds with the polyol compounds listed as examples above; and the like. One of these polyisocyanate compounds may be used alone, or two or more thereof may be used in combination.

The molecular weight, the skeleton, or the like of each of the polythiol compounds is not particularly limited, as long as the polythiol compounds have two or more thiol groups. Specific examples of the polythiol compounds include methanedithiol, 1,3-butanedithiol, 1,4-butanedithiol, 2,3-butanedithiol, 1,2-benzenedithiol, 1,3-benzenedithiol, 1,4-benzenedithiol, 1,10-decanedithiol, 1,2-ethanedithiol, 1,6-hexanedithiol, 1,9-nonanedithiol, 1,8-octanedithiol, 1,5-pentanedithiol, 1,2-propanedithiol, 1,3-propadithiol, toluene-3,4-dithiol, 3,6-dichloro-1,2-benzenedithiol, 1,5-naphthalenedithiol, 1,2-benzenedimethanethiol, 1,3-benzenedimethanethiol, 1,4-benzenedimethanethiol, 4,4'-thiobisbenzenethiol, 2,5-dimercapto-1,3,4-thiadiazole, 1,8-dimercapto-3,6-dioxaoctane, 1,5-dimercapto-3-thiapentane, 1,3,5-triazine-2,4,6-trithiol (trimercapto-triazine), 2-di-n-butylamino-4,6-dimercapto-s-triazine, trimethylolpropane tris(β-thiopropionate), trimethylolpropane tris(thioglycollate), polythiols (THIOKOL or thiol-modified polymers (resins, rubbers, and the like)), and the like. One of these polythiol compounds may be used alone, or two or more thereof may be used in combination.

A functional group which is contained in the polymer constituting the main chain, and which reacts with the "compound that forms a covalent-bond cross-linking moiety (compound that forms a covalent bond)" is preferably a functional group which can create (generate: form) at least one bond selected from the group consisting of amide, ester, lactone, urethane, thiourethane, and thioether. Preferred examples of such functional group include cyclic acid anhydride groups, hydroxy groups, amino groups, carboxy groups, isocyanate groups, thiol groups, and the like.

Note that the elastomeric polymer (B) having the side chain (b) has, in a portion of the side chain (b), at least one cross-linkage at the covalent-bond cross-linking moiety, specifically, at least one cross-linkage by a covalent bond formed by a reaction of the functional group with the above-described "compound that forms a covalent-bond cross-linking moiety (compound that forms a covalent bond)" in one molecule. Particularly when the cross-linking is formed by at least one bond selected from the group consisting of lactone, urethane, ether, thiourethane, and thioether, the elastomeric polymer (B) preferably has two or more cross-linkages, more preferably 2 to 20 cross-linkages, and further preferably 2 to 10 cross-linkages.

In addition, the cross-linkage at the covalent-bond cross-linking moiety of the side chain (b) preferably contains a tertiary amino bond (-N=) or an ester bond (-COO-), because the compression set and the mechanical strengths (elongation at break and strength at break) of the composition for foam of the present invention and the foam obtained by using the same can be improved more easily. Note that, in this case, when an elastomer having a side chain containing a group capable of forming a hydrogen bond with the tertiary amino bond (-N=) or the ester bond (-COO-) is contained (for example, in a case where another elastomer having a side chain containing a hydroxy group or the like is present, or other cases), the covalent-bond cross-linking moiety can function as a side chain (c) described later. For example, in a case of an elastomeric polymer (B) having the side chain (a) as the side chain (a') (i.e., in a case where the elastomeric polymer (B) is an elastomeric polymer having both the side chains (a) and (b)), when the cross-linkage at the covalent-bond cross-linking moiety has the tertiary amino bond and/or the ester bond, these groups and groups in the side chain (a) (side chain having a carbonyl-containing group and/or a nitrogen-containing heterocycle) presumably form hydrogen bonds (interact with each other), making it possible to further improve the cross-linking density. Note that from the viewpoint of forming the side chain (b) having a structure containing a tertiary amino bond (-N=) or an ester bond (-COO-), the "compound that forms a covalent-bond cross-linking moiety (compound that forms a covalent bond) " is preferably polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), or polypropylene glycol stearylamine (for example, N,N-bis(2-methyl-2-hydroxyethyl)stearylamine), among those listed as examples above.

Note that even when the above-described compound that forms a covalent-bond cross-linking moiety (compound that forms a covalent bond) is used, a hydrogen-bond cross-linkable moiety is also introduced in some cases, depending on the degree of the progress of the reaction, the type of substituent, the stoichiometric ratio of the raw materials used, and the like. Hence, preferred structures of the covalent-bond cross-linking moiety are described together with preferred structures of a covalent-bond cross-linking moiety in the side chain (c).

<Side Chain (c): Side Chain Containing Both Hydrogen-bond cross-linkable moiety and Covalent-Bond Cross-Linking Moiety>

The side chain (c) contains both a hydrogen-bond cross-linkable moiety and a covalent-bond cross-linking moiety in a single side chain. The hydrogen-bond cross-linkable moiety contained in the side chain (c) is the same as the hydrogen-bond cross-linkable moiety described for the side chain (a'), and preferred ones thereof are the same as those for the hydrogen-bond cross-linkable moiety in the side chain (a). In addition, as the covalent-bond cross-linking moiety contained in the side chain (c), the same covalent-bond cross-linking moiety as that in the side chain (b) can be used (the same cross-linkages can be used as preferred cross-linkage thereof).

The side chain (c) is preferably one formed by a reaction of an elastomeric polymer having a functional group in a side chain (the polymer for forming a main chain portion) with a compound that forms both a hydrogen-bond cross-linkable moiety and a covalent-bond cross-linking moiety upon a reaction with the functional group (a compound that introduces both a hydrogen-bond cross-linkable moiety and a covalent-bond cross-linking moiety).

The compound that forms both a hydrogen-bond cross-linkable moiety and a covalent-bond cross-linking moiety (compound that introduces both a hydrogen-bond cross-linkable moiety and a covalent-bond cross-linking moiety) is preferably a compound that has a heterocycle (particularly preferably a nitrogen-containing heterocycle) and is capable of forming a covalent-bond cross-linking moiety (a compound that forms a covalent bond), and, especially, the compound is more preferably a heterocycle-containing polyol, a heterocycle-containing polyamine, a heterocycle-containing polythiol, or the like.

Note that, as the heterocycle-containing polyols, polyamines, and polythiols, it is possible to use, as appropriate, the same polyols, polyamines, and polythiols described for the above-described "compound capable of forming a covalent-bond cross-linking moiety (compound that forms a covalent bond)," except that a heterocycle (particularly preferably a nitrogen-containing heterocycle) is present. In addition, examples of the heterocycle-containing polyols include, but are not particularly limited to, bis or tris(2-hydroxyethyl)isocyanurate, Kojic acid, dihydroxydithiane, and tris(hydroxyethyl)triazine. Meanwhile, examples of the heterocycle-containing polyamines include, but are not particularly limited to, acetoguanamine, piperazine, bis(aminopropyl)piperazine, benzoguanamine, and melamine. Moreover, examples of the

heterocycle-containing polythiols include dimercaptothiadiazole, and tris-[(3-mercaptopropionyloxy)-ethyl] isocyanurate. Accordingly, the side chain (c) is preferably one obtained by a reaction of an elastomeric polymer having a functional group in a side chain (the polymer for forming a main chain portion) with a heterocyclic-containing polyol, polyamine, or polythiol, or the like.

Note that the functional group of the polymer constituting a main chain that reacts with the "compound that forms both a hydrogen-bond cross-linkable moiety and a covalent-bond cross-linking moiety (the compound that introduces both a hydrogen-bond cross-linkable moiety and a covalent-bond cross-linking moiety)" is preferably a functional group capable of forming at least one bond selected from the group consisting of amide, ester, lactone, urethane, thiourethane, and thioether. Preferred examples of such a functional group include a cyclic acid anhydride group, a hydroxy group, an amino group, a carboxy group, an isocyanate group, a thiol group, and the like.

In addition, the elastomeric polymer (B) having the side chain (c) has at least one cross-linkage at the covalent-bond cross-linking moiety in a portion of the side chain (c) in one molecule. Especially when the cross-linking is formed by at least one bond selected from the group consisting of lactone, urethane, ether, thiourethane, and thioether, the elastomeric polymer (B) has preferably two or more cross-linkages, more preferably 2 to 20 cross-linkages, and further preferably 2 to 10 cross-linkages. In addition, it is preferable that the cross-linkage at the covalent-bond cross-linking moiety of the side chain (c) contain a tertiary amino bond (-N=) or an ester bond (-COO-), because the compression set and the mechanical strengths (elongation at break and tensile strength at break) of the obtained composition for foam and the foam formed by using the same are further improved. (Regarding Structures Preferred as Covalent-Bond Cross-Linking Moieties in Side Chains (b) and (c))

Regarding the side chains (b) and/or (c), suppose a case where the cross-linkage at the covalent-bond cross-linking moiety contains a tertiary amino bond (-N=) or an ester bond (-COO-), and the binding site of such a bond also functions as a hydrogen-bond cross-linkable moiety. Such a case is preferable because the compression set and the mechanical strengths (elongation at break and strength at break) of the composition for foam of the present invention and the foam obtained by using the same are improved to higher levels. When a tertiary amino bond (-N=) or an ester bond (-COO-) in a side chain having a covalent-bond cross-linking moiety forms a hydrogen bond with another side chain as described above, the covalent-bond cross-linking moiety containing a tertiary amino bond (-N=) or an ester bond (-COO-) also comprises a hydrogen-bond cross-linkable moiety, and can function as the side chain (c).

Suppose, for example, a case where the elastomeric polymer (B) has the side chain (a) as the side chain (a'), and has a covalent-bond cross-linking moiety containing the tertiary amino bond and/or the ester bond. In such a case, when the tertiary amino bond and/or the ester bond forms a hydrogen bond (interacts) with a group in the side chain (a), the cross-linking density can be further improved, presumably. Here, preferred examples of the compound that can form a covalent-bond cross-linking moiety containing the tertiary amino bond and/or the ester bond upon a reaction with a functional group of the polymer constituting a main chain (compound capable of forming both a hydrogen-bond cross-linkable moiety and a covalent-bond cross-linking moiety) include polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), and polypropylene glycol stearylamine (for example, N,N-bis(2-methyl-2-hydroxyethyl)stearylamine).

The above-described cross-linkage at the covalent-bond cross-linking moiety in the side chain (b) and/or the side chain (c) is preferably one containing at least one structure represented by any one of the following general formulae (4) to (6), and is more preferably one in which G in the formulae contains a tertiary amino bond or an ester bond (note that when a structure shown below contains a hydrogen-bond cross-linkable moiety, the side chain having the structure is used as a side chain (c)).

[Chem. 9]

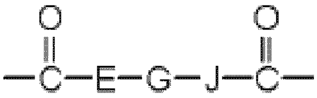 (4)

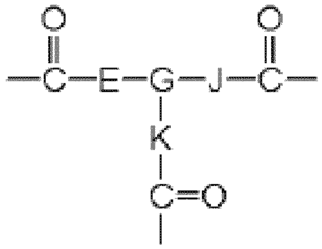 (5) 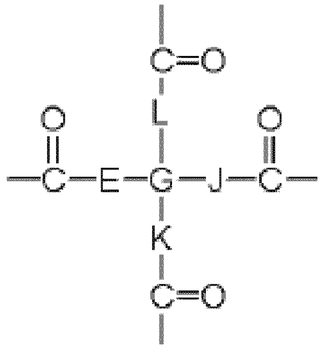 (6)

In the above-described general formulae (4) to (6), E, J, K, and L are each independently a single bond; an oxygen atom, an amino group NR' (where R' is a hydrogen atom or an alkyl group having 1 to 10 carbon atoms), or a sulfur atom; or an organic group optionally containing any of the atoms or groups, and G is a linear-chain, branched-chain, or cyclic hydrocarbon group having 1 to 20 carbon atoms and optionally containing an oxygen atom, a sulfur atom, or a nitrogen atom.

Here, the substituents E, J, K, and L are each independently basically the same as the substituent B in the above-described general formula (1).

In addition, examples of the substituent G include alkylene groups such as a methylene group, an ethylene group, a 1,3-propylene group, a 1,4-butylene group, a 1,5-pentylene group, a 1,6-hexylene group, a 1,7-heptylene group, a 1,8-octylene group, a 1,9-nonylene group, a 1,10-decylene group, a 1,11-undecylene group, and a 1,12-dodecylene group; N,N-diethyldodecylamine-2,2'-diyl, N,N-dipropyldodecylamine-2,2'-diyl, N,N-diethyloctylamine-2,2'-diyl, N,N-dipropyloctylamine-2,2'-diyl, N,N-diethylstearylamine-2,2'-diyl, and N,N-dipropylstearylamine-2,2'-diyl; a vinylene group; divalent alicyclic hydrocarbon groups such as a 1,4-cyclohexlene group; divalent aromatic hydrocarbon groups such as a 1,4-phenylene group, a 1,2-phenylene group, a 1,3-phenylene group, and a 1,3-phenylenebis(methylene) group; trivalent hydrocarbon groups such as propane-1,2,3-triyl, butane-1,3,4-triyl, trimethylamine-1,1',1''-triyl, and triethylamine-2,2',2''-triyl; trivalent cyclic hydrocarbons containing an oxygen atom, a sulfur atom, or a nitrogen atom such as an isocyanurate group and a triazine group; tetravalent hydrocarbon groups represented by the following formulae (12) and (13); substituents formed by combining any ones of them; and the like. In addition, the substituents G in these formulae each preferably have a structure of an isocyanurate group (isocyanurate ring) from the viewpoints of achieving high heat resistance and high strength thanks to hydrogen bonds. More specifically, the substituents G in these formulas are preferably groups represented by the following general formula (111) and groups represented by the following general formula (112) from the viewpoints of achieving high heat resistance and high strength thanks to hydrogen bonds.

[Chem. 10]

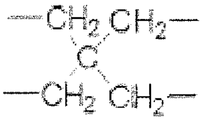

(12)

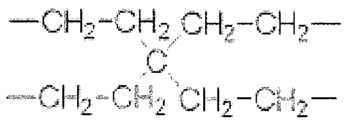

(13)

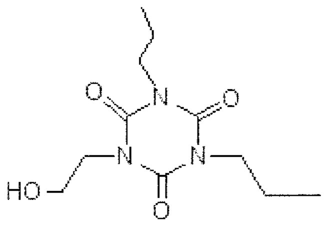

(111)

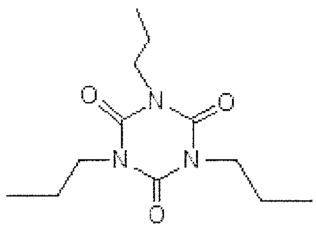

(112)

Moreover, the above-described cross-linkage at the covalent-bond cross-linking moiety of the side chain (c) preferably contains at least one structure represented by any one of the following formulae (7) to (9), which is bonded to the main chain of the above-described elastomeric polymer at the α position or the β position, and more preferably contains at least one structure represented by any one of the following formulae (7) to (9), in which G contains a tertiary amino group (the structures shown in the formulae (7) to (9) contain hydroxy groups and carbonyl groups, and can be considered as structures containing both a hydrogen-bond cross-linkable moiety and a covalent-bond cross-linking moiety, and a side chain having such a structure can function as the side chain (c)).

[Chem. 11]

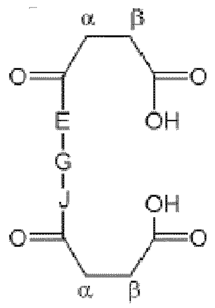

(7)

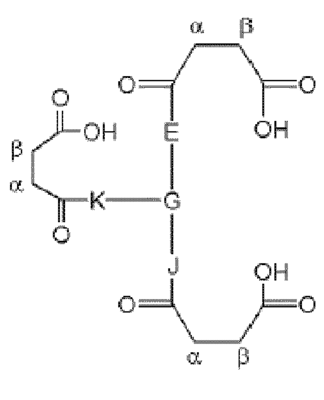

(8)

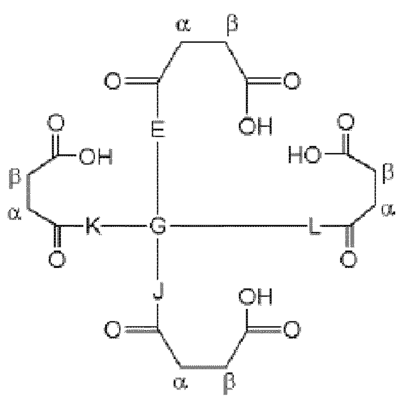

(9)

In the formulae (7) to (9), the substituents E, J, K, and L are each independently basically the same as the substituents E, J, K, and L in the above-described formulae (4) to (6), and the substituent G is basically the same as the substituent G in the above-described formula (4).

In addition, specific preferred examples of the structure represented by any one of the formulae (7) to (9) include structures represented by the following formula (14) to (25):

[Chem. 12]

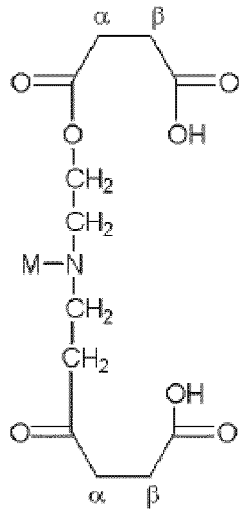

$M=C_8H_{17}, C_{12}H_{25}, C_{18}H_{37}$

(14)

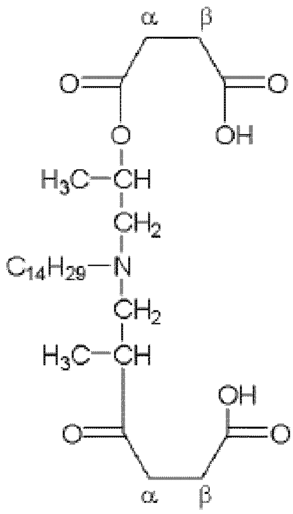

(15)

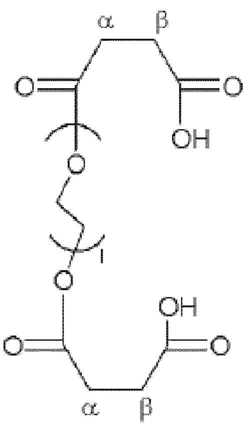

(16)

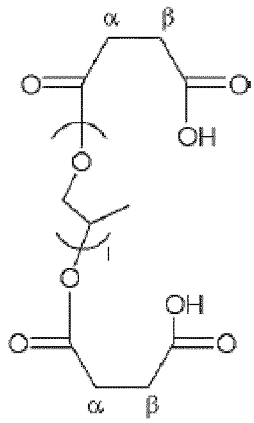

(17)

(In the formulae, 1 represents an integer of 1 or greater.)

[Chem. 13]

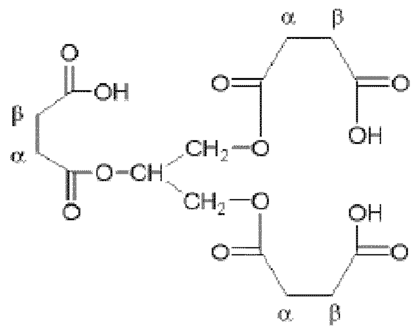

(18)

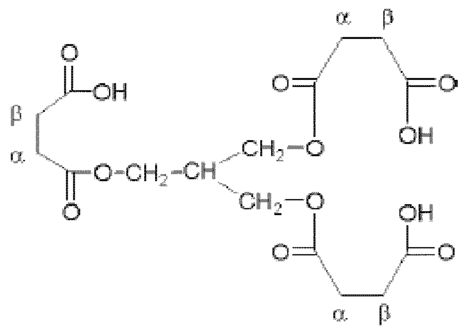

(19)

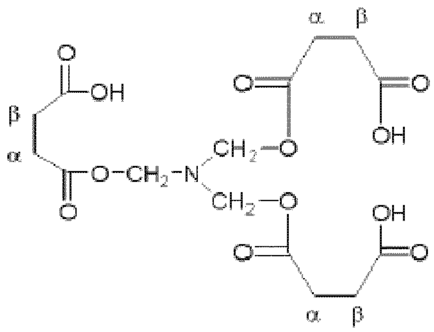

(20)

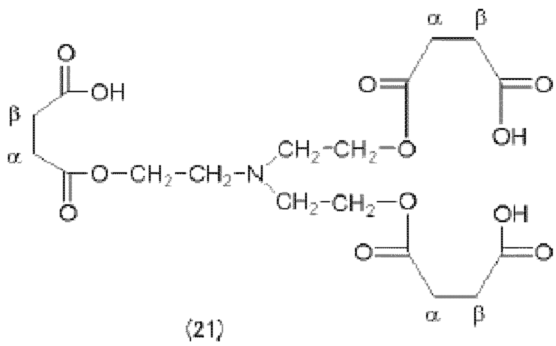

(21)

[Chem. 14]

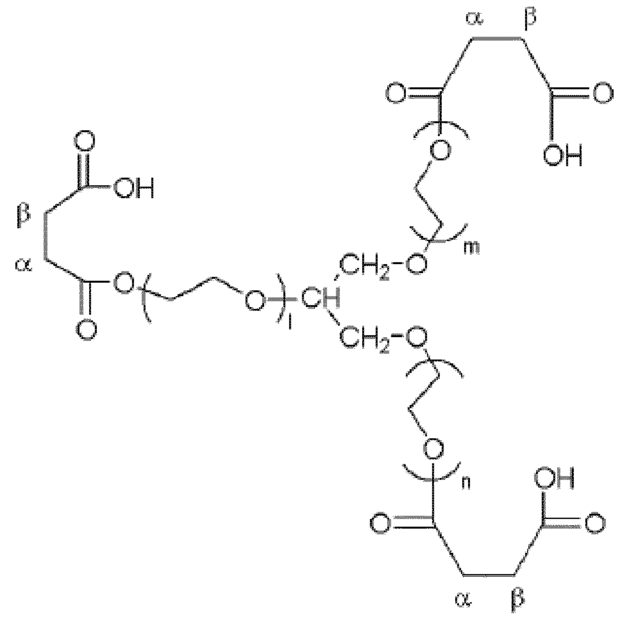

(22)

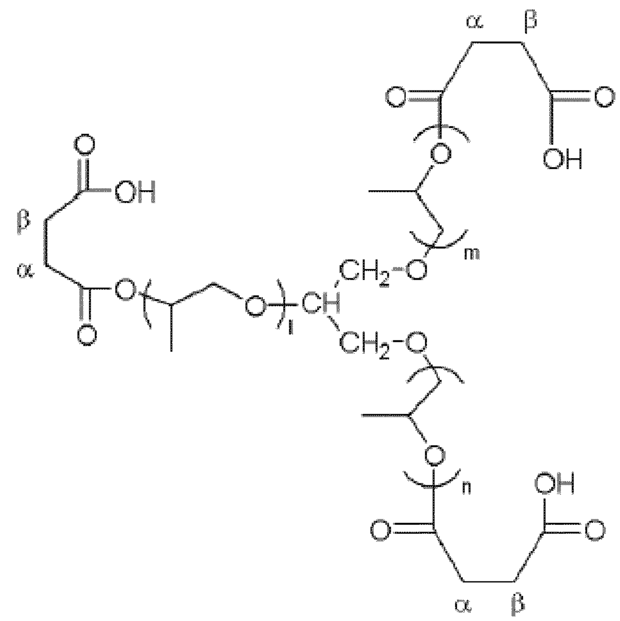

(23)

(In the formulae, l, m, and n each independently represent an integer of 1 or greater.)

[Chem. 15]

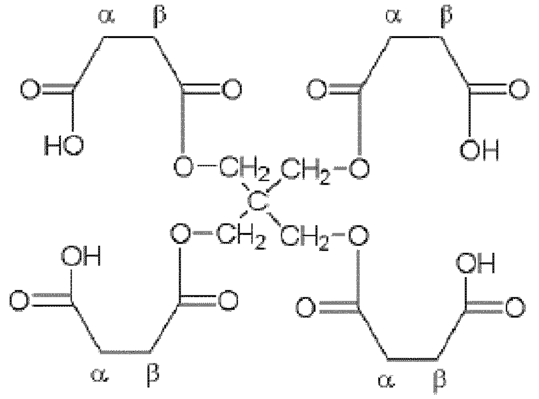

(24)

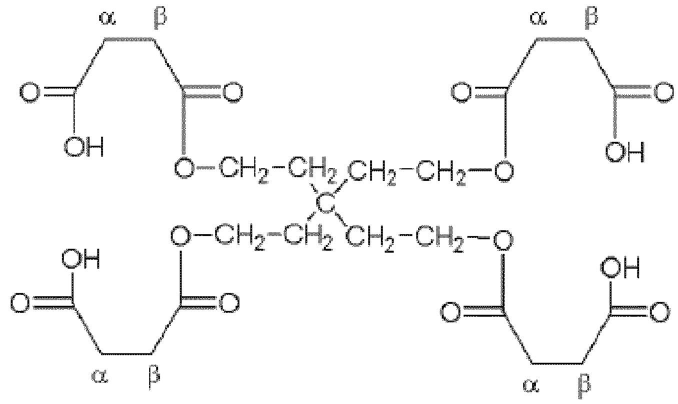

(25)

In addition, a cross-linkage at the above-described covalent-bond cross-linking moiety in each of the side chains (b) and (c) is preferably formed by a reaction of a cyclic acid anhydride group with a hydroxy group or an amino group and/or an imino group. For example, when a polymer forming a main chain portion after the reaction has a cyclic acid anhydride group (for example, a maleic anhydride group) as a functional group, the cross-linkage may be formed by a reaction of the cyclic acid anhydride group of the polymer with the compound that forms a covalent-bond cross-linking moiety having a hydroxy group or an amino group and/or an imino group (compound that forms a covalent bond), to form a moiety cross-linked by the covalent bond, thereby cross-linking polymer molecules.

The cross-linkage at the covalent-bond cross-linking moiety of each of the side chains (b) and (c) is more preferably formed by at least one bond selected from the group consisting of amide, ester, lactone, urethane, ether, thiourethane, and thioether.

Hereinabove, the side chain (a'), the side chain (a), the side chain (b), and the side chain (c) are described. The groups (structures) and the like of the side chains in the polymers can be identified by ordinarily used analytic techniques such as NMR and IR spectrometry.

In addition, the elastomeric polymer (A) is an elastomeric polymer having the side chain (a) and having a glass-transition point of 25°C or below, whereas the elastomeric polymer (B) is an elastomeric polymer containing a hydrogen-bond cross-linkable moiety and a covalent-bond cross-linking moiety in a side chain and having a glass-transition point of 25°C or below (a polymer having both the side chain (a') and the side chain (b) as side chains, or a polymer containing at least one side chain (c) in a side chain, or the like). As the elastomer component, one of the elastomeric polymers (A) and (B) may be used alone, or a mixture of two or more thereof may be used.

Note that the elastomeric polymer (B) may be either a polymer having both a side chain (a') and a side chain (b), or a polymer having a side chain (c). From the viewpoint that a stronger hydrogen bond is formed, the hydrogen-bond cross-linkable moiety contained in the side chain of the elastomeric polymer (B) is preferably a hydrogen-bond cross-linkable moiety having a carbonyl-containing group and/or a nitrogen-containing heterocycle (more preferably a hydrogen-bond cross-linkable moiety having a carbonyl-containing group and a nitrogen-containing heterocycle).

In addition, from the viewpoints, for example, that monomers can be easily obtained industrially, the high reactivity of the monomers enables a reaction to proceed quantitatively, and furthermore the obtained elastomer can have higher levels of mechanical physical properties (such as tensile physical properties and compression set, the at

least one elastomer component selected from the group consisting of the elastomeric polymers (A) and (B) is preferably at least one selected from the group consisting of reaction products of a maleic anhydride-modified elastomeric polymer with at least one compound (hereinafter, simply referred to as "compound (X) " in some cases) selected from triazoles optionally having at least one substituent selected from hydroxy groups, thiol groups, and amino groups, pyridines optionally having at least one substituent selected from hydroxy groups, thiol groups, and amino groups, thiadiazoles optionally having at least one substituent selected from hydroxy groups, thiol groups, and amino groups, imidazoles optionally having at least one substituent selected from hydroxy groups, thiol groups, and amino groups, isocyanurates optionally having at least one substituent selected from hydroxy groups, thiol groups, and amino groups, triazines optionally having at least one substituent selected from hydroxy groups, thiol groups, and amino groups, hydantoins optionally having at least one substituent selected from hydroxy groups, thiol groups, and amino groups, tris(hydroxyethyl) isocyanurates, sulfamides, and polyether polyols. Thus, the elastomeric polymer (A) and/or (B) is preferably a reaction product of the maleic anhydride-modified elastomeric polymer with the compound (X) .

A method for producing such an elastomeric polymer (A) or (B) is not particularly limited, and a known method can be employed, as appropriate, by which at least one selected from the group consisting of the side chain (a); the side chain (a') with the side chain (b); and the side chain (c) as described above can be introduced as a side chain of an elastomeric polymer having a glass-transition point of 25°C or below. For example, as the method for producing the elastomeric polymer (B), it is also possible to employ a method described in Japanese Unexamined Patent Application Publication No. 2006-131663. In addition, to obtain the elastomeric polymer (B) comprising the side chain (a') and the side chain (b) as described above, for example, these side chains may be simultaneously introduced to an elastomeric polymer having a cyclic acid anhydride group (for example, a maleic anhydride group) serving as a functional group in a side chain by using a mixture (mixed raw material) of a compound that forms a covalent-bond cross-linking moiety upon a reaction with the cyclic acid anhydride group (a compound that forms a covalent bond) and a compound that forms a hydrogen-bond cross-linkable moiety upon a reaction with the cyclic acid anhydride group (a compound capable of introducing a nitrogen-containing heterocycle).

In addition, as a method for producing the elastomeric polymers (A) and (B), it is possible to employ, for example, a method in which an elastomeric polymer having a functional group (for example, a cyclic acid anhydride group or the like) in a side chain (a preferable example is a maleic anhydride-modified elastomeric polymer) is used, and the elastomeric polymer is reacted with at least one raw material compound (a preferable example is the compound (X)) of a compound that forms a hydrogen-bond cross-linkable moiety upon a reaction with the functional group, and a mixed raw material of a compound that forms a hydrogen-bond cross-linkable moiety upon a reaction with the functional group and a compound that forms a covalent-bond cross-linking moiety upon a reaction with the functional group, to produce an elastomeric polymer having the side chain (a) ; an elastomeric polymer having the side chain (a') and the side chain (b) ; and/or an elastomeric polymer having the side chain (c) (the elastomeric polymers (A) and (B)). Note that conditions (temperature condition, atmosphere condition, and the like) employed for the reaction are not particularly limited, but may be set as appropriate according to the types of the functional group and the compound to be reacted with the functional group (compound that forms a hydrogen-bond cross-linkable moiety and/or a compound that forms a covalent-bond cross-linking moiety) . Note that the elastomeric polymer (A) may also be produced by polymerization of monomers having a hydrogen bonding moiety.

The elastomeric polymer having such a functional group (for example, a cyclic acid anhydride group) in a side chain is preferably a polymer that can form a main chain of the above-described elastomeric polymers (A) and (B) and having a functional group in a side chain. Here, the "elastomeric polymer containing a functional group in a side chain" refers to an elastomeric polymer having a functional group (the above-described functional group or the like, for example, a cyclic acid anhydride group or the like) chemically stably bonded (covalently bonded) to an atom forming a main chain, and it is possible to preferably use one obtained by a reaction of an elastomeric polymer (for example, a known natural polymer or synthetic polymer) with a compound capable of introducing a functional group.

In addition, the functional group is preferably a functional group capable of forming at least one bond selected from the group consisting of amide, ester, lactone, urethane, ether, thiourethane, and thioether, among which a cyclic acid anhydride group, a hydroxy group, an amino group, a carboxy group, an isocyanate group, a thiol group, or the like is preferable. The functional group is particularly preferably a cyclic acid anhydride group, from the viewpoint that the clay can be dispersed more efficiently in the composition. In addition, the cyclic acid anhydride group is preferably a succinic anhydride group, a maleic anhydride group, a glutaric anhydride group, or a phthalic anhydride group. Especially, a maleic anhydride group is more preferable, from the viewpoint that it can be easily introduced to a side chain of a polymer and can be easily obtained industrially. In addition, when the functional group is a cyclic acid anhydride group, the functional group may be introduced to the elastomeric polymer (for example, a known natural polymer or synthetic polymer) by using, for example, a cyclic acid anhydride such as succinic anhydride, maleic anhydride, glutaric anhydride, phthalic anhydride, and an derivative thereof, as a compound enabling the introduction of the functional group.

Note that the compound that forms a hydrogen-bond cross-linkable moiety upon a reaction with the functional group is not particularly limited, and it is preferable to use the above-described "compound that forms a hydrogen-bond

cross-linkable moiety (a compound capable of introducing a nitrogen-containing heterocycle)." In addition, the compound that forms a covalent-bond cross-linking moiety upon a reaction with the functional group is not particularly limited, and it is preferable to use the above-described "compound that forms a covalent-bond cross-linking moiety (compound that forms a covalent bond)." Moreover, as the compound that forms a hydrogen-bond cross-linkable moiety (a compound capable of introducing a nitrogen-containing heterocycle) and the compound that forms a covalent-bond cross-linking moiety (a compound that forms a covalent bond), a compound that forms both a hydrogen-bond cross-linkable moiety and a covalent-bond cross-linking moiety upon a reaction with the functional group (for example, a polyol, polyamine, or polythiol containing a nitrogen-containing heterocycle, or the like) can also be used preferably.

In addition, when a method in which an elastomeric polymer having a side chain in a functional group (for example, cyclic acid anhydride group) is used, and the elastomeric polymer is reacted with at least one raw material compound of a compound that forms a hydrogen-bond cross-linkable moiety upon a reaction with the functional group, and a mixed raw material of a compound that forms a hydrogen-bond cross-linkable moiety upon a reaction with the functional group and a compound that forms a covalent-bond cross-linking moiety upon a reaction with the functional group, to produce the elastomeric polymer (A) having the side chain (a), or the elastomeric polymer (B) containing a hydrogen-bond cross-linkable moiety and a covalent-bond cross-linking moiety in a side chain is employed as a method for producing an elastomer component (elastomeric polymers (A) and (B)), it is possible to employ a method in which, before the reaction of the elastomeric polymer having a functional group in a side chain with the raw material compound, an clay is mixed with the elastomeric polymer having a functional group in a side chain, and then the raw material compound is added, followed by a reaction, to form the composition simultaneously with the preparation of the elastomer component (a method in which a clay is added first) .

Note that, since the dispersibility of the clay is further improved and the heat resistance is enhanced to a higher level, it is preferable that the above-described method in which the clay is added first be employed for production of the elastomer component (elastomeric polymers (A) and (B)) and that the clay be dispersed simultaneously with preparation of the elastomer component. In addition, as the method in which the clay is added first, it is more preferable to employ a method for producing a composition for foam of the present invention described later.

(Organically Modified Clay)

The organically modified clay according to the present invention is not particularly limited, but, for example, any clay organically modified by an organically modifying agent may be used favorably. A preferable clay as the "organically modified clay" is in a state where an organically modifying agent such as a quaternary ammonium salt is introduced between layers (for example, the organically modifying agent is inserted between the layers. Here, a method for introducing an organically modifying agent between layers of a clay is not particularly limited. For example, it is possible to employ, as appropriate, a method using the cation exchangeability of a clay such as montmorillonite, which is a layered mineral, to introduce an organically modifying agent between layers of the clay. In this way, an organically modified clay can be obtained easily by using a publicly known method, as appropriate, in which a clay being a layered mineral is treated with an organically modifying agent such that the organically modifying agent is introduced between layers of the clay. Note that use of such an organically modified clay makes it possible to more easily delaminate the layers of the clay and accordingly more efficiently disperse a single-layered clay into an organic solvent or a resin.

A clay to be organically modified by an organically modifying agent (clay before organic modification) is not particularly limited, but any publicly known clay can be used as appropriate. Examples of the clay include montmorillonite, saponite, hectorite, beidellite, stevensite, nontronite, vermiculite, halloysite, mica, fluorinated mica, kaolinite, pyrophyllite, smectite, sericite, illite, glauconite, chlorite, talc, zeolite, hydrotalcite, and the like. The clay may be a natural product or a synthetic product.

In addition, an organically modifying agent usable to organically modify such clay is not particularly limited, but any known organically modifying agent capable of organically modifying a clay can be used as appropriate. For example, it is possible to use a publicly known organically modifying agent such as hexylammonium ions, octylammonium ions, 2-ethylhexylammonium ions, dodecylammonium ions, laurylammonium ions, octadecylammonium ions, dioctyldimethylammonium ions, trioctylammonium ions, dioctadecyldimethylammonium ions, trioctylammonium ions, dioctadecyldimethylammonium ions, trioctadecylammonium ions, dimethylstearylbenzylammonium ions, oleylbis(2-hydroxylethyl)methylammonium ions, or trimethylstearylbenzylammonium ions.

From the viewpoint that a foam can be formed at a higher foaming ratio (with a lower specific gravity), and that the foam can achieve higher levels of properties in well-balanced manner such as higher modulus, higher tensile strength at break, and lower compression set, the organically modifying agent is preferably at least one organically modifying agent selected from ammonium salts represented by the following general formula:

$$R_2N^+(CH_3)_2\cdot X^- \qquad (I)$$

(in the formula (I), Rs each independently represent at least one selected from alkyl groups and aralkyl groups and $X^-$ represents a counter anion).

As an alkyl group which can be selected as R in the general formula (I), a preferable alkyl group has 1 to 40 (more preferably 1 to 30, and further preferably 1 to 20) carbon atoms. If the number of carbon atoms exceeds the upper limit, the molecules become too large to get into between layers of a clay, and therefore the organically modifying agent (ammonium salt) tends to have difficulty organically modifying the clay. Examples of an alkyl group which can be selected as R in the general formula (I) include methyl, ethyl, propyl, hexyl, oleyl, octyl, decyl, dodecyl, octadecyl group (stearyl group), and the like. Among them, a methyl or octadecyl group (stearyl group) is preferable, and an octadecyl group (stearyl group) is more preferable from the viewpoint that higher levels of properties such as higher foaming ratio (lower specific gravity), higher modulus, higher tensile strength at break, and lower compression set can be achieved in a well-balanced manner.

Meanwhile, as an aralkyl group which can be selected as R in the general formula (I), a preferable aralkyl group has 6 to 30 (more preferably 6 to 25, and further preferably 6 to 20) carbon atoms. If the number of carbon atoms exceeds the upper limit, the molecules become too large to get into between layers of a clay, and therefore the organically modifying agent (ammonium salt) tends to have difficulty organically modifying the clay because. Examples of such an aralkyl group include a benzyl group, a phenethyl group, a naphthylmethyl group, a fluorenylmethyl group, and the like. Among them, a benzyl group is more preferable from the viewpoint that higher levels of properties such as higher foaming ratio (lower specific gravity), higher modulus, higher tensile strength at break, and lower compression set can be achieved in a well-balanced manner.

Then, $X^-$ represents a counter anion. Such a counter anion is not particularly limited. Examples thereof include halide ions such as chloride ion, bromide ion and iodide ion, and borate ions such as borate anion, tetrafluoroborate anion, and hexafluoroborate anion.

Such an organically modifying agent is preferably one represented by the above general formula (I) and containing both an ammonium salt (A) in which the two Rs in the formula (I) are alkyl groups and an ammonium salt (B) in which one of the two Rs in the general formula (I) is an alkyl group whereas the other one is an aralkyl group from the viewpoint that higher levels of properties such as higher foaming ratio (lower specific gravity), higher modulus, higher tensile strength at break, and lower compression set can be achieved in a well-balanced manner. Here, an example of the ammonium salt (A) is a dimethyldioctadecylammonium salt or the like, and an example of the ammonium salt (B) is a dimethylstearylbenzylammonium salt or the like.

As the organically modified clay, a clay organically modified by a quaternary ammonium salt can be used preferably from the viewpoint that higher levels of properties such as higher foaming ratio (lower specific gravity), higher modulus, higher tensile strength at break, and lower compression set can be achieved in a well-balanced manner. Examples of quaternary ammonium salts which can be preferably used include, but are not particularly limited to, trimethylstearylammonium salts, salts of oleylbis(2-hydroxylethyl), methylammonium salts, dimethylstearylbenzylammonium salts, dimethyloctadecylammonium salts, and mixtures of two or more thereof. Note that as the quaternary ammonium salt for an organically modified clay, a dimethylstearylbenzylammonium salt, a dimethyloctadecylammonium salt, or a mixture thereof can be used more preferably, and a mixture of a dimethylstearylbenzylammonium salt and a dimethyloctadecylammonium salt can be used further preferably from the viewpoint of improvement in tensile strength and heat resistance.

In addition, as the organically modified clay, a commercially available one can be used, and it is possible to favorably use, for example, those manufactured by KUNIMINE INDUSTRIES CO., LTD. under the trade names of "Kunfil-D36," "Kunfil-B1," "Kunfil-HY," and the like, as well as those manufactured by HOJUN Co., Ltd. under the trade names of "S-BEN series (C, E, W, WX, N-400, NX, NX80, NZ, NZ70, NE, NEZ, NO12S, and NO12," and "ORGANITE series (D, T), and the like. Among the commercially available organically modified clays, those manufactured by KUNIMINE INDUSTRIES CO., LTD. under the trade name of "Kunfil-D36" and manufactured by HOJUN Co., Ltd. under the trade name of "S-BEN series WX" can be used preferably. Note that these commercially available organically modified clays are each in a state where an organically modifying agent is introduced between layers of the clay.

Note that the composition for foam of the present invention contains the organically modified clay in combination with the elastomer component. Presumably, with the organically modified clay, the elastomer component is plane cross-linked (the elastomer component is cross-linked by plane cross-linking utilizing the surfaces of the clay) before and after foaming, so that the tensile stress of the foam is sufficiently improved. Here, this point is more specifically discussed. First, the elastomer component contains an elastomeric polymer containing a side chain having at least a hydrogen-bond cross-linkable moiety, and the hydrogen bond in the hydrogen-bond cross-linkable moiety of the side chain interacts with the organically modified clay. Through the interaction, the organically modified clay is uniformly dispersed into the elastomer component in the present invention. Then, the organically modified clay thus dispersed and the hydrogen-bond cross-linkable moieties newly form hydrogen bonds or do the like, and further interact with each other. In this way, the elastomer component is plane cross-linked by utilizing the surfaces of the clay. Then, the present inventors speculate that the formation of the plane cross-linking then makes it possible for the elastomer component to suppress the stress

concentration at each cross-linking point, so that the elastomer component can express a very high level of tensile stress and also express sufficiently high heat resistance stemming from its structure. In addition, the present inventors speculate that the formation of the plane cross-linking then makes it possible for the elastomer component to suppress the stress concentration at each cross-linking point, so that the composition after being formed into a foam can also exhibit sufficiently high levels of tensile strength (modulus), tensile strength at break, and resistance to compression set. Especially, when the hydrogen-bond cross-linkable moiety is "a hydrogen-bond cross-linkable moiety having a carbonyl-containing group and/or a nitrogen-containing heterocycle (more preferably, a hydrogen-bond cross-linkable moiety having a carbonyl-containing group and a nitrogen-containing heterocycle) " as described for the side chain (a), hydrogen bonds can be formed at a larger number of points. The elastomer molecules form hydrogen bonds not only between themselves at a larger number of points, but also form hydrogen bonds with the organically modified clay at a larger number of points. Hence, the plane cross-linking can be formed more strongly, and the composition after foaming also tends to achieve higher effects in terms of tensile strength and so on. Moreover, in the present invention, the amount of the organically modified clay contained is 20 parts by mass relative to 100 parts by mass of the elastomer component. In this regard, the present inventors speculate that even at such a content ratio, the organically modified clay is dispersed sufficiently uniformly as described above and thus can form the plane cross-linking sufficiently (note that a case where the ratio of the clay dispersed as single layers is increased can be regarded as a more preferred mode, because a larger number of plane cross-linkages tend to be formed in the elastomer), whereby the composition after foaming also can exhibit sufficiently high levels of tensile strength (modulus), tensile strength at break, and resistance to compression set. Further, in the present invention, for example, the hydrogen bonds formed by the hydrogen-bond cross-linkable moieties in the side chains allow the composition after foaming to also maintain flowability (formability). Furthermore, depending on the constitution, the composition can be also made to additionally exhibit higher mechanical strength, sufficient self-repairing property, and so on. Still further, the present inventors speculate that, in the case where the composition in the present invention contains an elastomer component containing a covalent-bond cross-linking moiety in a side chain (the elastomeric polymer (B) or the like), the flowability of rubber molecule chains can be controlled by the side chains containing the covalent-bond cross-linking moieties, which makes it possible for the composition to also express a higher level of resistance to compression set after the composition is foamed.

In contrast, in the case of using only a different elastomer component as the elastomer component without using at least one of the elastomeric polymers (A) and (B) having a hydrogen-bond cross-linkable moiety in a side chain, it is not possible to obtain the effects as described above even when the different elastomer component is used in combination with an organically modified clay. In this respect, the present inventors speculate as follows. Specifically, first, ordinary thermoplastic elastomers can be roughly classified into two types: a type utilizing pseudo-cross-linking based on physical interaction between molecular chains of a polymer (a type in which weak bonds are physically formed by interactions based on intermolecular force of a polymer and the like) ; and a type in which a rubber is dispersed in a matrix of a thermoplastic resin. Representative ones of thermoplastic elastomers of the type utilizing the pseudo-cross-linking include polymers each containing a soft segment and a hard segment, such as a block polymer and a urethane elastomer. Here, if the thermoplastic elastomer of the type utilizing the pseudo-cross-linking is only blended with a filler such as a clay without introducing a polymer having the aforementioned side chain, the clay hinders interactions at pseudo-cross-linking points (physical interactions between molecular chains of the polymer), which rather results in a decrease in the mechanical strength of the polymer, making the resultant composition unsuitable for practical use as a rubber product. In this way, when a conventional thermoplastic elastomer only containing a thermoplastic elastomer of the type utilizing pseudo-cross-linking is used just in combination with a clay, the formation of the pseudo-cross-linking is rather hindered in the composition, and the mechanical strength (such as tensile stress) of the composition decreases. Meanwhile, in the case of a thermoplastic elastomer of the type in which a rubber is dispersed in a matrix of a thermoplastic resin, a filler such as a clay is introduced only in the matrix phase, as is apparent from the constitution of the thermoplastic elastomer. In this connection, in the case of a matrix in a thermoplastic resin not having the aforementioned side chain, the matrix does not form interaction with the clay. For this reason, simple introduction of a filler results in a state in which the filler is introduced at high concentration in some portions, while the filler is not introduced at all in other some portions. As a result, a difference in the concentration of the filler causes a difference in the hardness inside the elastomer to decrease the mechanical strength and the like. For this reason, in the case where a polymer having no hydrogen-bond cross-linkable moiety in a side chain is used in a thermoplastic elastomer of the type in which a rubber is dispersed in the matrix of a thermoplastic resin, even when an organically modified clay is simply introduced into the thermoplastic elastomer, the organically modified clay cannot be dispersed sufficiently and the mechanical strength (such as tensile strength at break) of the composition decreases. In view of these points, the present inventors speculate that when none of the elastomeric polymers (A) and (B) is used in a base elastomer component, the obtained composition cannot always have properties sufficient as an elastomer (rubber), because the elastomer component cannot form interactions with the organically modified clay and even worse the presence of the organically modified clay rather decreases the mechanical strength.

As discussed above, the present inventors speculate that use of at least one selected from the group consisting

of the elastomeric polymers (A) and (B) as the elastomer component in combination with a predetermined amount of an organically modified clay in the present invention makes it possible for the composition to exhibit sufficiently high levels of properties such as tensile stress even after foaming.

(Foaming Agent)

The foaming agent according to the present invention is not particularly limited, but it is possible to favorably use a foaming agent which, when mixed with a material, can generate gas by heating or the like, and thereby generate air bubbles in a product (manufactured article) . Publicly known foaming agents can be used as needed such as what are termed physical foaming agents, chemical foaming agent, thermally expandable microcapsules, and the like.

The foaming agent is preferably at least one type selected from the group consisting of thermally expandable microcapsules, physical foaming agents, and chemical foaming agents from the viewpoint that a foam molded article can be easily obtained.

Examples of the physical foaming agents include inorganic foaming agents such as nitrogen, air, carbon dioxide, ammonia, water (vapor), oxygen, hydrogen, and hollow glass balloons; and organic foaming agents such as pentane, dichloroethane, and chloro-fluorocarbon gas. One of these physical foaming agents may be used alone, or two or more thereof may be used in combination. When carbon dioxide or nitrogen is used as the physical foaming agent, it is preferable to mix the agent into the thermoplastic elastomer composition in the supercritical state from the viewpoint of achieving rapid and uniform mixing and obtaining fine bubbles. A method of supercritical injection foam molding (conditions and others employed) is not particularly limited, but any publicly known method can be employed as appropriate. For example, a method described in Japanese Unexamined Patent Application Publication No. H10-230528 may be used. Meanwhile, examples of the chemical foaming agents include inorganic foaming agents such as a reaction type of sodium bicarbonate and an acid, and a thermal decomposition type of a carbonate salt or the like; and organic foaming agents such as a reaction type of isocyanate compound or the like, and a thermal decomposition type of at least one kind selected from the group consisting of azo compounds, hydrazine derivatives, semicarbazide compounds, azides, nitroso compounds, triazole compounds, tetrazole compounds, and bicarbonates or the like.

Examples of the thermal decomposition type of organic chemical foaming agents include azodicarbonamide (ADCA), diazoaminobenzene ($C_6H_5N{=}NHC_6H_5$), N,N'-dinitrosopentamethylenetetramine (DPT), 4,4'-oxybis(benzenesulfonyl hydrazide) (OBSH), hydrazodicarbonamide (HDCA), barium azodicarboxylate (Ba/AC), sodium hydrogencarbonate ($NaHCO_3$), ammonium carbonate ($(NH_4)_2CO_3$), aluminum acetate ($Al(CH_3COO)_3$), and the like. Such an organic chemical foaming agent is not particularly limited, but a commercially available one may be used as appropriate. Examples of such commercially available foaming agents include products of EIWA CHEMICAL IND. CO., LTD such as ADCA (trade name: VINYFOR), DPT (trade name: CELLULAR), OBSH (trade name: NEOCELLBORN), DPT/ADCA (trade name: EXCELLAR), ADCA/OBSH (trade name: SPANGCELL), and $NaHCO_3$ (trade name: CELLBORN).

Meanwhile, the thermally expandable microcapsules are not particularly limited, but any publicly known thermally expandable microcapsules can be used as appropriate. As such thermally expandable microcapsule, a preferable one is a thermally expandable microsphere having a structure in which a thermoplastic resin is used as an outer shell and a foaming component (what is termed foaming material) is enclosed in the outer shell.

The thermoplastic resin constituting the outer shell of the thermally expandable microsphere (thermally expandable microcapsule) is not particularly limited, but it is possible to use a known thermoplastic resin which can be used for so-called thermally expandable microcapsules. Among such thermoplastic resins, from the viewpoint of expandability and heat resistance a preferable thermoplastic resin is one obtained by polymerization of (radical) polymerizable monomers having one polymerizable double bond.

Example of the polymerizable monomers include nitrile monomers such as acrylonitrile, methacrylonitrile, α-chloroacrylonitrile, α-ethoxyacrylonitrile, and fumaronitrile; carboxyl group-containing monomers such as acrylic acid, methacrylic acid, itaconic acid, maleic acid, fumaric acid, and citraconic acid; halogenated vinyl monomers such as vinylidene chloride, vinyl chloride, vinyl bromide, and vinyl fluoride; vinyl ester monomers such as vinyl acetate, vinyl propionate, and vinyl butyrate; (meth)acrylic acid ester monomers such as methyl(meth)acrylate, ethyl(meth)acrylate, n-butyl(meth)acrylate, isobutyl(meth)acrylate, t-butyl(meth)acrylate, propyl(meth)acrylate, n-octyl(meth)acrylate, dodecyl(meth)acrylate, 2-ethylhexyl(meth)acrylate, stearyl (meth)acrylate, 2-chloroethyl(meth)acrylate, phenyl(meth)acrylate, isobornyl(meth)acrylate, cyclohexyl(meth)acrylate, benzyl(meth)acrylate, β-carboxyethylacrylate, 2-hydroxyethyl(meth)acrylate, and 2-hydroxypropyl(meth)acrylate; acrylamide monomers such as acrylamide, substituted acrylamide, methacrylamide, and substituted methacrylamide; maleimide monomers such as N-phenylmaleimide, N-(2-chlorophenyl)maleimide, N-cyclohexylmaleimide, and N-laurylmaleimide; styrene monomers such as styrene, α-methylstyrene, o-methylstyrene, m-methylstyrene, p-methylstyrene, p-ethylstyrene, 2,4-dimethylstyrene, p-n-butylstyrene, p-tert-butylstyrene, p-n-hexylstyrene, p-n-octylstyrene, p-n-nonylstyrene, p-n-decylstyrene, p-n-dodecylstyrene, n-methoxystyrene, p-phenylstyrene, chlorostyrene, and 3,4-dichlorostyrene; ethylene unsaturated monoolefin monomers such as ethylene, propylene, butylene, and isobutylene; vinyl ether monomers such as vinyl methyl ether, vinyl ethyl ether, and

vinyl isobutyl ether; vinyl ketone monomers such as vinyl methyl ketone, vinyl hexyl ketone, and methyl isopropenyl ketone; N-vinyl monomers such as N-vinyl pyrrole, N-vinyl carbazole, N-vinyl indole, and N-vinyl pyrrolidone; and vinyl naphthalene salts. One of these polymerizable monomers may be used alone, or two or more thereof may be used in combination.

In addition, in the carboxyl group-containing monomer, part or all of carboxyl groups may be neutralized during polymerization. Also, (meth)acrylic means acrylic or methacrylic. Further, as the maleimide monomer, an N-substituted maleimide monomer having a structure having a substituent on the nitrogen atom is preferable.

As the polymerizable monomer, preferred ones include nitrile monomers, (meth)acrylic acid ester monomers, carboxyl group-containing monomers, styrene monomers, vinyl acetate, acrylamide monomers, maleimide monomers and halogenated vinyl monomers.

As the polymerizable monomer, a nitrile monomer is preferable from the viewpoint of improving heat resistance and solvent resistance of an outer shell made of a thermoplastic resin (nitrile polymer) obtained. In addition, as the polymerizable monomer, it is preferable to further use a halogenated vinyl monomer and/or a (meth)acrylic acid ester monomer in combination with a nitrile monomer. As the polymerizable monomer, a halogenated vinyl monomer is preferable from the viewpoint of improving the gas barrier property of the outer shell made of a thermoplastic resin (halogenated vinyl polymer) obtained. Further, as the polymerizable monomer, a (meth)acrylic acid ester monomer is preferable from the viewpoint that the expansion behavior of thermally expandable microcapsules obtained can be easily controlled. Meanwhile, as the polymerizable monomer, it is preferable to use a carboxyl group-containing monomer in combination with a nitrile monomer from the viewpoints that the heat resistance and the solvent resistance of the outer shell are improved, and that the glass transition temperature of the thermoplastic resin is raised, thereby allowing thermally expandable microcapsules to be thermally expanded at a high temperature. As the polymer monomer, a halogenated vinyl monomer and/or a (meth)acrylic acid ester monomer may be further used in combination with a nitrile monomer and a carboxyl group-containing monomer. Furthermore, as the polymer monomer, it is preferable to use a maleimide monomer in combination with the above from the viewpoint of reducing coloring of thermally expandable microcapsules.

A foaming component to be enclosed in the thermally expandable microcapsules may be a substance which can generate gas by being vaporized or expanded by heat. The foaming component is preferably, but is not particularly limited to, a substance having a boiling point not higher than the softening point of the thermoplastic resin constituting the thermally expandable microcapsules. As such a foaming component, a component publicly known as a foaming agent can be used as appropriate, and examples thereof include hydrocarbons having 1 to 12 carbon atoms and their halides; fluorine-containing compounds having an ether structure and having 2 to 10 carbon atoms without containing a chlorine atom and a bromine atom; tetraalkylsilanes; and compounds which generate gas by thermally decomposing by heating; and the like. As such a foaming component, one component may be used alone, or two or more components may be used in combination.

Examples of the hydrocarbons having 1 to 12 carbon atoms usable as the foaming component include propane, cyclopropane, propylene, butane, normal butane, isobutane, cyclobutane, normal pentane, cyclopentane, isopentane, neopentane, normal hexane, isohexane, cyclohexane, heptane, cycloheptane, octane, isooctane, cyclooctane, 2-methylpentane, 2,2-dimethylbutane, petroleum ether, and the like. Such hydrocarbon may be linear, branched, or alicyclic, and is preferably aliphatic. Meanwhile, examples of the halides of hydrocarbons having 1 to 12 carbon atoms include methyl chloride, methylene chloride, chloroform, carbon tetrachloride, and the like.

Examples of the "fluorine-containing compounds having an ether structure and having 2 to 10 carbon atoms without containing a chlorine atom and a bromine atom", which are usable as the foaming component, include hydrofluoroethers such as $C_3H_2F_7OCF_2H$, $C_3HF_6OCH_3$, $C_2HF_4OC_2H_2F_3$, $C_2H_2F_3OC_2H_2F_3$, $C_4HF_8OCH_3$, $C_3H_2F_5OC_2H_3F_2$, $C_3HF_6OC_2H_2F_3$, $C_3H_3F_4OCHF_2$, $C_3HF_6OC_3H_2F_5$, $C_4H_3F_6OCHF_2$, $C_3H_3F_4OC_2HF_4$, $C_3HF_6OC_3H_3F_4$, $C_3F_7OCH_3$, $C_4F_9OCH_3$, $C_4F_9OC_2H_5$, and $C_7F_{15}OC_2H_5$, and the like. The (fluoro)alkyl group of such a hydrofluoroether may be linear or branched. Further, one of these fluorine-containing compounds may be used alone, or two or more thereof may be used in combination.

Examples of the tetraalkylsilanes usable as the foaming component include silanes having 1 to 5 carbon atoms. Examples of the silanes having 1 to 5 carbon atoms include tetramethylsilane, trimethylethylsilane, trimethylisopropylsilane, trimethyl-n-propylsilane, and the like.

Specific examples of the compounds which generate gas by thermally decomposing by heating, which are usable as the foaming component, include azodicarbonamide, N,N'-dinitrosopentamethylenetetramine, 4,4'-oxybis(benzenesulfonylhydrazide), and the like.

A method for producing such thermally expandable microcapsules is not particularly limited, but any known method can be employed as appropriate. As such thermally expandable microcapsules, commercially available products may be used (for example, such as grade F and FN series of Matsumoto Microsphere (registered trademark) manufactured by Matsumoto Yushi-Seiyaku Co., Ltd. (for example, ultra-high temperature thermo-expandable type of F-170, F-190D, and the like) and MBF-190-EVA50 which is a master-batch in which these microcapsules are kneaded in a resin with good dispersion).

As described above, as the foaming agent according to the present invention, any known foaming agent (what are termed physical foaming agent, chemical foaming agent, thermally expandable microcapsules, or the like) can be used as appropriate. However, use of thermally expandable microcapsules is preferable because, in the case of using thermally expandable microcapsules, the presence of the shells makes air bubbles less likely to collapse and allows the foaming state to be maintained more reliably than in the case of using a physical foaming agent or chemical foaming agent. Here, in the case where thermally expandable microcapsules are used as the foaming agent according to the present invention, it is possible to achieve a higher foaming efficiency because the presence of shells allows air bubbles to be retained as described above.

(Composition)

The composition for foam of the present invention comprises the elastomer component, the organically modified clay, and the foaming agent.

The composition for foam of the present invention can foam at a sufficiently high level of foaming ratio. In addition, by being foamed, the composition for foam can efficiently form a foam having high levels of modulus at 100% elongation, tensile strength at break, and resistance to compression set in a well-balanced manner. Although it is not exactly clear why such effects can be achieved by the present invention, the present inventors speculate as follows. Specifically, first of all, in the present invention, the elastomer component comprises an elastomeric polymer containing a side chain having at least a hydrogen-bond cross-linkable moiety (a polymer containing at least any of: the side chain (a); the side chain (a') and the side chain (b); and the side chain (c) in a side chain (s)). For this reason, when such an elastomeric polymer is used in combination with an organically modified clay, interactions between the organically modified clay and hydrogen-bond cross-linkable moieties occur (such as the formation of new hydrogen bonds), so that the elastomer component is plane cross-linked by utilizing the surfaces of the organically modified clay. The present inventors speculate that the plane cross-linking originated from the hydrogen bonds is formed again in a foam even if the plane cross-linking formed before foaming disappears once due to foaming (such as a heating process for foaming). Then, the formation of the plane cross-linking makes it possible to suppress the stress concentration at each cross-linking point, so that the resultant elastomer component can express a very high level of tensile stress and also express sufficiently high heat resistance stemming from its structure. For this reason, the present inventors speculates that, after the composition for foam of the present invention is foamed, the product thus obtained can also achieve a very high level of tensile strength, and has high levels of modulus at 100% elongation and tensile strength at break in a well-balanced manner. Note that, in the present invention, the hydrogen bonds formed by the hydrogen-bond cross-linkable moieties in the side chains allow the composition for foam to have a certain level of flowability and thereby also achieve sufficient formability. Further, the present inventors speculate that, when an elastomer component containing a covalent-bond cross-linking moiety in a side chain is contained in the present invention (for example, when the elastomeric polymer (B) is contained), the side chains containing the covalent-bond cross-linking moieties make it possible to suppress the flowability of molecule chains and accordingly to express a higher level of resistance to compression set even after foaming. Moreover, when the hydrogen-bond cross-linkable moiety and the covalent-bond cross-linking moiety are present in the elastomer component (such as cases where: the elastomeric polymer (B) is contained, a mixture of the elastomeric polymer (B) with another elastomeric polymer is contained; a mixture of the elastomeric polymer (A) and the elastomeric polymer (B) is contained; and a mixture of the elastomeric polymer (A) with an elastomeric polymer containing the side chain (b) other than the elastomeric polymer (B) is used), the presence of the hydrogen-bond cross-linkable moiety and the covalent-bond cross-linking moiety enables the obtained composition to simultaneously express an effect of inhibiting flowing (improvement in mechanical strength) attributed to covalent bonds during use and an effect of imparting the flowability (formability) attributed to cleavage of hydrogen bonds during heating. The present inventors speculate that, by taking advantage of the above, properties required depending on an application can be exhibited, as appropriate, by changing the constitution as appropriate according to the type of a side chain. In addition, the present inventors speculate that the composition for foam of the present invention makes it possible for the elastomer component to foam at a sufficient foaming ratio with the assist of the foaming agent such that the attractive force between the molecular chains in the elastomer component is weakened to allow air bubbles to expand during heating, and then even after the foaming, to hold the air bubbles through the interaction with the organically modified clay, and thereby the composition for foam is capable of exhibiting higher levels of modulus at 100% elongation, tensile strength at break, and resistance to compression set in a well-balanced manner. Note that, the above-described elastomeric polymer having a side chain (b) other than the elastomeric polymer (B) can be obtained also by a method in which an elastomeric polymer having a functional group (for example, a cyclic acid anhydride group) in a side chain is used, and the elastomeric polymer is reacted with a compound that forms a covalent-bond cross-linking moiety upon a reaction with the functional group (compound that forms a covalent bond) to produce the elastomeric polymer having the side chain (b) . Also in this case, the above-described "compound that forms a covalent-bond cross-linking moiety (compound that forms a covalent bond)" can be used as the compound that forms a covalent-bond cross-linking moiety (compound that forms

a covalent bond).

The composition for foam of the present invention comprises the elastomer component, the organically modified clay, and the foaming agent, and the amount of the organically modified clay contained is 20 parts by mass or less relative to 100 parts by mass of the elastomer component. If the amount of the clay contained exceeds the upper limit, the tensile properties of a foam obtained by foaming the composition decrease. The amount of the organically modified clay contained in the composition for foam is more preferably 0.01 to 10 parts by mass, further preferably 0.05 to 5 parts by mass, and particularly preferably 0.1 to 3 parts by mass relative to 100 parts by mass of the elastomer component. If the amount of the organically modified clay contained is less than the lower limit, the amount of the organically modified clay contained is so small that sufficient effects tend not to be obtained. Meanwhile, if the amount of the organically modified clay contained exceeds the upper limit, it is difficult to disperse the clay and the clay tends to act as foreign particles to decrease the elongation and the strength rather, making it difficult to use the composition for foam for various applications (deteriorating the practicability).

In addition, as the organically modified clay, it is preferable that a clay in a single-layered morphology (single-layered clay) be present in the composition. The presence of such an organically modified clay in the single-layered morphology can be confirmed by observing the surface of the composition under a transmission electron microscope (TEM).

Moreover, regarding the composition for foam of the present invention, when randomly selected three or more measurement points in a size of 5.63 $\mu m^2$ on the surface of the composition for foam are observed under a transmission electron microscope (TEM), the single-layered organically modified clay is preferably present at 50% or more (more preferably 70% or more, further preferably 80 to 100%, and particularly preferably 85 to 100%) of all the organically modified clay based on the number of layers in all the measurement points. If the abundance ratio of the single-layered organically modified clay is less than the lower limit, the elongation at break and the tensile strength at break tend to decrease. Note that the abundance ratio (proportion) of such a single-layered organically modified clay can be determined as follows. Specifically, a transmission electron microscope (for example, one manufactured by JEOL Ltd. under the trade name of "JEM-2010") is used; 10 g of the composition for foam is prepared as a sample; three or more measurement points in a size of 5.63 $\mu m^2$ on the surface of the composition for foam are each observed; the number of single-layers of the organically modified clay and the number of multi-layers of the organically modified clay are determined in each TEM image obtained by such observation; the abundance ratio (proportion) of the single-layered clay relative to all the organically modified clay is calculated and determined based on these numbers of layers for each of the measurement points (each of the TEM images) . Note that the interlayer distance of montmorillonite having a multi-layered structure before taking the single-layer morphology is about 9.8 angstroms, whereas the interlayer distance of an ordinary organically modified clay is about 20 to 40 angstroms (2 to 4 nm). In addition, when an ordinary organically modified clay is dispersed in an organic solvent and is decomposed into single-layers, the interlayer distance thereof is 50 angstroms (> 5 nm) or more. Hence, layers observed in a TEM image may be determined as single-layers based on the observation that the interlayer distance of the observed layers is wider than such an interlayer distance. As described above, layers may be determined to be in a single-layer state, for example, based on the observation that the layers have an interval of 5 nm or more, and, in some cases, layers may be determined to be in a single-layer state based on the observation that the layers have an interval of several tens of nanometers or more, although it depends on the type of the clay constituting the organically modified clay.

Note that, in a case where the single-layered organically modified clay is contained at the above-described proportion (the abundance ratio) in the composition, the clay is contained more dispersedly than in a case where a multi-layered organically modified clay is directly dispersed (this is because the multi-layered organically modified clay is decomposed to form a single-layered organically modified clay), and hence the organically modified clay can be dispersed in the composition with a higher dispersibility. Note that, when such organically modified clay is in a multi-layered state in the composition, the clay acts as foreign particles depending on its dispersion state and the like, thereby making it difficult to achieve a higher level of tensile strength than in a case where the clay is in a single-layered state. For this reason, it is preferable the organically modified clay in a single-layered state be contained at the above-described proportion, and this causes the organically modified clay to be more dispersed, making it possible to more efficiently exhibit a higher level of mechanical strength also after foaming. In addition, a method for causing the single-layered organically modified clay to be contained at the above-described proportion (the abundance ratio) is not particularly limited, but the single-layered organically modified clay can be contained at the above-described proportion more efficiently when a composition for foam is produced by employing the method for producing a composition for foam of the present invention to be described later.

In addition, the composition for foam of the present invention is preferably such that when randomly selected three or more measurement points in a size of 5.63 $\mu m^2$ on the surface of the composition for foam are observed under a transmission electron microscope, 1 to 100 (more preferably 3 to 80, and further preferably 5 to 50) single layers of the organically modified clay be dispersed per $\mu m^2$ in all the measurement points. If the number of single layers of the organically modified clay is less than the lower limit, the amount of the organically modified clay is so small that a sufficient

effect tends not to be obtained. Note that the number of the single layers of the organically modified clay can be determined by obtaining TEM images in the same method as that for measuring the abundance ratio (proportion) of single-layers of the organically modified clay.

In the composition for foam of the present invention, the amount of the foaming agent contained is preferably 0.1 to 90 parts by mass or less, more preferably 0.1 to 50 parts by mass, further preferably 0.1 to 40 parts by mass, particularly preferably 0.5 to 30 parts by mass, and most preferably 1 to 20 parts by mass relative to 100 parts by mass of the elastomer component. If the amount of the foaming agent contained is less than the lower limit, the amount of the foaming agent is so small that the foaming ratio tends not to be sufficiently high in some cases (the specific gravity tends not to be sufficiently low in some cases). Meanwhile, if the amount of the foaming agent contained exceeds the upper limit, the amount of the foaming agent is so large that it tends to be difficult to obtain a uniform foam due to a difficulty in sufficiently dispersing the foaming agent, or that the strength of a foam obtained tends to decrease because the specific gravity after foaming is too low.

The composition for foam of the present invention comprises the elastomer component in combination with the organically modified clay and the foaming agent as described above. Then, in the case where the composition for foam of the present invention is a composition for foam containing the elastomeric polymer (A) as the elastomer component, the properties stemming from the side chain (a) can be imparted to the composition, and therefore a foam obtained after foaming of the composition can be improved in the properties of elongation at break, tensile strength at break, and flowability, in particular. Meanwhile, in a composition for foam containing the elastomeric polymer (B) as the elastomer component, the properties stemming from the covalent-bond cross-linking moiety in the side chain can be imparted to the composition, and therefore a foam obtained after foaming of the composition can be improved in the property of resistance to compression set, in particular. Note that, in the composition for foam containing the elastomeric polymer (B) as the elastomer component, not only the properties stemming from the covalent-bond cross-linking moiety but also the properties stemming from the hydrogen-bond cross-linkable moiety (the hydrogen-bond cross-linkable moiety described for the side chain (a')) can be imparted to the composition, and therefore it is also possible for a foam obtained after foaming to exhibit the resistance to compression set while maintaining the flowability (formability). Thus, it is possible to even more efficiently exhibit properties desired for an application by changing the type of the side chain, the type of the polymer (B), and so on, as appropriate.

In addition, regarding the composition for foam of the present invention, a composition for foam containing the elastomeric polymer (A) as the elastomer component or a thermoplastic elastomer composition obtained as an intermediate during the production of the composition for foam, and a composition for foam containing the elastomeric polymer (B) as the elastomer component or a thermoplastic elastomer composition obtained as an intermediate during the production of the composition for foam may be produced separately, and then mixed with each other to finally obtain a composition for foam containing the elastomeric polymers (A) and (B) as the elastomer components. In addition, in the present invention, it is only necessary that at least the elastomeric polymers (A) and (B) be contained as the elastomer components. From the viewpoint of utilizing properties of covalent-bond cross-linking moieties more efficiently by causing the covalent-bond cross-linking moieties to be present in the composition, an additional elastomeric polymer having a side chain (b) other than the elastomeric polymer (B) may be mixed and used. For example, in a case where an additional elastomeric polymer having a side chain (b) other than the elastomeric polymer (B) is used in combination with the elastomeric polymer (A) used as the elastomer component, it is also possible to provide, owing to the side chains contained in the composition, substantially the same properties as those of a composition for foam utilizing the elastomeric polymer (B) containing a hydrogen-bond cross-linkable moiety and a covalent-bond cross-linking moiety in a side chain. In addition, when the composition for foam containing the elastomeric polymers (A) and (B) as the elastomer components is produced, or when a composition for foam containing the elastomeric polymer (A) and the additional elastomeric polymer having a side chain (b) other than the elastomeric polymer (B) is produced, desired properties can also be exhibited, as appropriate, by changing, as appropriate, the ratio of these components (for example, the components including the elastomeric polymer (A) and the elastomeric polymer (B)).

In addition, when the composition for foam of the present invention contains the elastomeric polymers (A) and (B) as elastomer components, the content ratio of the elastomeric polymer (A) to the elastomeric polymer (B) is preferably 1:9 to 9:1, and more preferably 2:8 to 8:2 in terms of the mass ratio ([polymer (A)] : [polymer (B)]). If the content ratio of the polymer (A) is less than the lower limit, the flowability (formability) and the mechanical strength tend to be insufficient. Meanwhile, if the content ratio of the polymer (A) exceeds the upper limit, the compression set tends to deteriorate.

Moreover, when the composition for foam of the present invention contains the elastomeric polymer (A) and an additional elastomeric polymer having a side chain (b) other than the elastomeric polymer (B) (hereinafter, sometimes referred to as "elastomeric polymer (C)") as the elastomer components, the content ratio of the elastomeric polymer (A) to the elastomeric polymer (C) is preferably 1:9 to 9:1, and more preferably 2:8 to 8:2 in terms of mass ratio ([elastomeric polymer (A)] : [elastomeric polymer (C)]). If the content ratio of the polymer (A) is less than the lower limit, the flowability (formability) and the mechanical strength tend to be insufficient. Meanwhile, if the content ratio of the polymer (A) exceeds the upper limit, the compression set tends to deteriorate.

In addition, regarding the composition for foam of the present invention, when both the side chain (a') and the side chain (b) are present in the composition, the total amount of the side chain (a') and the total amount of the side chain (b) are preferably 1:9 to 9:1, and more preferably 2:8 to 8:2 based on the mass ratio. If the total amount of the side chain (a') is less than the lower limit, the flowability (formability) and the mechanical strength tend to be insufficient. Meanwhile, if the total amount of the side chain (a') exceeds the upper limit, the compression set tends to deteriorate. Note that such a side chain (a') is a concept including the side chain (a) . For this reason, also when only the side chain (a) is contained as the side chain (a'), it is preferable that both the side chain (a) and the side chain (b) be present in the composition at the above-described mass ratio.

Moreover, unless the object of the present invention is not impaired, the composition for foam of the present invention may further contain, as needed, various kinds of additives or the like, such as polymers other than the elastomer component, paraffin oils, reinforcing agents (bulking agents), hydrogen bond reinforcing agents (bulking agents), bulking agents to which amino groups are introduced (hereinafter, simply referred to as "amino group-introduced bulking agent"), amino group-containing compounds other than the amino group-introduced bulking agents, compounds containing metal elements (hereinafter, simply referred to as "metal salts"), maleic anhydride-modified polymers, anti-aging agents, antioxidants, pigments (dyes), plasticizers other than the paraffin oils, thioxotropy-imparting agents, ultraviolet absorbers, flame retardants, solvents, surfactants (including leveling agents), dispersing agents, dehydrating agents, corrosion inhibitors, tackiness imparting agents, antistats, and fillers. These additives or the like are not particularly limited, but commonly used ones (publicly known ones) can be used as appropriate. For example, anti-aging agents, antioxidants, pigments (dyes), and plasticizers described below can be used as appropriate .

As the polymers other than the elastomer component, it is possible to preferably use an additional elastomeric polymer having the side chain (b) other than the elastomeric polymer (B); α-olefin-based resin having no chemical-bond cross-linking moiety; or styrene block copolymer having no chemical-bond cross-linking moiety. The "chemical-bond cross-linking moiety" mentioned herein means a moiety in which a cross linkage is formed by a chemical bond such as a hydrogen bond, a covalent bond, a chelate formed between a metal ion and a polar functional group, and a bond formed by σ-π interaction in a metal-unsaturated bond (double bond, triple bond). Accordingly, "having no chemical-bond cross-linking moiety" mentioned in the present invention means a state where a resin does not have any chemical bond such as the hydrogen bond, the covalent bond, the chelate formed between a metal ion and a polar functional group, or the bond formed by σ-π interaction in a metal-unsaturated bond (double bond, triple bond) listed above.

As the α-olefin-based resin having no chemical-bond cross-linking moiety, preferably used is a resin that neither contains any functional group (for example, a hydroxy group, a carbonyl group, a carboxyl group, a thiol group, an amide group, or an amino group) capable of forming a cross-linking point by chemical bonding, nor contains a bonding moiety in which polymer chains are directly cross-linked (such as a cross-linking moiety by a covalent bond). Moreover, such an α-olefin-based resin having no chemical-bond cross-linking moiety is a polymer that does not have at least any of the aforementioned side chain (a), side chain (a'), side chain (b), side chain (c), and the like.

Then, the "α-olefin-based resin" mentioned herein is an α-olefin homopolymer or an α-olefin copolymer. The "α-olefin" mentioned herein is an alkene containing a carbon-carbon double bond at the α position (alkene containing a carbon-carbon double bond at the terminal: note that such an alkene may be a linear or branched chain, and preferably has 2 to 20 carbon atoms (more preferably 2 to 10 carbon atoms). Examples thereof include ethylene, propylene, 1-butene, 1-pentene, 1-hexene, 1-heptene, 1-octene, 1-nonene, 1-decene, and the like.

The α-olefin-based resin having no chemical-bond cross-linking moiety may be any polymer of α-olefin (ploy-α-olefin: which may be a homopolymer or a copolymer) . Examples thereof include, but are not particularly limited to, polyethylene, polypropylene, ethylene-propylene copolymer, ethylene-butene copolymer, propylene-ethylene-butene copolymer, and the like. Among the α-olefin-based resins having no chemical-bond cross-linking moiety, polypropylene, polyethylene, and ethylene-propylene copolymer are preferable from the viewpoint of compatibility with the base elastomer. Incidentally, one of these α-olefin-based resins having no chemical-bond cross-linking moiety may be used alone or two or more thereof may be used in combination.

In the α-olefin-based resin having no chemical-bond cross-linking moiety, the degree of crystallinity is preferably 10% or more, more preferably 10 to 80%, and further preferably 10 to 75%. If the degree of crystallinity is less than the lower limit, the resinous properties are so weak that it tends to be difficult to enhance the levels of mechanical properties and flowability. Meanwhile, if the degree of crystallinity exceeds the upper limit, the resinous properties are so strong that it tends to be difficult to exhibit the mechanical properties at higher levels in a well-balanced manner. Here, the degree of crystallinity can be obtained in such a way that diffraction peaks are measured by using an X-ray diffraction instrument (for example, one manufactured by Rigaku Corporation under the trade name "MiniFlex 300") as a measurement instrument and an integral ratio between the scattering peaks derived from crystalline and amorphous structures is calculated.

In addition, in the α-olefin-based resin having no chemical-bond cross-linking moiety, the melt flowrate (MFR) at 190°C under a load of 2.16 kg, which is measured according to JIS K6922-2 (published in 2010), is preferably 40 g/10 min or more. If the melt flowrate (MFR) is less than the lower limit, the α-olefin-based resin tends to have difficulty in

improving the flowability even when blended in the composition. Here, the melt flowrate (MFR) is a value measured according to the B method described in JIS K6922-2 (published in 2010) and can be obtained by using, as a melt flowrate measurement instrument, an instrument manufactured by Toyo Seiki Seisaku-sho, Ltd. under the trade name "Melt Indexer G-01". Specifically, 3 g of the α-olefin-based resin is added to the furnace of the instrument, is heated to a temperature of 190°C, and then is left for 5 minutes at 190°C. Thereafter, under the conditions of the temperature kept at 190°C and a load of 2.16 kg, a mass (g) of the elastomer is measured, as the melt flowrate, which flows out for 10 minutes from an opening of the tubular orifice member having a diameter of 1 mm and a length of 8 mm, and connected to a lower portion of the furnace (the resin is left for 5 minutes at temperature of 190°C in the furnace, and then the measurement of the mass of the elastomer flowing out is started after the start of the load application).

Moreover, the weight average molecular weight (Mw) of the α-olefin-based resin having no chemical-bond cross-linking moiety is preferably 10,000 to 2,000,000, both inclusive, more preferably 30,000 to 1,500,000, both inclusive, and further preferably 50,000 to 1,250,000, both inclusive. If the weight average molecular weight is less than the lower limit, the mechanical strength tends to decrease. Meanwhile, if the weight average molecular weight exceeds the upper limit, the compatibility with the elastomer component decreases so much that phase separation tends to easily occur.

In addition, the number average molecular weight (Mn) of the α-olefin-based resin having no chemical-bond cross-linking moiety is preferably 10,000 to 2,000,000, both inclusive, more preferably 30,000 to 1,500,000, both inclusive, and further preferably 50,000 to 1,250,000, both inclusive. If the number average molecular weight is less than the lower limit, the mechanical strength tends to decrease. Meanwhile, if the number average molecular weight exceeds the upper limit, the compatibility with the elastomer component tends to decrease so much that phase separation tends to easily occur.

In addition, the polydispersity index (Mw/Mn) of the α-olefin-based resin having no chemical-bond cross-linking moiety is preferably 10 or less, and more preferably 1.0 to 5. If the value exceeds the upper limit, the compatibility with the elastomer component tends to decrease.

The aforementioned weight average molecular weight (Mw), number average molecular weight (Mn) and polydispersity index (Mw/Mn) of the α-olefin-based resin can be determined by what is termed gel permeation chromatography (GPC). Then, "Prominence GPC system" manufactured by Shimadzu Corporation can be used for a specific instrument and conditions for measuring such molecular weights and so on.

The glass-transition point of the α-olefin-based resin having no chemical-bond cross-linking moiety is preferably -150 to 5°C, and more preferably -125 to 0°C. If the glass-transition point is less than the lower limit, the melting point is so low that the heat resistance tends to decrease. Meanwhile, if the glass-transition point exceeds the upper limit, the rubber elasticity of the elastomer component blended with the α-olefin-based resin tends to decrease. The "glass-transition point" mentioned herein is a glass-transition point measured by differential scanning calorimetry (DSC) as described above. In such DSC measurement, it is preferable to set the rate of temperature rise at 10°C/min.

A method for producing the α-olefin-based resin having no chemical-bond cross-linking moiety is not particularly limited, but any publicly known method can be employed as appropriate. As such an α-olefin-based resin, a commercially available product may be used, and products usable as appropriate are, for example: manufactured by Mitsui Chemicals, Inc. under the trade names "TAFMER" and "HI-ZEX MILLION"; manufactured by Japan Polyethylene Corporation under the trade names NOVATEC series of "NOVATEC HD", " NOVATEC LD", " NOVATEC LL", "KERNEL", "HARMOREX" and REXPEAR series of "REXPEAR ET", "REXPEAR EMA", and "REXPEAR EEA"; manufactured by Prime Polymer Co., Ltd. under the trade names "HI-NEX", "NEO-ZEX", "ULTZEX", "Evolue", "Prime Polypro", "POLY FINE", "MOSTRON L", and "PRIME TPO"; PP manufactured by SunAllomer Ltd.; PE manufacture by Asahi Kasei Chemicals Corporation; PE manufactured by Ube Maruzen Polyethylene Co., Ltd.; PE and PP manufacture by Sumitomo Chemical Company, Limited; PE manufactured by Tosoh Corporation; PP manufactured by Japan Polypropylene Corporation; and the like.

When the composition for foam of the present invention further contains the α-olefin-based resin having no chemical-bond cross-linking moiety, the amount of the contained α-olefin-based resin having no chemical-bond cross-linking moiety (content ratio) is preferably 500 parts by mass or less, more preferably 5 to 500 parts by mass, further preferably 10 to 400 parts by mass, particularly preferably 25 to 350 parts by mass, and most preferably 35 to 300 parts by mass relative to 100 parts by mass of the elastomer component. If the amount of the contained α-olefin-based resin having no chemical-bond cross-linking moiety is less than the lower limit, the flowability tends to decrease. Meanwhile, if the amount of the α-olefin-based resin contained exceeds the upper limit, the mechanical properties (tensile strength at break and compression set) tend to decrease.

When the composition for foam of the present invention further contains the α-olefin-based resin having no chemical-bond cross-linking moiety, the amount of the contained α-olefin-based resin having no chemical-bond cross-linking moiety is preferably 1 to 50% by mass, more preferably 3 to 45% by mass, and further preferably 5 to 40% by mass relative to the total amount of the composition for foam. If the amount of the contained α-olefin-based resin having no chemical-bond cross-linking moiety is less than the lower limit, the flowability tends to decrease. Meanwhile, if the amount of the α-olefin-based resin contained exceeds the upper limit, the mechanical properties (tensile strength at break and compression set) tend to decrease.

Meanwhile, as the styrene block copolymer having no chemical-bond cross-linking moiety, preferably used is a resin that neither contains any functional group (for example, a hydroxy group, a carbonyl group, a carboxyl group, a thiol group, an amide group, or an amino group) capable of forming a cross-linking point by chemical bonding, nor contains a bonding moiety in which polymer chains are directly cross-linked (such as a cross-linking moiety by a covalent bond). Moreover, such a styrene block copolymer having no chemical-bond cross-linking moiety is a polymer that does not have at least any of the aforementioned side chain (a), side chain (a'), side chain (b), side chain (c), and the like.

Then, the "styrene block copolymer" mentioned herein may be a polymer having a styrene block structure in any moiety. In general, the styrene block copolymer has a styrene block structure. Moieties of the styrene block structures are flocculated to form physically cross-linking points (physically pseudo-cross-linking points) at normal temperature, and the physically pseudo-cross-linking points decompose when heated. Based on these properties, the styrene block copolymer is usable as a thermoplastic substance having rubber-like properties (such as elasticity) at normal temperature.

The present inventors speculate that, in a case where such a styrene block copolymer is used, the composition for foam of the present invention and a foam obtained by using the same can have higher levels of properties for the following reasons. Specifically, the styrene block copolymer basically does not interfere with the cross-linking structure of the base elastomeric polymer (the above-mentioned elastomer component) or the cross-linking reaction during production, and thus does not damage the physical properties peculiar to the structure of the base elastomer cross-linked before and after foaming. Hence, it is possible to sufficiently maintain the properties stemming from the elastomer component and to reflect (impart) the excellent mechanical properties stemming from the styrene block copolymer (in particular, the tensile properties, compression set, and so on) to the composition for foam of the present invention and the foam obtained by using the same. Thus, a styrene block copolymer having no chemical-bond cross-linking moiety can be preferable used as the additive component (another component: an additive) further contained in the composition for foam of the present invention from the viewpoint that the styrene block copolymer is a component that does not interfere with the cross-linking reaction of the base elastomer as discussed above.

From the viewpoint that the rubber elasticity and thermoplasticity before and after foaming can be both achieved, preferable copolymers as the styrene block copolymer having no chemical-bond cross-linking moiety include a styrene-isoprene-styrene block copolymer (SIS), a styrene-ethylene-propylene-styrene block copolymer (SEPS), styrene-ethylene-ethylene-propylene-styrene block copolymer (SEEPS), a styrene-butadiene-styrene block copolymer (SBS), a styrene-ethylene-butylene-styrene block copolymer (SEBS), a styrene-isoprene-butadiene-styrene block copolymer (SIBS), and products thereof generated by addition of hydrogen (so-called hydrogenated products). Among them, SEBS and SEEPS are more preferable. One of these styrene block copolymers may be used alone, or two or more thereof may be used in combination.

Then, as the styrene block copolymer having no chemical-bond cross-linking moiety, a styrene block copolymer is preferable in which the styrene content is 15 to 55% by mass (more preferably, 20 to 40% by mass). If the styrene content is less than the lower limit, the mechanical strength tends to decrease due to a decrease in the styrene block component. Meanwhile, if the styrene content exceeds the upper limit, the rubber elasticity tends to decrease due to a decrease in the olefin component. Here, the styrene content in the styrene block styrene block copolymer can be measured by a method in accordance with the IR method described in JIS K6239 (published in 2007) .

Moreover, the weight average molecular weight (Mw) of the styrene block copolymer having no chemical-bond cross-linking moiety is preferably 200,000 to 700,000, both inclusive, more preferably 300,000 to 600,000, both inclusive, and further preferably 350,000 to 550,000, both inclusive. If the weight average molecular weight is less than the lower limit, the heat resistance tends to decrease. Meanwhile, if the weight average molecular weight exceeds the upper limit, the miscibility with the elastomeric polymer tends to decrease.

Further, the number average molecular weight (Mn) of the styrene block copolymer having no chemical-bond cross-linking moiety is preferably 100,000 to 600,000, both inclusive, more preferably 150,000 to 550,000, both inclusive, and further preferably 200,000 to 500,000, both inclusive. If the number average molecular weight is less than the lower limit, the heat resistance tends to decrease. Meanwhile, if the number average molecular weight exceeds the upper limit, the miscibility with the elastomeric polymer (the aforementioned elastomer component) tends to decrease.

In addition, the polydispersity index (Mw/Mn) of the styrene block copolymer having no chemical-bond cross-linking moiety is preferably 5 or less, and more preferably 1 to 3. Here, these weight average molecular weight (Mw), number average molecular weight (Mn), and polydispersity index (Mw/Mn) can be determined by what is termed gel permeation chromatography (GPC). Then, "Prominence GPC system" manufactured by Shimadzu Corporation can be used for a specific instrument and conditions for measuring such molecular weights and so on.

Further, the glass-transition point of the styrene block copolymer having no chemical-bond cross-linking moiety is preferably -80 to 10°C, and more preferably -70 to 0°C. If the glass-transition point exceeds the upper limit, the rubber elasticity tends to decrease. Here, the "glass-transition point" mentioned herein is a glass-transition point measured by differential scanning calorimetry (DSC) as described above. In such DSC measurement, it is preferable to set the rate of temperature rise at 10°C/min.

A method for producing the styrene block copolymer having no chemical-bond cross-linking moiety is not

particularly limited, but any known method can be employed as appropriate. As such a styrene block copolymer, a commercially available product may be used, and it is possible to use, as appropriate, any of copolymers: manufactured by Kraton Corporation under the trade names of "G1633", "G1640", "G1641", "G1642", "G1643", "G1645", "G1650", "G1651", "G1652", "G1654", "G1657", and "G1660"; manufactured by KURARAY CO., LTD. under the trade names of "S4055", "S4077", "S4099", "S8006", "S4044", "S8006", "S4033", "S8004", "S8007", and "S8076"; manufactured by Asahi Kasei Corporation under the trade names of "Tuftec H1041", "Tuftec N504", "Tuftec H1272", "Tuftec M1911", "Tuftec M1913", and "Tuftec MP10"; and manufactured by ARONKASEI CO., LTD. under the trade names of "AR-710", "AR-720", "AR-731", "AR-741", "AR-750", "AR-760", "AR-770", "AR-781", and "AR-791"; and the like, for example.

Then, when the composition for foam of the present invention further contains the styrene block copolymer having no chemical-bond cross-linking moiety, the amount of the contained styrene block copolymer having no chemical-bond cross-linking moiety (content ratio) is preferably 10 to 400 or less parts by mass, more preferably 15 to 350 parts by mass, further preferably 20 to 300 parts by mass, and particularly preferably 30 to 250 parts by mass relative to 100 parts by mass of the elastomer component. If the amount of the contained styrene block copolymer having no chemical-bond cross-linking moiety is less than the lower limit, the amount of the contained styrene block copolymer having no chemical-bond cross-linking moiety is so small that the sufficient effects tend not to be obtained particularly in the flowability and the processability. Meanwhile, if the amount of the styrene block copolymer contained exceeds the upper limit, the properties peculiar to the base structure of the cross-linked elastomer (the aforementioned properties stemming from the elastomer component) tend to be weak.

Moreover, when the composition for foam of the present invention further contains the styrene block copolymer having no chemical-bond cross-linking moiety, the amount of the contained styrene block copolymer having no chemical-bond cross-linking moiety is preferably 5 to 60% by mass, more preferably 7 to 50% by mass, and further preferably 10 to 40% by mass relative to the total amount of the composition for foam. If the amount of the contained styrene block copolymer having no chemical-bond cross-linking moiety is less than the lower limit, the amount of the styrene block copolymer contained is so small that a plasticizer such as an oil cannot be contained and accordingly the sufficient effects tend not to be obtained in the flowability and the processability, in particular. Meanwhile, if the amount of the styrene block copolymer contained exceeds the upper limit, the properties peculiar to the base structure of the cross-linked elastomer (the aforementioned properties stemming from the elastomer component) tend to be weak.

In this connection, it is preferable to use a paraffin oil from the viewpoint that the flowability can be more improved without deteriorating the various physical properties. Note that, in the case of using the paraffin oil in combination with the aforementioned styrene block polymer, it is possible to cause the block polymer to absorb the oil component, so that processability improvement (flowability enhancement) by the oil addition and enhancement in the mechanical properties by the addition of the styrene-based block polymer can be both achieved at sufficiently high levels. This leads to higher levels of production processability such as extrusion processability and injection moldability while more sufficiently maintaining the mechanical properties and the heat resistance. Such a paraffin oil is not particularly limited, but any known paraffin oil may be used as appropriate.

Then, such a paraffin oil is preferably such that, when the paraffin oil is measured by correlation ring analysis (n-d-M ring analysis) according to ASTM D3238-85 to obtain a percentage of the number of paraffin's carbon atoms to the total number of carbon atoms (paraffin part: $C_P$), a percentage of the number of naphthene's carbon atoms to the total number of carbon atoms (naphthene part: $C_N$), and a percentage of the number of aromatic carbon atoms to the total number of carbon atoms (aromatic part: $C_A$), the paraffin oil has 60% or more as the percentage ($C_P$) of the number of paraffin's carbon atoms to the total number of carbon atoms.

Moreover, the paraffin oil is preferably such that a kinematic viscosity at 40°C measured according to JIS K 2283 (published in 2000) is 10 $mm^2/s$ to 700 $mm^2/s$. As for the numeric value range of the kinematic viscosity of 10 $mm^2/s$ to 700 $mm^2/s$, the lower limit value is more preferably 20 $mm^2/s$ (much more preferably 30 $mm^2/s$, further preferably 50 $mm^2/s$, particularly preferably 150 $mm^2/s$, and most preferably 300 $mm^2/s$). Meanwhile, the upper limit value of the numeric value range of the kinematic viscosity is more preferably 600 $mm^2/s$ (much more preferably 500 $mm^2/s$). In other words, in the paraffin oil, a kinematic viscosity at 40°C measured according to JIS K 2283 (published in 2000) is preferably 50 $mm^2/s$ to 700 $mm^2/s$, more preferably 150 to 600 $mm^2/s$, and further preferably 300 to 500 $mm^2/s$. If the kinematic viscosity (v) is less than the lower limit, oil bleeding tends to occur. Meanwhile, if the kinematic viscosity (v) exceeds the upper limit, sufficient flowability tends not to be imparted. As the kinematic viscosity of the paraffin oil, employed is a value which is measured under a temperature condition of 40°C according to JIS K 2283 (published in 2000). For example, a value may be employed which is automatically measured under a temperature condition of 40°C by using a Cannon-Fenske Viscometer (for example, one manufactured by SIBATA SCIENTIFIC TECHNOLOGY LTD. under the trade name "SO series") in conformity with JIS K 2283 (published in 2000).

Further, in the paraffin oil, an aniline point measured by a U-tube method according to JIS K 2256 (published in 2013) is preferably 80°C to 145°C, more preferably 100 to 145°C, and further preferably 105 to 145°C. As the aniline point of the paraffin oil, employed is a value which is measured by the U-tube method according to JIS K 2256 (published in 2013). For example, a value may be employed which is measured by using, for example, an aniline point tester (for

example, one manufactured by Tanaka Scientific Limited, under the trade name "aap-6") in conformity with JIS K 2256 (published in 2013).

Then, as the paraffin oil, any commercially available paraffin oil can be used as appropriate. Examples thereof usable as appropriate include oils manufactured by JXTG Nippon Oil & Energy Corporation under the trade names of "Super Oil M Series P200", "Super Oil M Series P400", and "Super Oil M Series P500S"; oils manufactured by Idemitsu Kosan Co., Ltd. under the trade names of "Diana Process Oil PW90", "Diana Process Oil PW150", and "Diana Process Oil PW380"; oils manufactured by JAPAN SUN OIL COMPANY, LTD. under the trade names of "SUNPAR series" (110, 115, 120, 130, 150, 2100, 2280, and so on) ; oils manufactured by Exxon Mobil Corporation under the trade names of "Gargoyle Arctic series (1010, 1022, 1032, 1046, 1068, 1100, and so on)"; and the like.

When the paraffin oil is further contained in the composition for foam of the present invention, the amount of the paraffin oil contained is preferably 10 to 600 parts by mass, more preferably 50 to 550 parts by mass, further preferably 75 to 500 parts by mass, and particularly preferably from 100 to 400 parts by mass relative to 100 parts by mass of the elastomer component. If the amount of the paraffin oil contained is less than the lower limit, the amount of the paraffin oil contained is so small that the effects that can be obtained by the addition of the paraffin oil (in particular, the effects of enhancing the flowability and the processability) tend to be insufficient in some cases. Meanwhile, if the amount of the paraffin oil contained exceeds the upper limit, bleeding of the paraffin oil tends to be induced easily.

When the paraffin oil is further contained in the composition for foam of the present invention, the amount of the paraffin oil contained is preferably 20 to 80% by mass, more preferably 25 to 70% by mass, and further preferably 30 to 60% by mass relative to the total amount of the composition for foam. If the amount of the paraffin oil contained is less than the lower limit, the amount of the paraffin oil contained is so small that sufficient effects tend not to be obtained in the flowability and the processability, in particular. Meanwhile, if the amount of the paraffin oil contained exceeds the upper limit, bleeding of the paraffin oil tends to be induced easily.

In the present invention, from the viewpoints of improvements in the flowability and the mechanical properties, it is preferable to contain, as the additives, both the paraffin oil and the styrene block copolymer having no chemical-bond cross-linking moiety in combination. More preferably, the composition for foam of the present invention is one comprising the elastomer component, the organically modified clay, the foaming agent, the $\alpha$-olefin-based resin having no chemical-bond cross-linking moiety, the paraffin oil, and the styrene block copolymer having no chemical-bond cross-linking moiety.

Comprising the elastomer component, the organically modified clay, the foaming agent, the $\alpha$-olefin-based resin, the paraffin oil, and the styrene block copolymer as described above, the composition for foam tends to be capable of exhibiting the higher levels of properties such as heat resistance, tensile strength at break, and further resistance to compression set in a well-balanced manner. Although it is not exactly clear why such effects can be achieved, the present inventors speculate as follows. Specifically, first, when the paraffin oil and the styrene block copolymer are used in combination, the paraffin oil is sufficiently uniformly dispersed in the system containing the styrene block copolymer because of sufficiently high compatibility between them. Moreover, since the styrene block copolymer and the $\alpha$-olefin-based resin have high compatibility therebetween, they are uniformly dispersed in the system. Further, in the system containing the styrene block copolymer and the $\alpha$-olefin-based resin, the elastomer component has high compatibility with both of them. Accordingly, the elastomer component and the foaming agent are also sufficiently uniformly dispersed in the composition. Since the elastomer component and the organically modified clay interact with each other to form plane cross-linking as described above, the organically modified clay is also present in a state sufficiently dispersed along with the dispersion of the elastomer component. Thus, when the elastomer component, the organically modified clay, the foaming agent, the $\alpha$-olefin-based resin, the paraffin oil, and the styrene block copolymer are contained, all the components are contained in the states sufficiently dispersed. For this reason, the state of the elastomer component which strongly influences the properties of the composition for foam and a foam obtained by using the same is that the elastomer component is sufficiently dispersed in a state interacting with the clay (forming strong bonds by plane cross-linking), which makes it possible to exhibit the higher levels of mechanical strength and heat resistance in a well-balanced manner. Further, the $\alpha$-olefin-based resin and the paraffin oil, which are components strongly influencing the flowability of the composition, are also sufficiently dispersed, so that the higher level of flowability (the flowability under heating) can be achieved. Still further, the mechanical strength can be adjusted by an amount of the styrene block copolymer added, and thus the styrene block copolymer enables the composition for foam to be adjusted to have desired mechanical physical properties. Therefore, the present inventors speculate that in the case of containing the elastomer component, the clay, the $\alpha$-olefin-based resin, the paraffin oil, and the styrene block copolymer, it is possible to obtain the effects of exhibiting the higher levels of properties such as the heat resistance, the tensile strength at break, and further the resistance to compression set in a well-balanced manner.

Examples of the reinforcing agents (bulking agents) usable as the additives in the composition for foam of the present invention include carbon black, silica, calcium carbonate, and the like. It is preferable to use: thermal carbon black, acetylene decomposition carbon black, contact carbon black, lamp/soot carbon black, gas furnace carbon black, or oil furnace carbon black as the carbon black; wet silica as the silica; and light calcium carbonate or heavy calcium

carbonate as the calcium carbonate.

As the anti-aging agents usable as the additives, for example, compounds can be used as appropriate such as hindered phenol-based compounds and aliphatic and aromatic hindered amine-based compounds. In addition, as the antioxidants, for example, butylhydroxytoluene (BHT), butylhydroxyanisole (BHA), and the like can be used as appropriate. Meanwhile, as the pigments, for example, inorganic pigments such as titanium dioxide, zinc oxide, ultramarine, red iron oxide, lithopone, lead, cadmium, iron, cobalt, aluminum, hydrochloric acid salts, and sulfuric acid salts; organic pigments such as azo pigments and copper phthalocyanine pigments; and the like can be used as appropriate. Meanwhile, as the plasticizers, for example, derivatives of benzoic acid, phthalic acid, trimellitic acid, pyromellitic acid, adipic acid, sebacic acid, fumaric acid, maleic acid, itaconic acid, citric acid, and the like, as well as polyester-, polyether-, and epoxy-based plasticizers, and the like can be used as appropriate. As the plasticizers (softening agents), plasticizers usable for the composition for foam using the thermoplastic elastomer can be used as appropriate from the viewpoint of further improving the flowability, and oils can be used, for example. Note that, as the additives and the like, those listed as examples in Japanese Unexamined Patent Application Publication No. 2006-131663 may also be used, as appropriate.

Note that when the composition for foam of the present invention contains additional components (for example, the above-described additives or the like) other than the elastomer component, the organically modified clay, the foaming agent, the $\alpha$-olefin-based resin having no chemical-bond cross-linking moiety, the paraffin oil, and the styrene block copolymer having no chemical-bond cross-linking moiety, the amounts of the additional components contained are not particularly limited. When the additional components are a polymer and a reinforcing material (bulking agent), the amount of each of them is preferably 500 parts by mass or less, and more preferably 20 to 300 parts by mass relative to 100 parts by mass of the elastomer component. If the amount of the additional component contained is less than the lower limit, the effects obtained by use of the additional component tend not to be exhibited sufficiently. Meanwhile, if the amount of the additional component contained exceeds the upper limit, the effects of the elastomer serving as a substrate tend to be less influential, so that physical properties tend to deteriorate, although it depends on the type of the component used.

In addition, when the above-described additional components are components other than the polymer and the reinforcing material (bulking agent), the amount of each of the additional components contained is preferably 20 parts by mass or less, and more preferably 0.1 to 10 parts by mass relative to 100 parts by mass of the elastomer component. If the amount of the additional component contained is less than the lower limit, the effects obtained by use of the additional component tend not to be exhibited sufficiently. Meanwhile, if the amount of the additional component contained exceeds the upper limit, the additional component adversely affects the reaction of the elastomer serving as a substrate, so that the physical properties tend to deteriorate rather.

When the composition for foam of the present invention is heated (for example, heated to 100 to 250°C), the composition for foam softens due to phenomena such as dissociation of hydrogen bonds formed at the hydrogen-bond cross-linkable moieties and other cross-linking structures (such as physical cross-linkages in the case where a styrene block copolymer is contained), so that the flowability can be imparted to the composition for foam. This seems to be mainly because the heating weakens the interaction (interaction mainly by hydrogen bonds) between side chains formed intermolecularly and intramolecularly. Note that an elastomer component containing at least a hydrogen-bond cross-linkable moiety in a side chain is contained in the present invention. Owing to the above feature and so on, when the composition for foam is left after the flowability is imparted by the heating, the dissociated hydrogen bonds again form the bonds to harden the composition for foam. Hence, it is also possible to cause the composition for foam and a foam obtained by using the same to express recyclability more efficiently depending on the constitution.

Further, in the composition for foam of the present invention, a 5% weight loss temperature is preferably 320°C or above, and more preferably 325°C or above. If the 5% weight loss temperature is less than the lower limit, the heat resistance tends to be poor. Here, the 5% weight loss temperature can be obtained by: preparing 10 mg of a composition for foam as a measurement sample; using a thermogravimetric analyzer (TGA) as a measurement instrument to heat the measurement sample at a rate of temperature rise of 10°C/min; and measuring a temperature at which the weight loss reaches 5% of the initial weight.

The composition for foam of the present invention is capable of exhibiting a sufficiently high level of tensile stress and sufficiently high heat resistance even after foaming. Note that it is possible to cause the composition for foam to exhibit properties required depending on an application (for example, properties such as a self-repairing property and/or resistance to compression set) as appropriate, by changing the constitution as appropriate. In other words, the composition for foam of the present invention is capable of exhibiting a sufficiently high level of tensile stress and sufficiently high heat resistance and additionally exhibiting sufficient resistance to compression set and/or sufficient self-repairing property according to the constitution. Thus, properties required depending on an application of the composition for foam can be exhibited as appropriate in a further well-balanced manner by changing the constitution as appropriate. Hence, in a case of using the composition for foam for any of various applications, it is preferable to use the composition for foam with the types of components (constitution) in the composition changed as appropriate in consideration of the

properties required depending on the application.

Hereinabove, the composition for foam of the present invention is described. The following description is provided for a method for producing a composition for foam of the present invention, which can be preferably used as a method for producing the above-described composition for foam of the present invention.

[Method for Producing Composition for Foam]

A method for producing a composition for foam of the present invention comprises:

a first step of mixing an organically modified clay into an elastomeric polymer having a cyclic acid anhydride group in a side chain to obtain a mixture; and
a second step of adding, to the mixture, at least one raw material compound of a compound (I) that forms a hydrogen-bond cross-linkable moiety upon a reaction with the cyclic acid anhydride group, and a mixed raw material of the compound (I) with a compound (II) that forms a covalent-bond cross-linking moiety upon a reaction with the cyclic acid anhydride group, to allow a reaction to proceed between the polymer and the raw material compound, thereby obtaining a thermoplastic elastomer composition; and
a third step of adding a foaming agent to the thermoplastic elastomer composition to obtain a composition for foam, wherein

the composition for foam is a composition comprising:

at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below;
the organically modified clay; and
the foaming agent,
in the first step, the organically modified clay is mixed into the elastomeric polymer having a cyclic acid anhydride group in a side chain at such a ratio that the amount of the organically modified clay contained in the composition for foam is 20 parts by mass or less relative to 100 parts by mass of the elastomer component. The first step, the second step, and the third step are described separately below. Note that, in the present invention, the first, second and third steps may be performed sequentially. Instead, the first, second and third steps may be performed simultaneously. Alternatively, it is possible to perform the second and third steps simultaneously after performing the first step. Otherwise, it is possible to perform the third step after performing the first and second steps simultaneously.

(First Step)

The first step is a step of mixing an organically modified clay into an elastomeric polymer having a cyclic acid anhydride group in a side chain to obtain a mixture.

Here, the "elastomeric polymer having a cyclic acid anhydride group in a side chain" refers to an elastomeric polymer in which a cyclic acid anhydride group is chemically stably bonded (covalently bonded) to an atom forming the main chain of the polymer. For example, it is preferable to use a product obtained by a reaction of a polymer that can form a main chain portion of the elastomeric polymer (A) or (B) with a compound capable of introducing a cyclic acid anhydride group.

Note that the polymer that can form a main chain portion is not particularly limited, as long as the polymer is generally a natural polymer or synthetic polymer having a glass-transition point of room temperature (25°C) or lower (as long as the polymer is a so-called elastomer).

Examples of the polymers that can form the main chain portions of the elastomeric polymers (A) and (B) include diene-based rubbers such as natural rubber (NR), isoprene rubber (IR), butadiene rubber (BR), 1,2-butadiene rubber, styrene-butadiene rubber (SBR), acrylonitrile-butadiene rubber (NBR), chloroprene rubber (CR), butyl rubber (IIR), and ethylene-propylene-diene rubber (EPDM), and hydrogenated products thereof; olefin-based rubbers such as ethylene-propylene rubber (EPM), ethylene-acrylic rubber (AEM), ethylene-butene rubber (EBM), chlorosulfonated polyethylene, acrylic rubber, fluororubber, polyethylene rubber, and polypropylene rubber; epichlorohydrin rubber; polysulfide rubber; silicone rubber; urethane rubber; and the like.

In addition, the polymer that can form the main chain portion of the elastomeric polymer (A) or (B) may also be an elastomeric polymer containing a resin component, and examples thereof include optionally hydrogenated polystyrene-based elastomeric polymers (for example, SBS, SIS, SEBS, and the like), polyolefin-based elastomeric polymers,

polyvinyl chloride-based elastomeric polymers, polyurethane-based elastomeric polymers, polyester-based elastomeric polymers, polyamide-based elastomeric polymers, and the like.

Moreover, the polymer that can form the main chain portion of the elastomeric polymer (A) or (B) preferably comprises at least one selected from diene-based rubbers, hydrogenated products of diene-based rubbers, olefin-based rubbers, optionally hydrogenated polystyrene-based elastomeric polymers, polyolefin-based elastomeric polymers, polyvinyl chloride-based elastomeric polymers, polyurethane-based elastomeric polymers, polyester-based elastomeric polymers, and polyamide-based elastomeric polymers. In addition, the polymer is preferably a diene-based rubber from the viewpoints of the ease of introduction of a maleic anhydride group preferred as the cyclic acid anhydride group, and the like, and is preferably an olefin-based rubber from the viewpoint of anti-ageing properties.

Meanwhile, examples of the compound capable of introducing a cyclic acid anhydride group include cyclic acid anhydrides such as succinic anhydride, maleic anhydride, glutaric anhydride, phthalic anhydride, and derivatives thereof.

In addition, the cyclic acid anhydride group of the elastomeric polymer having a cyclic acid anhydride group in a side chain used in the first step is preferably a succinic anhydride group, a maleic anhydride group, a glutaric anhydride group, or a phthalic anhydride group. Especially, a maleic anhydride group is more preferable, from the viewpoints that the raw material has high reactivity and further the raw material is industrially readily available.

Moreover, the elastomeric polymer having a cyclic acid anhydride group in a side chain used in the first step may be produced by a commonly used method, for example, by a method of graft polymerization of a cyclic acid anhydride onto a polymer that can form the main chain portion of the elastomeric polymer (A) or (B) under commonly employed conditions, for example, by stirring under heating or the like. In addition, it is also possible to use a commercially available product as the elastomeric polymer having a cyclic acid anhydride group in a side chain used in the first step.

Examples of commercially available products of the elastomeric polymer having a cyclic acid anhydride group in a side chain include maleic anhydride-modified isoprene rubbers such as LIR-403 (manufactured by KURARAY CO., LTD.) and LIR-410A (prototype provided by KURARAY CO., LTD.); modified isoprene rubbers such as LIR-410 (manufactured by KURARAY CO., LTD.); carboxy-modified nitrile rubbers such as Krynac 110, 221, and 231 (manufactured by Polysar Rubber Corporation); carboxy-modified polybutenes such as CPIB (manufactured by Nippon Petrochemicals Co., Ltd.) and HRPIB (prototype provided by the laboratory of Nippon Petrochemicals Co., Ltd.); maleic anhydride-modified ethylene-propylene rubbers such as Nucrel (manufactured by DUPONT-MITSUI POLYCHEMICALS CO., LTD), Yukaron (manufactured by Mitsubishi Chemical Corporation), TAFMER M (for example, MP0610 (manufactured by Mitsui Chemicals, Inc.), and MP0620 (manufactured by Mitsui Chemicals, Inc.)); maleic anhydride-modified ethylene-butene rubbers such as TAFMER M (for example, MA8510, MH7010, MH7020 (manufactured by Mitsui Chemicals, Inc.), MH5010, MH5020 (manufactured by Mitsui Chemicals, Inc.), and MH5040 (manufactured by Mitsui Chemicals, Inc.)); maleic anhydride-modified polyethylenes such as Adtex series (maleic anhydride-modified EVA, maleic anhydride-modified EMA (manufactured by Japan Polypropylene Corporation)), HPR series (maleic anhydride-modified EEA, maleic anhydride-modified EVA (manufactured by DuPont-Mitsui Polyolefin)), Bondfast series (maleic anhydride-modified EMA (manufactured by Sumitomo Chemical Company, Limited)), Dumilan series (maleic anhydride-modified EVOH (manufactured by Takeda Pharmaceutical Company Limited)), Bondine (ethylene-acrylic acid ester-maleic anhydride ternary copolymer (manufactured by ATOFINA)), Tuftec (maleic anhydride-modified SEBS, M1943 (manufactured by Asahi Kasei Corporation)), Kraton (maleic anhydride-modified SEBS, FG1901 and FG1924 (manufactured by Kraton Polymers)), Tufprene (maleic anhydride-modified SBS, 912 (manufactured by Asahi Kasei Corporation)), Septon (maleic anhydride-modified SEPS (manufactured by KURARAY CO., LTD.)), REXPEARL ET (maleic anhydride-modified EEA, ET-182G, 224M, and 234M (manufactured by Japan Polypropylene Corporation)), Auroren (maleic anhydride-modified EVA, 200S and 250S (manufactured by NIPPON PAPER Chemicals CO., LTD.)), and MODIC (manufactured by Mitsubishi Chemical Corporation); maleic anhydride-modified polypropylenes such as ADMER (for example, QB550 and LF128 (manufactured by Mitsui Chemicals, Inc.)); and the like.

In addition, the elastomeric polymer having a cyclic acid anhydride group in a side chain is preferably a maleic anhydride-modified elastomeric polymer. Such a maleic anhydride-modified elastomeric polymer is not particularly limited, but it is possible to use any publicly known maleic anhydride-modified elastomeric polymer such for example as a maleic anhydride-modified ethylene-propylene rubber, a maleic anhydride-modified ethylene-butene rubber, a maleic anhydride-modified isoprene rubber, maleic anhydride-modified polyethylene, and maleic anhydride-modified polypropylene. Among these elastomeric polymers each having a cyclic acid anhydride group in a side chain, a maleic anhydride-modified ethylene-propylene rubber or a maleic anhydride-modified ethylene-butene rubber is more preferable from the viewpoints of high molecular weight and high strength.

Moreover, as the organically modified clay used in the first step, the same organically modified clays as those described for the above-described composition for foam of the present invention (the preferable organically modified clays are also the same) can be used preferably.

In the first step, the organically modified clay is mixed into the elastomeric polymer having a cyclic acid anhydride group in a side chain to obtain the mixture. In this mixture preparation step, it is preferable to mix the clay into the elastomeric polymer having a cyclic acid anhydride group in a side chain at such a ratio that the amount of the organically

modified clay in the finally obtained composition for foam is 20 parts by mass or less (more preferably 0.01 to 10 parts by mass, further preferably 0.05 to 5 parts by mass, and particularly preferably 0.1 to 3 parts by mass) relative to 100 parts by mass of the elastomer component. If the amount of the organically modified clay contained exceeds the upper limit, the cross-linking is so strong that the elongation and the strength tend to decrease rather. Meanwhile, if the amount of the organically modified clay contained is less than the lower limit, the amount of the clay is so small that the effects obtained by the use of the clay tend to decrease.

In addition, the amount of the organically modified clay contained in the mixture is preferably 20 parts by mass or less, more preferably 0.01 to 5 parts by mass, and further preferably 0.05 to 3 parts by mass relative to 100 parts by mass of the elastomeric polymer having a cyclic acid anhydride group in a side chain. If the amount of the organically modified clay contained is less than the lower limit, the amount of the organically modified clay is so small that the effects obtained by using the organically modified clay tend to decrease. Meanwhile, if the amount of the organically modified clay contained exceeds the upper limit, the cross-linking is so strong that the elongation and the strength tend to decrease rather. Note that when the organically modified clay is contained in such an amount, the amount of the organically modified clay contained in the finally obtained composition for foam takes a value within the above-described range.

Moreover, as for the amount of the organically modified clay used for forming such a mixture, the organically modified clay is preferably contained at such a ratio that the amount of the organically modified clay is 0.001 g to 2.0 g (more preferably 0.002 to 1.0 g) relative to 1 mmol of the cyclic acid anhydride group in the elastomeric polymer having a cyclic acid anhydride group in a side chain. If the ratio of the organically modified clay to the acid anhydride group is less than the lower limit, the amount of the clay is so small that the effects tend to decrease. Meanwhile, if the ratio exceeds the upper limit, the cross-linking is so strong that the elongation and the strength tend to decrease rather. Note that when the organically modified clay is contained within such a range of ratio, the organically modified clay mixed into the mixture is efficiently delaminated into layers, so that the single-layered organically modified clay can be produced efficiently, and the dispersibility of the organically modified clay tends to be at a higher level.

Still further, in adding the organically modified clay to obtain the mixture, it is preferable to add the organically modified clay after the elastomeric polymer having a cyclic acid anhydride group in a side chain is plasticized in advance so that the organically modified clay can be dispersed sufficiently. Then, a method for plasticizing the elastomeric polymer having a cyclic acid anhydride group in a side chain as above is not particularly limited, but it is possible to employ, as appropriate, a kneading (mastication) method using rolls, a kneader, an extruder, an all-purpose mixer, or the like at temperature at which the elastomeric polymer can be plasticized (for example, about 100 to 250°C). The conditions such as temperature for plasticizing the elastomeric polymer having a cyclic acid anhydride group in a side chain are not particularly limited, but may be set, as appropriate, according to the type of the elastomeric polymer having a cyclic acid anhydride group in a side chain.

In the mixing for obtaining the mixture, the organically modified clay just has to be sufficiently dispersed. The method thereof is not limited to a particular one, but any publicly known method or the like can be employed as appropriate. For example, it is possible to employ a method of mixing with rolls, a kneader, an extruder, an all-purpose mixer, or the like.

Here, unless the object of the present invention is not impaired, the mixture may contain: an additional component(s) such as various kinds of additives including polymers other than the elastomer component, reinforcing agents (bulking agents), bulking agents to which amino groups are introduced (hereinafter, simply referred to as "amino group-introduced bulking agent"), amino group-containing compounds other than the amino group-introduced bulking agents, compounds containing metal elements (hereinafter, simply referred to as "metal salts"), maleic anhydride-modified polymers, anti-aging agents, antioxidants, pigments (dyes), plasticizers, thioxotropy-imparting agents, ultraviolet absorbers, flame retardants, solvents, surfactants (including leveling agents), dispersing agents, dehydrating agents, corrosion inhibitors, tackiness imparting agents, antistats, fillers, and the like. Here, these additives and the like are not particularly limited, but commonly used ones can be used as appropriate.

When the mixture contains the α-olefin-based resin (a-olefin-based resin having no chemical-bond cross-linking moiety) as the polymer other than the elastomer component, it is preferable to mix the elastomeric polymer having a cyclic acid anhydride group in a side chain, the organically modified clay, and the α-olefin-based resin by using the α-olefin-based resin at such a ratio that the amount of the α-olefin-based resin contained is 600 parts by mass or less (more preferably 5 to 550 parts by mass, further preferably 10 to 500 parts by mass, particularly preferably 25 to 450 parts by mass, and most preferably 35 to 400 parts by mass) relative to 100 parts by mass of the elastomer component. If the amount of the α-olefin-based resin contained exceeds the upper limit, the mechanical properties (tensile strength at break and compression set) tend to decrease. Meanwhile, if the amount of the α-olefin-based resin contained is less than the lower limit, the flowability tends to decrease.

The amount of the α-olefin-based resin contained in the mixture is preferably 600 parts by mass or less (more preferably 5 to 550 parts by mass, further preferably 10 to 500 parts by mass, particularly preferably 25 to 450 parts by mass, and most preferably 35 to 400 parts by mass) relative to 100 parts by mass of the elastomeric polymer having a cyclic acid anhydride group in a side chain. If the amount of the α-olefin-based resin contained is less than the lower limit, the mechanical properties (tensile strength at break and compression set) tend to decrease. Meanwhile, if the

amount of the α-olefin-based resin contained is less than the lower limit, the flowability tends to decrease.

Moreover, in the mixture preparation step, it is preferable to mix the elastomeric polymer having a cyclic acid anhydride group in a side chain, the organically modified clay, and the α-olefin-based resin by using the α-olefin-based resin at such a ratio that the amount of the α-olefin-based resin contained in the finally obtained composition for foam is 600 parts by mass or less (more preferably 5 to 550 parts by mass, further preferably 10 to 500 parts by mass, particularly preferably 25 to 450 parts by mass, and most preferably 35 to 400 parts by mass) relative to 100 parts by mass of the elastomer component. If the amount of the α-olefin-based resin contained exceeds the upper limit, the mechanical properties (tensile strength at break and compression set) tend to decrease. Meanwhile, if the amount of the α-olefin-based resin contained is less than the lower limit, the flowability tends to decrease.

When the mixture contains the paraffin oil, the amount of the paraffin oil contained is preferably 600 parts by mass or less, more preferably 10 to 600 parts by mass, further preferably 50 to 550 parts by weight, particularly preferably from 75 to 500 parts by weight, and most preferably 100 to 450 parts by weight relative to 100 parts by mass of the elastomer component. Meanwhile, when the mixture contains the styrene block copolymer having no chemical-bond cross-linking moiety, the amount of the styrene block copolymer contained is preferably 400 parts by mass or less, more preferably 10 to 500 parts by mass, further preferably 15 to 450 parts by weight, particularly preferably from 20 to 400 parts by weight, and most preferably 30 to 350 parts by weight relative to 100 parts by mass of the elastomer component.

When the mixture further contains the α-olefin-based resin having no chemical-bond cross-linking moiety and the paraffin oil and/or the styrene block copolymer having no chemical-bond cross-linking moiety, an order of addition of the elastomeric polymer having a cyclic acid anhydride group in a side chain, the organically modified clay, the α-olefin-based resin having no chemical-bond cross-linking moiety, and the paraffin oil and/or the styrene block copolymer having no chemical-bond cross-linking moiety is not limited to a particular order. However, from the viewpoint of more improving the dispersibility of the organically modified clay, it is preferable to prepare a mixture precursor containing the α-olefin-based resin, the elastomeric polymer having a cyclic acid anhydride group in a side chain, and the paraffin oil and/or the styrene block copolymer having no chemical-bond cross-linking moiety, and thereafter to add the organically modified clay to the precursor.

Then, when an additional component other than the α-olefin-based resin having no chemical-bond cross-linking moiety, the paraffin oil and the styrene block copolymer having no chemical-bond cross-linking moiety is a polymer or a reinforcing material (bulking agent), the amount of the additional component contained is preferably 500 parts by mass or less and more preferably 20 to 400 parts by mass relative to 100 parts by mass of the elastomer component. If the amount of the additional component contained is less than the lower limit, the effects obtained by use of the additional component tend not to be exhibited sufficiently. Meanwhile, if the amount of the additional component contained exceeds the upper limit, the effects of the elastomer serving as a substrate tend to be less influential, so that physical properties tend to deteriorate, although it depends on the type of the component used.

Meanwhile, when the additional components are the other additives (when the additional components are other than the polymers and reinforcing materials (bulking agents)), the amount of the additional components contained is preferably 20 parts by mass or less, and more preferably 0.1 to 10 parts by mass relative to 100 parts by mass of the elastomer component. If the amount of the additional components contained is less than the lower limit, the effect of the use of the additional components tends to be expressed insufficiently. Meanwhile, if the amount of the additional components contained exceeds the upper limit, the reaction of the elastomer serving as the substrate is adversely affected, so that physical properties tend to be lowered rather.

(Second Step)

The second step is a step of adding, to the mixture, at least one raw material compound of a compound (I) that forms a hydrogen-bond cross-linkable moiety upon a reaction with the cyclic acid anhydride group, and a mixed raw material of the compound (I) with a compound (II) that forms a covalent-bond cross-linking moiety upon a reaction with the cyclic acid anhydride group, to allow a reaction to proceed between the polymer and the raw material compound, thereby obtaining the thermoplastic elastomer composition.

As the compound (I) that forms a hydrogen-bond cross-linkable moiety upon a reaction with the cyclic acid anhydride group, any of the same compounds as the compounds each of which forms a hydrogen-bond cross-linkable moiety (the compound capable of introducing a nitrogen-containing heterocycle) described for the above-described composition for foam of the present invention can be used preferably. For example, the compound (I) may be exactly the nitrogen-containing heterocycle described for the above-described composition for foam of the present invention, or may be a compound in which a substituent (for example, a hydroxy group, a thiol group, an amino group, or the like) that reacts with a cyclic acid anhydride group of maleic anhydride or the like is bonded to the above-described nitrogen-containing heterocycle (a nitrogen-containing heterocycle having the above-described substituent). Note that, as the compound (I), a compound that forms both of a hydrogen-bond cross-linkable moiety and a covalent-bond cross-linking moiety (a compound capable of simultaneously introducing both of a hydrogen-bond cross-linkable moiety and a covalent-bond cross-linking moiety) may be used (note that a side chain having both a hydrogen-bond cross-linkable moiety and a covalent-bond cross-linking moiety can be considered as a preferred mode of the side chain having a hydrogen-bond cross-linkable moiety).

In addition, the compound (I) is not particularly limited, and it is possible to select and use, as appropriate, a preferred compound among the above-described compounds (I) according to the type of the side chain (the side chain (a) or the side chain (a')) in the target polymer. The compound (I) is preferably triazole, pyridine, thiadiazole, imidazole, isocyanurate, triazine, and hydantoins optionally having at least one substituent selected from hydroxy groups, thiol groups, and amino groups, more preferably triazole, pyridine, thiadiazole, imidazole, isocyanurate, triazine, and hydantoin having the above-described substituent, further preferably triazole, isocyanurate, or triazine having the above-described substituent, and particularly preferably triazole having the above-described substituent from the viewpoint that a higher reactivity can be obtained. Note that examples of the triazole, pyridine, thiadiazole, imidazole, and hydantoin optionally having the substituents include 4H-3-amino-1,2,4-triazole, aminopyridine, aminoimidazole, aminotriazine, aminoisocyanurate, hydroxypyridine, hydroxyethyl isocyanurate, and the like.

Meanwhile, as the compound (II) that forms a covalent-bond cross-linking moiety upon a reaction with the cyclic acid anhydride group, any of the same compounds as the "compounds each of which forms a covalent-bond cross-linking moiety (compound that forms a covalent bond) " described for the above-described composition for foam of the present invention can be used preferably (compounds preferred as the compound (II) are also the same). In addition, as the compound (II), a compound that forms both of a hydrogen-bond cross-linkable moiety and a covalent-bond cross-linking moiety (a compound capable of simultaneously introducing both of a hydrogen-bond cross-linkable moiety and a covalent-bond cross-linking moiety) may also be used (note that a side chain having both a hydrogen-bond cross-linkable moiety and a covalent-bond cross-linking moiety can be considered as a preferred mode of the side chain having a covalent-bond cross-linking moiety).

The compound (II) is preferably tris(hydroxyethyl) isocyanurate, sulfamide, or polyether polyol, more preferably tris(hydroxyethyl) isocyanurate or sulfamide, and further preferably tris(hydroxyethyl) isocyanurate, from the viewpoint of resistance to compression set.

Then, as the compound (I) and/or (II), it is preferable to use a compound that forms both of a hydrogen-bond cross-linkable moiety and a covalent-bond cross-linking moiety upon a reaction with the cyclic acid anhydride group (a compound capable of simultaneously introducing both of a hydrogen-bond cross-linkable moiety and a covalent-bond cross-linking moiety), because both of the hydrogen-bond cross-linkable moiety and the covalent-bond cross-linking moiety can be introduced more efficiently to the composition. As the compound that forms both of a hydrogen-bond cross-linkable moiety and a covalent-bond cross-linking moiety, the aforementioned heterocycle-containing polyol, heterocycle-containing polyamine, and heterocycle-containing polythiol can be preferably used, and tris(hydroxyethyl) isocyanurate is particularly preferable among them.

In addition, the amount of the compound (I) and the compound (II) added (the total amount thereof: when only one compound is used, the amount of the one compound) is not particularly limited. In a case where active hydrogen of an amine, an alcohol, or the like is contained in the compound, the amount of the compound (I) and the compound (II) is such that the resulting amount of the active hydrogen of an amine, an alcohol, or the like in the compound is preferably 20 to 250% by mole, more preferably 50 to 150% by mole, and further preferably 80 to 120% by mole relative to 100% by mole of the cyclic acid anhydride group. If the amount added is less than the lower limit, the amount of the side chain introduced is reduced, making it difficult to obtain a sufficiently high level of cross-linking density, so that physical properties such as tensile strength tend to be lowered. Meanwhile, if the amount added exceeds the upper limit, the amount of the compound used is so large that many branches tends to be formed, and the cross-linking density tends to be rather lowered.

In addition, regarding the amount of the compound (I) and the compound (II) added, the total amount thereof (when only one compound is used, the amount of the one compound) is preferably 0.1 to 10 parts by mass, more preferably 0.3 to 7 parts by mass, and further preferably 0.5 to 5.0 parts by mass, relative to 100 parts by mass of the polymer (an elastomeric polymer having a cyclic acid anhydride group in a side chain) in the mixture. If the amount of the compound (I) and the compound (II) added (the amount based on parts by mass) is less than the lower limit, the amount is so small that the cross-linking density does not increase, and desired physical properties tend not to be expressed. Meanwhile, if the amount exceeds the upper limit, the amount is so large that many branches tends to be formed, and the cross-linking density tends to be lowered.

When both the compound (I) and the compound (II) are used, the order of addition of the compound (I) and the compound (II) is not particularly limited, and either one may be added first. In addition, when both the compound (I) and the compound (II) are used, the compound (I) may be reacted with part of the cyclic acid anhydride groups in the elastomeric polymer having a cyclic acid anhydride group in a side chain. This also makes it possible to form a covalent-bond cross-linking moiety by a reaction of unreacted cyclic acid anhydride groups (cyclic acid anhydride groups not reacted) with the compound (II) . Herein, the part is preferably 1% by mole or more and 90% by mole of less relative to 100% by mole of the cyclic acid anhydride group. Within this range, the effect of the introduction of the group derived

from the compound (I) (for example, a nitrogen-containing heterocycle or the like) tends to be sufficiently expressed in the obtained elastomeric polymer (B), and the recyclability thereof tends to be further improved. Note that the compound (II) is preferably reacted with the cyclic acid anhydride group such that the cross-linkages formed by the covalent bonds can be in a suitable number (for example, 1 to 10 in one molecule).

When the polymer is reacted with the raw material compound (compound (I) and/or compound (II)), the cyclic acid anhydride group of the polymer undergoes ring-opening, so that the cyclic acid anhydride group and the raw material compound (the compound (I) and/or compound (II)) are chemically bonded to each other. A temperature condition for the reaction (ring-opening of the cyclic acid anhydride group) of the polymer with the raw material compound (the compound (I) and/or compound (II)) is not particularly limited, and may be adjusted to a temperature at which the compound and the cyclic acid anhydride group can react with each other according to the types of the compound and the cyclic acid anhydride group. The temperature condition is preferably 100 to 250°C, and more preferably 120 to 230°C, from the viewpoint that the reaction is allowed to proceed in a moment by softening.

Such a reaction results in the formation of at least a hydrogen-bond cross-linkable moiety at a site where the compound (I) has reacted with the cyclic acid anhydride group. Hence, it is possible to cause a side chain of the polymer to contain a hydrogen-bond cross-linkable moiety (a moiety having a carbonyl-containing group and/or a nitrogen-containing heterocycle, more preferably a moiety having a carbonyl-containing group and a nitrogen-containing heterocycle). The side chain formed (introduced) by the reaction can be one containing the structure represented by the above-described formula (2) or (3).

In addition, at a site where the compound (II) has reacted with a cyclic acid anhydride group during the reaction, at least a covalent-bond cross-linking moiety is formed. Hence, a side chain of the polymer can be one containing a covalent-bonding cross-linking portion (a side chain (b) or a side chain (c)). Thus, side chains formed by such a reaction can be those containing the structures represented by the above-described formulae (7) to (9).

Note that groups (structures) of side chains in such polymers, specifically, unreacted cyclic acid anhydride groups, the structures represented by the above-described formulae (2), (3), and (7) to (9), and the like can be identified by ordinarily used analytic techniques such as NMR or IR spectroscopy.

Through the reaction as described above, it is possible to obtain a thermoplastic elastomer composition comprising:

at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below; and
an organically modified clay.

Then, the amount of the organically modified clay contained in the thermoplastic elastomer composition is 20 parts by mass or less relative to 100 parts by mass of the elastomer component. Note that the elastomeric polymer (A) and the elastomeric polymer (B) in the thermoplastic elastomer composition thus obtained are the same as the elastomeric polymer (A) and the elastomeric polymer (B) described above for the aforementioned composition for foam of the present invention, except that the side chain (a), the side chain (a'), the side chain (b), and the side chain (c) in the polymers are each derived from a reaction with the cyclic acid anhydride group (for example, such as a side chain containing the structure represented by any of the above-described formulae (2), (3), and (7) to (9)).

In the present invention, from the viewpoints that monomers can be easily obtained industrially, that the high reactivity of the monomers enables a reaction to proceed quantitatively, and furthermore that the obtained elastomer can have higher levels of mechanical physical properties (such as tensile physical properties and compression set), it is preferable that: the elastomeric polymer having a cyclic acid anhydride group in a side chain be a maleic anhydride-modified elastomeric polymer; the raw material compound be at least one compound selected from triazoles optionally having at least one substituent selected from hydroxy groups, thiol groups, and amino groups, pyridines optionally having at least one substituent selected from hydroxy groups, thiol groups, and amino groups, thiadiazoles optionally having at least one substituent selected from hydroxy groups, thiol groups, and amino groups, imidazoles optionally having at least one substituent selected from hydroxy groups, thiol groups, and amino groups, isocyanurates optionally having at least one substituent selected from hydroxy groups, thiol groups, and amino groups, triazines optionally having at least one substituent selected from hydroxy groups, thiol groups, and amino groups, hydantoins optionally having at least one substituent selected from hydroxy groups, thiol groups, and amino groups, tris (hydroxyethyl) isocyanurates, sulfamides, and polyether polyols; and the elastomer component be at least one selected from the group consisting of reaction products of the maleic anhydride-modified elastomeric polymers and the raw material compounds.

(Third Step)

The third step is a step of adding a foaming agent to the thermoplastic elastomer composition to obtain the composition for foam.

Moreover, as such a foaming agent, any of the same foaming agents as those described for the above-described composition for foam of the present invention can be used preferably.

In the third step, the foaming agent is added to the thermoplastic elastomer composition to obtain the composition for foam. In this step, it is preferable to mix the foaming agent into the elastomer component at such a ratio that the amount of the foaming agent contained in the finally obtained composition for foam is 0.1 to 90 parts by mass (more preferably 0.1 to 50 parts by mass, further preferably 0.1 to 40 parts by mass, particularly preferably 0.5 to 30 parts by mass, more preferably 1 to 25 parts by mass, most preferably 1 to 20 parts by mass) relative to 100 parts by mass of the elastomer component. If the amount of the foaming agent contained exceeds the upper limit, the amount of the foaming agent is so small that it tends to be difficult to achieve a sufficiently high foaming ratio (difficult to achieve a sufficiently low specific gravity) . Meanwhile, if the amount of the foaming agent contained is less than the lower limit, the amount of the foaming agent is so large that it is difficult to obtain a uniform foam due to a difficulty in sufficiently dispersing the foaming agent, or that the strength of a foam obtained tends to decrease because the specific gravity after foaming is too low.

In adding the foaming agent, it is preferable to add the foaming agent after the thermoplastic elastomer composition (especially the elastomer component) is plasticized in advance so that the foaming agent can be dispersed sufficiently. Then, a method for plasticizing the thermoplastic elastomer composition (especially the elastomer component) as above is not particularly limited, but it is possible to employ, as appropriate, a kneading method using rolls, a kneader, a Banbury mixer, an extruder (such as a single or twin screw extruder), an all-purpose mixer, or the like at temperature at which the thermoplastic elastomer composition can be plasticized while the foam used is kept from foaming (for example, about 100 to 250°C) . The conditions such as temperature for plasticizing the thermoplastic elastomer composition (especially the elastomer component) are not particularly limited, but may be set, as appropriate, according to the type of the elastomer component.

In the mixing for obtaining the composition for foam, the foam just has to be sufficiently dispersed. The method thereof is not limited to a particular one, but any publicly known method or the like can be employed as appropriate. For example, it is possible to employ a method of mixing with rolls, a kneader, a Banbury mixer, an extruder (such as a single or twin screw extruder), an all-purpose mixer, or the like.

By adding the foaming agent to the thermoplastic elastomer composition as described above, it is possible to obtain a composition for foam comprising:

at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below;
an organically modified clay; and
a foaming agent. The composition for foam thus obtained can be made the same as the aforementioned composition for foam of the present invention. Thus, the method for producing a composition for foam of the present invention can be preferably used as a method for producing the aforementioned composition for foam of the present invention. Hence, it is possible to cause a composition for foam thus obtained to express the same effects as those of the composition for foam of the present invention.

Although it is not exactly clear why a composition for foam obtained by the method for forming a composition of the present invention can be thus caused to express the same effects as those of the composition for foam of the present invention, the present inventors speculate as follows. Specifically, first, in the present invention, the organically modified clay is dispersed in the acid anhydride polymer in advance in the first step. By dispersing the organically modified clay as described above, the acid anhydride groups in the polymer and the organically modified clay interact with each other and the interaction facilitates delamination of layers of the clay. In this regard, the present inventors speculate that since the organically modified clay is a clay in which the organic material such as an ammonium salt is present between the layers, the organic material interacts with the acid anhydride groups to facilitate the delamination of layers of the clay. Then, after the organically modified clay is dispersed in the first step, the raw material compound (which functions as a cross-linking agent that forms cross linkages, and which is hereinafter sometimes referred to as a "cross-linking agent") is added in the second step. Consequently, the cross-linking agent reacts with the acid anhydride groups, and at least hydrogen-bond cross-linkable moieties (for example, carboxylic acid groups or the like) are generated in the system. For this reason, interaction of the hydrogen bonds with the organically modified clay is caused, and the organically

modified clay is further dispersed in the elastomer. The present inventors speculate that, for this reason, the organically modified clay is sufficiently dispersed in the composition for foam obtained by the present invention, and the organically modified clay in such a state interacts with the hydrogen-bond cross-linkable moieties to uniformly form plane cross-linking moieties, so that the composition for foam after foaming is also capable of exhibiting higher levels of tensile stress (modulus and tensile strength at break) and resistance to compression set. In addition, as described above, the composition for foam obtained by the present invention can be formed such that a single-layered organically modified clay is contained in the composition. Moreover, the composition for foam thus obtained can also be such that, when randomly selected three or more measurement points in a size of 5.63 $\mu m^2$ on a surface of the composition for foam are observed under a transmission electron microscope (TEM), 50% or more (more preferably 70% or more, further preferably 80 to 100%, and particularly preferably 85 to 100%) of all the clay based on the number of layers is present as the single-layered clay in all the measurement points. Further, in the present invention, after the thermoplastic elastomer composition is obtained in the second step, the foaming agent is added in the third step. By adding the foaming agent as mentioned above, the foaming agent can be dispersed at a higher degree. In addition, the present inventors speculate that, since the composition for foam thus obtained comprises the elastomer component, the organically modified clay, and the foaming agent, the foaming agent can be dispersed at the high degree through interaction with hydrogen bond portions in the elastomer component, and thus allows the composition to foam at a sufficient foaming ratio because the composition can uniformly foam during foaming with the assist of the foaming agent.

Note that, in the present invention, for example, a composition for foam containing the elastomeric polymer (A) as the elastomer component or a thermoplastic elastomer composition obtained as an intermediate in the middle of the production thereof, and a composition for foam containing the elastomeric polymer (B) as the elastomer component or a thermoplastic elastomer composition obtained as an intermediate in the middle of the production thereof may be produced separately, and then mixed with each other to finally obtain a composition for foam containing the elastomeric polymers (A) and (B) as the elastomer components. Meanwhile, when a composition for foam containing a combination of the elastomeric polymers (A) and (B) as the elastomer components is produced, it is also possible to cause a desired property to be exhibited by changing the ratio between the elastomeric polymer (A) and the elastomeric polymer (B), as appropriate, to change, as appropriate, the ratio between the hydrogen-bond cross-linkable moieties and the covalent-bond cross-linking moieties present in the composition and the like.

Hereinabove, the method for producing a composition for foam of the present invention is described. Next, a foam of the present invention is described below.

[Foam and Production Method thereof]

A foam of the present invention is formed by foaming the aforementioned composition for foam of the present invention. Then, a method for producing a foam of the present invention is a method comprising obtaining a foam by foaming the aforementioned composition for foam of the present invention.

Since the foam of the present invention is one formed using the aforementioned composition for foam of the present invention, the foam has higher levels of modulus at 100% elongation, tensile strength at break, and resistance to compression set in a well-balanced manner.

A method for foaming the aforementioned composition for foam of the present invention is not particularly limited, but any publicly known method can be employed as appropriate depending on the type of the foaming agent. For example, it is possible to employ any method such as a method of foaming the composition for foam of the present invention by extrusion by using a single or twin screw extruder or the like, and a method of foaming the composition for foam by heating press or the like.

In addition, the conditions for foaming the composition for foam (the foaming agent in the composition) are not particularly limited, but may be adjusted depending on the type of the foaming agent or the like. Conditions necessary to foam the foaming agent used may be employed as appropriate. Although the conditions for foaming the composition for foam (the foaming agent in the composition) are not particularly limited as described above, a preferable atmospheric condition for foaming is a gas atmosphere of air, an inert gas such as nitrogen, or a carbon dioxide gas (more preferably air) from the viewpoint of reducing variations in the foamed state. In addition, a pressure condition for foaming the composition for foam (the foaming agent in the composition) is preferably 0.1 to 30 MPa, and more preferably 0.2 to 20 MPa. If the pressure condition is less than the lower limit, the pressure is too low to press the foamed rubber and the rubber tends to protrude from the mold. Meanwhile, if the pressure condition exceeds the upper limit, the foaming agent tends not to expand and foam sufficiently due to excessively high pressure.

Furthermore, in the case of heating the composition for foam (the foaming agent in the composition) in the process of foaming, the heating temperature is preferably 50 to 300°C, and more preferably 60 to 250°C, and the heating time is preferably 0.1 to 30 minutes, and more preferably 0.3 to 20 minutes. If the heating temperature or time is less than the lower limit, the foaming agent tends not to generate sufficient gas or expand sufficiently. Meanwhile, if the heating temperature or time exceeds the upper limit, the foaming agent tends to be degassed or collapse the capsules.

The foam of the present invention can be obtained by foaming the composition for foam (the foaming agent in the composition).

A shape of a foam thus obtained is not particularly limited, and a foam in any shape such as a sheet shape or solid shape can be molded as appropriate (the composition can be formed into a foam molded article) . Here, a molding method therefor is not particularly limited. For example, it is possible to employ a molding method in which a mold conforming to a desired shape is used and the composition is foamed in the mold. In the case of molding using a mold as mentioned above, the foam may be molded under heating and pressing. Such a foam may be used for various rubber applications, for example, by making use of its rubber elasticity. Examples of applications of foams include gasket/seal materials (anti-dust, waterproofing, moisture-proofing, and soundproofing), cushioning materials, and anti-vibration materials for vehicles, ships, light electrical appliances, and machineries; various kinds of joint materials, expandable pads for concrete, and floor cushioning materials for civil engineering and construction; pipe washing sponges; wrapping and packaging materials (cushioning materials for transportation and the like) for precision machineries, medical equipment, plate and sheet glasses, furniture, and the like; tires for sports and leisure; table tennis racquets; golf mats; shock-absorbent mats; cushions for stamping; and the like.

As a foam utilizing the thermoplastic elastomer composition described above, there is a foam obtained by, for example, dispersing microcapsules expanded in advance (pre-expanded microcapsules) in the thermoplastic elastomer composition, besides foams obtained by foaming the composition for foam of the present invention as described above. Specifically, a foam using such pre-expanded microcapsules can be obtained by, for example, first producing the thermoplastic elastomer composition, and thereafter adding and mixing pre-expanded microcapsules into the thermoplastic elastomer composition, and therefore is a foam that can be produced easily. The pre-expanded microcapsules are not particular limited, but any publicly-known pre-expanded microcapsules can be used. It is also possible to use commercially available products as appropriate (for example, expanded versions of F-E and F-DE series of Matsumoto Microsphere (registered trademark) manufactured by Matsumoto Yushi-Seiyaku Co., Ltd.)).

In addition, in the case of obtaining a foam by adding pre-expanded microcapsules to the thermoplastic elastomer composition, a method of adding the pre-expanded microcapsules is not particularly limited. For example, it is possible to preferably use a method including: plasticizing the thermoplastic elastomer composition first, and thereafter adding the pre-expanded microcapsules into the plasticized composition. By adding and mixing the pre-expanded microcapsules into the thermoplastic elastomer composition as mentioned above, a foam can be obtained in a state where the pre-expanded microcapsules are dispersed in the thermoplastic elastomer composition. The method for obtaining a foam by adding pre-expanded microcapsules can be preferably used from the viewpoint that a foam can be easily produced.

Here, in the foam in the state where pre-expanded microcapsules are dispersed in the thermoplastic elastomer composition, the amount of the pre-expanded microcapsules contained is preferably 0.1 to 40 parts by mass and more preferably 0.5 to 30 parts by mass relative to 100 parts by mass of the thermoplastic elastomer composition. If the amount of the pre-expanded microcapsules contained is less than the lower limit, the amount of the pre-expanded microcapsules is so small that the foaming ratio tends not to be sufficiently high in some cases (the specific gravity tends not to be sufficiently low in some cases) . Meanwhile, if the amount of the pre-expanded microcapsules contained exceeds the upper limit, the amount of the pre-expanded microcapsules is so large that it tends to be difficult to obtain a uniform foam due to a difficulty in sufficiently dispersing the pre-expanded microcapsules, or that the strength of a foam obtained tends to decrease because the specific gravity is too low.

Further, the foam of the present invention may be used as a molded article obtained by foaming and molding the aforementioned composition for foam of the present invention depending on an application as described above. Thus, the foam of the present invention may be molded as appropriate (molded simultaneously durging foaming or molded after foaming) and used for any of various applications as a foam molded article. Hereinafter, foam molded articles of the present invention preferable as the foams of the present invention will be described.

[Foam Molded Article]

The foam molded article of the present invention comprises the foam of the present invention. Thus, the foam molded article may be any one including the aforementioned foam of the present invention. Depending on an application, the foam molded article may be a molded article of the foam itself (the molded article obtained by foaming the aforementioned composition for foam of the present invention, the molded article obtained by foaming the composition for foam of the present invention and then molding the obtained foam, or the like), or a structure (for example, a laminate or the like) obtained by appropriately combining a molded article of the foam and another member. Here, such another member is not particularly limited. Depending on an application or necessity, a known material (member) usable for the application can be used as appropriate. For example, there are various substrates (resin substrates and metal substrates), other layers (other resin layers, antioxidant films, ultraviolet absorbing films, antistatic films, antibacterial layers, and so on), and the like.

Such a foam molded article of the present invention is preferably a molded article for use in any application

selected from the group consisting of civil engineering and construction materials, industrial parts, electric and electronic parts, and daily necessities. For use in these applications, the foam molded article may be in a form in which the foam is combined with another layer, substrate, or the like as appropriate. Although these applications (the civil engineering and construction materials, industrial parts, electric and electronic parts, and daily necessities) are not particularly limited, examples thereof include various kinds of gaskets and sheets for civil engineering and constructions, gap filling materials (for example, joint materials), sealing materials for construction, sealing materials for pipe joints, building sash sealing materials, pipe protecting materials, wiring protecting materials, heat insulating materials, packing materials, cushioning materials, automotive parts (for example, such as interior and exterior parts for automobiles, weather strips for automobiles, body panels, side shields, and packing materials (for automobiles)), agricultural machinery parts, agricultural materials, conveyor belts, contact rubber sheets, electrical insulators, housings and internal parts for various electronic devices, wire cladding materials, connectors, caps, plugs, sports and leisure goods (such as swimming fins, underwater glasses, golf club grips, and baseball bat grips), footwear (such as shoe soles and sandals), miscellaneous goods (such as wrapping materials, garden hoses, nonskid tapes for stairs, cleaning tools, and makeup tools) . Then, since a foam can be formed with higher levels of modulus at 100% elongation, tensile strength at break, and resistance to compression set in a well-balanced manner, the foam molded article of the present invention is preferably a molded article for use in any one application selected particularly from the group consisting of automotive parts (further preferably weather strips for automobiles), gap filling materials, sealing materials for construction, sealing materials for pipe joints, pipe protecting materials, wiring protecting materials, heat insulating materials, packing materials, cushioning materials, electrical insulators, contact rubber sheets, sports and leisure goods, and miscellaneous goods.

A method for producing a foam molded article of the present invention is not particularly limited, and a foam molded article may be produced by using the aforementioned composition for foam of the present invention as a raw material and using, as the molding method, the same method (such as conditions) as a known foam molding method (for example, injection foam molding, extrusion foam molding, foam blow molding, or the like) as appropriate. In addition, as the method for producing a foam molded article of the present invention, for example, the molding method (such as the molding method in which a mold conforming to a desired shape is used and the composition is foamed in the mold) described as the aforementioned method for producing a foam of the present invention may be employed as appropriate.

[Examples]

Hereinafter, the present invention is described more specifically on the basis of Examples and Comparative Examples; however, the present invention is not limited to Examples below.

First, Table 1 presents organically modifying agents used for organic modification to obtain organically modified clays (A) to (G) used in Examples (Here, the organically modified clays listed in Table 1 are all commercially available ones, and their trade names are also presented in Table 1). In addition, Table 1 also presents information such as a trade name on a clay (a) used in Comparative Examples 2 and 4. Note that a clay not organically modified is used as the clay (a).

| | Type of Ammonium Salt as Organically Modifying Agent | Trade Name | No. of Examples and the like |
|---|---|---|---|
| Organically Modified Clay (A) | Dialkyldimethylammonium | Kunfil-D36 (by KUNIMINE INDUSTRIES CO., L TD.) | Used in Examples 1, 8, and 15 |
| Organically Modified Clay (B) | Dimethyldioctadecylammonium<br>Dimethylstearylbenzylammonium<br>(Total 2 types) | S-BEN WX (by HOJUN Co., Ltd.) | Used in Examples 2, 9, 16, and 17 |
| Organically Modified Clay (C) | Dimethyldioctadecylammonium | S-BEN NX (by HOJUN Co., Ltd.) | Used in Examples 3, and 10 |
| Organically Modified Clay (D) | Dimethylstearylbenzylammonium | S-BEN NZ (by HOJUN Co., Ltd.) | Used in Examples 4, and 11 |
| Organically Modified Clay (E) | Oleylbis(2-hydroxyethyl) methylammonium | S-BEN N012S (by HOJUN Co., Ltd.) | Used in Examples 5, and 12 |
| Organically Modified Clay (F) | Trimethylstearylammonium | S-BEN E (by HOJUN Co., Ltd.) | Used in Examples 6, and 13 |
| Organically Modified Clay (G) | Benzylammonium | Kunfil-B 1 (by KUNIMINE INDUSTRIES CO., LTD.) | Used in Examples 7, and 14 |

(continued)

| | Type of Ammonium Salt as Organically Modifying Agent | Trade Name | No. of Examples and the like |
|---|---|---|---|
| Clay (a) (Not Organically Modified) | None (Not Organically Modified) | Kunipia -F (by KUNIMINE INDUSTRIES CO., LTD.) | Used in Comparative Examples 2 and 4 |

Next, methods for evaluating properties of foams obtained in Examples and Comparative Examples are described.

<JIS-A hardness>

Using each of foams (a thickness of 2 mm, a length of 150 mm, and a width of 150 mm) obtained in Examples, Comparative Examples, and the like, the JIS-A hardness thereof was measured according to JIS K6253 (published in 2012) .

<Measurement of Modulus at 100% Elongation>

Each of foams (sheet-shaped products having a thickness of 2 mm, a length of 150 mm, and a width of 150 mm) obtained in Examples, Comparative Examples, and the like was used to prepare a test sample in the form of a No. 3 dumbbell, and a tensile test using each of the test samples was conducted at a tensile rate of 500 mm/min according to JIS K6251 (published in 2010) to measure the modulus at 100% elongation (M100) [MPa] and the tensile strength at break ($T_B$) [MPa] at room temperature (25°C).

<Compression Set (C-Set)>

Each of foams (a thickness of 2 mm, a length of 150 mm, and a width of 150 mm) obtained in Examples, Comparative Examples, and the like was used. Seven pieces in a disk shape were punched out from each of the foams and stacked on each other to prepare a sample with a height (thickness) of 12.5±0. 5 mm. Next, the sample was compressed by 25% with a dedicated jig, and left at 70°C for 22 hours. After that, the pressure was released and the sample was allowed to stand at room temperature for 30 minutes. By comparing the heights of the sample before and after the test, the compression set was measured according to JIS K6262 (published in 2013) . Note that the compressor used was one manufactured by DUMBBELL CO., LTD. under the trade name of "Vulcanized Rubber Compression Set Test Machine SCM-1008 L".

<Foaming Ratio>

The foaming ratio was obtained by measuring the specific gravities before and after foaming to form a foam (the specific gravities of the composition for foam and the foam (unit: g/cm$^3$)), and calculating the following formula:

$$[\text{Foaming Ratio}] = [\text{Specific Gravity Of Composition For Foam}]/[\text{Specific Gravity Of Foam}].$$

Note that the specific gravities before and after foaming (the specific gravities of the composition for foam and the foam (unit: g/cm$^3$)) were measured by an electronic densimeter (manufactured by Alfa Mirage Co., Ltd. under the trade name of "SD-200L").

(Example 1)

First, 50 g of a styrene block copolymer (a styrene-ethylene-butylene-styrene block copolymer (SEBS) : manufactured by Kraton Corporation under the trade name of "G1633U", molecular weight: 400,000 to 500,000, and styrene content: 30% by mass) was placed into a pressure kneader, 100 g of a paraffin oil (manufactured by JXTG Nippon Oil & Energy Corporation under the trade name of "Super Oil M Series P500S", kinematic viscosity: 472 mm$^2$/s, Cp value: 68.7%, and aniline point: 123°C) was slowly added dropwise to the pressure kneader during kneading under the condition

of 200°C, and the styrene-ethylene-butylene-styrene block copolymer and the paraffin oil were mixed together for 1 minute. Thereafter, 100 g of a maleic anhydride-modified ethylene-butene copolymer (maleic EBM: manufactured by Mitsui Chemicals, Inc. under the trade name of "TAFMER MH5020", and crystallinity: 4%), 75 g of an α-olefin-based resin, that is, an ethylene-propylene copolymer (EPM: manufactured by Mitsui Chemicals, Inc. under the trade name "TAFMER DF7350", crystallinity: 10%, MFR: 35 g/10 min (2.16 kg, 190°C), and Mw: 100, 000) and 0.3g of an anti-aging agent (manufactured by ADEKA Corporation under the trade name of "AO-50") were further added to the pressure kneader, followed by kneading (mastication) for 2 minutes at temperature of 180°C to obtain a first mixture (a step of obtaining a first mixture). Here, the first mixture was plasticized in the kneading step. Subsequently, 0.1 g of an organically modified clay (A) (manufactured by KUNIMINE INDUSTRIES Co., Ltd. under the trade name of "Kunfil-D36") presented in Table 1 was further added to the first mixture in the pressure kneader, followed by kneading for 4 minutes at 180°C to obtain a second mixture (a step of obtaining a second mixture).

Next, 1.31 g of tris(hydroxyethyl) isocyanurate (manufactured by NISSEI CORPORATION under the trade name of "TANAC P") was added to the second mixture in the pressure kneader, followed by mixing for 8 minutes at 180°C to prepare a thermoplastic elastomer composition.

Note that, from the results of the infrared spectroscopic analysis of the raw material compounds used, it can be understood that maleic anhydride groups in the maleic anhydride-modified ethylene-butene copolymer reacted with the tris(hydroxyethyl) isocyanurate to form an elastomeric polymer mainly containing a side chain having the structure represented by the following formula (28) (hereinafter, simply referred to as "side chain (iii)" in some cases), among a side chain having the structure represented by the following formula (26) (hereinafter, simply referred to as "side chain (i)" in some cases), a side chain having the structure represented by the following formula (27) (hereinafter, simply referred to as "side chain (ii)" in some cases), and the side chain (iii) in the thermoplastic elastomer composition (note that, in stoichiometric consideration based on the raw materials used, it is obvious that the side chain (iii) is mainly formed among the side chains (i) to (iii), but the side chain (i) and/or the side chain (ii) may be formed depending on the position of the side chain in the polymer or the like. Hereinafter, an elastomeric polymer in which the main type of the side chains formed by the reaction can be considered to be the side chain (iii) on the basis of the raw materials used is sometimes simply referred to as an "elastomeric polymer mainly having a side chain (iii)"). In addition, the elastomeric polymer has a main chain composed of ethylene and butene and the glass-transition point measured by DSC measurement was found to be -64.4°C, which means the glass-transition point is 25°C or below.

[Chem. 16]

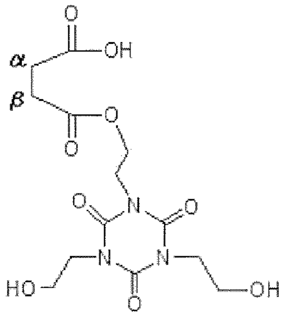

(26)

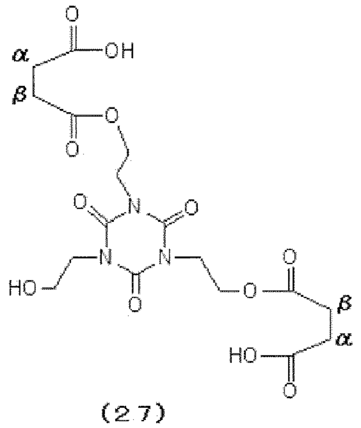

(27)

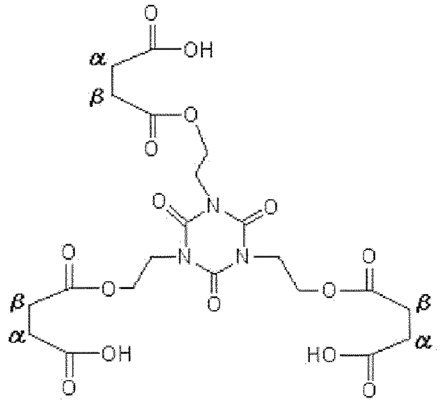

(28)

[in the formulae (26) to (28), the carbons indicated by α and β indicate that the carbon at either position (the α position or the β position) is bonded to the main chain of the elastomeric polymer].

Next, after the obtained thermoplastic elastomer composition was softened by kneading for 4 minutes under a temperature condition of 120°C, 5 g of a foaming agent, specifically, thermally expandable microcapsules (manufactured by Matsumoto Yushi-Seiyaku Co., Ltd. under the trade name of "Matsumoto Microsphere F-190D", foaming start temperature: 160 to 170°C, and maximum foaming temperature: 210 to 220°C) was added, followed by further kneading for 3 minutes to obtain a composition for foam (331.71 g).

Then, 20 g of the composition for foam thus obtained was introduced into a mold for molding a sheet (thickness of 2 mm, length of 150 mm, and width of 150 mm), was molded by application of pressure at 16 MPa for 30 seconds while being foamed by heating at 210°C, and was then cooled by a water-cooling press at 16 MPa for 2 minutes to obtain a sheet-shaped foam (thickness of 2 mm, length of 150 mm, and width of 150 mm). Table 2 presents data such as property evaluation results of the obtained foam.

(Examples 2 to 7)

Compositions for foam (331.71 g) and sheet-shaped foams (thickness of 2 mm, length of 150 mm, and width of 150 mm) were obtained in the same manner as in Example 1 except that organically modified clays (B) to (F) specified below were used, respectively, instead of using the organically modified clay (A) (note that the organically modified clays (B) to (G) presented below are the same as those specified in Table 1). Table 2 presents data such as property evaluation results of the obtained foams. Example 2: Organically modified clay (B): manufactured by HOJUN Co., Ltd. under the trade name of "S-BEN WX" Example 3: Organically modified clay (C): manufactured by HOJUN Co., Ltd. under the trade name of "S-BEN NX" Example 4: Organically modified clay (D): manufactured by HOJUN Co., Ltd. under the trade name of "S-BEN NZ" Example 5: Organically modified clay (E): manufactured by HOJUN Co., Ltd. under the trade name of "S-BEN NO12S" Example 6: organically modified clay (F): manufactured by HOJUN Co., Ltd. under the trade name of "S-BEN S" Example 7: Organically modified clay (G): manufactured by KUNIMINE INDUSTRIES CO., LTD. under the

trade name of "Kunfil-B1"

(Comparative Example 1)

A composition for foam (331.61 g) and a sheet-shaped foam (thickness of 2 mm, length of 150 mm, and width of 150 mm) were obtained in the same manner as in Example 1 except that after the step of obtaining a first mixture was performed, the step of obtaining a second mixture was not performed (the organically modified clay (A) was not added to the first mixture), but the first mixture was used as it was in the process of preparing the thermoplastic elastomer composition, and 1.31 g of tris(hydroxyethyl) isocyanurate (manufactured by NISSEI CORPORATION under the trade name of "TANAC P") was added to the first mixture after the first mixture was plasticized, followed by mixing at 200°C for 8 minutes to prepare the thermoplastic elastomer composition (in the same manner as in Example 1 except that the organically modified clay (A) was not used). Table 2 presents data such as property evaluation results of the obtained foam.

(Comparative Example 2)

A composition for foam (331.71 g) and a sheet-shaped foam (thickness of 2 mm, length of 150 mm, and width of 150 mm) were obtained in the same manner as in Example 1 except that an organically modified clay (a) specified in Table 1 was used instead of using the organically modified clay (A). Table 2 presents data such as property evaluation results of the obtained foam.

| | | | Ex. 1 | Ex. 2 | Ex. 3 | Ex. 4 | Ex. 5 | Ex. 6 | Ex. 7 | Comp. Ex. 1 | Comp. Ex. 2 |
|---|---|---|---|---|---|---|---|---|---|---|---|
| Components in Composition (Unit : g) | Maleic Anhydride-Modified Ethylene-Butene Copolymer | | 100 | 100 | 100 | 100 | 100 | 100 | 100 | 100 | 100 |
| | Clay | Organically Modified Clay (A) | 0.1 | - | - | - | - | - | - | - | - |
| | | Organically Modified Clay (B) | - | 0.1 | - | - | - | - | - | - | - |
| | | Organically Modified Clay (C) | - | - | 0.1 | - | - | - | - | - | - |
| | | Organically Modified Clay (D) | - | - | - | 0.1 | - | - | - | - | - |
| | | Organically Modified Clay (E) | - | - | - | - | 0.1 | - | - | - | - |
| | | Organically Modified Clay (F) | - | - | - | - | - | 0.1 | - | - | - |
| | | Organically Modified Clay (G) | - | - | - | - | - | - | 0.1 | - | - |
| | | Clay (a) (Not Organically Modified) | - | - | - | - | - | - | - | - | 0.1 |
| | Tris(hydroxyethyl) Isocyanurate | | 1.31 | 1.31 | 1.31 | 1.31 | 1.31 | 1.31 | 1.31 | 1.31 | 1.31 |
| | Thermally Expandable Microcapsule | | 5 | 5 | 5 | 5 | 5 | 5 | 5 | 5 | 5 |
| | Anti-Aging Agent | | 0.3 | 0.3 | 0.3 | 0.3 | 0.3 | 0.3 | 0.3 | 0.3 | 0.3 |
| | Styrene Block Copolymer (SEBS) | | 50 | 50 | 50 | 50 | 50 | 50 | 50 | 50 | 50 |
| | Paraffin Oil | | 100 | 100 | 100 | 100 | 100 | 100 | 100 | 100 | 100 |
| | Ethylene-Propylene Copolymer (EPM) | | 75 | 75 | 75 | 75 | 75 | 75 | 75 | 75 | 75 |
| | Total Amount of Composition (Unit: g) | | 331.71 | 331.71 | 331.71 | 331.71 | 331.71 | 331.71 | 331.71 | 331.61 | 331.71 |

(continued)

| | | Ex. 1 | Ex. 2 | Ex. 3 | Ex. 4 | Ex. 5 | Ex. 6 | Ex. 7 | Comp. Ex. 1 | Comp. Ex. 2 |
|---|---|---|---|---|---|---|---|---|---|---|
| Properties of Composition | JIS-A Hardness | 32 | 30 | 33 | 34 | 33 | 34 | 31 | 36 | 35 |
| | 100%Mod (MPa) | 0.52 | 0.62 | 0.50 | 0.54 | 0.50 | 0.46 | 0.48 | 0.12 | 0.25 |
| | Tensile Strength at Break (MPa) | 1.63 | 1.55 | 1.63 | 1.44 | 1.30 | 1.47 | 1.25 | 1.15 | 1.04 |
| | Compression Set (70°C,22H,25%) [Unit: %] | 58 | 37 | 69 | 68 | 52 | 71 | 52 | 89 | 82 |
| | Foaming Ratio | 1.78 | 1.98 | 1.82 | 1.76 | 1.55 | 1.48 | 1.45 | 1.28 | 1.31 |
| In Table, - indicates that the corresponding component was not used. | | | | | | | | | | |

As is apparent from the results presented in Table 2, it was found that the composition in the case of using any of the compositions for foam of the present invention (Examples 1 to 7) foamed at a higher foaming ratio than the compositions for foam obtained in the Comparative Examples 1 and 2. In addition, the hardness of the foam obtained in the case of using any of the compositions for foam of the present invention (Examples 1 to 7) was found to be at a level sufficiently usable as rubber products. Moreover, the modulus at 100% elongation and the tensile strength at break of the foams obtained in the case of using the compositions for foam of the present invention (Examples 1 to 7) were at higher levels than those of the foams obtained in the Comparative Examples 1 and 2. This confirms that a foam having higher levels of tensile properties can be obtained. Moreover, in the case of using the compositions for foam of the present invention (Examples 1 to 7), the obtained foams had a compression set of 71% or less, and thereby were found to have a higher level of resistance to compression set than the foams obtained in Comparative Examples 1 and 2.

From these results, it was found that the compositions for foam in the case of using the organically modified clays (Example 1 to 7) can foam at a higher level of foaming ratio during production of foams than those in the cases of using no clay (Comparative Example 1) and of using the simple clay (Comparative Example 2), and can also enhance all the properties, namely, the modulus at 100% elongation, the tensile strength at break, and the resistance to compression set to higher levels than in the latter cases. Thus, it was found that the composition for foam of the present invention (Examples 1 to 7) is capable of foaming at a sufficiently high level of foaming ratio, and forming a foam having higher levels of modulus at 100% elongation, tensile strength at break and resistance to compression set in a well-balanced manner.

Here, a relationship between a type of ammonium salt and properties of a foam finally obtained was investigated based on the results presented in Table 2 and the types of ammonium salts used as the organically modifying agents as presented in Table 1, and the following findings were obtained. First, the foaming ratio in the case of using the clay organically modified by a combination of two organically modifying agents, namely, dimethyldioctadecyl ammonium and dimethylstearyl benzyl ammonium (Example 2) can achieve a higher value than in the cases of using the clays organically modified by the other organically modifying agents (Examples 1 and 3 to 7). Second, the foaming ratio in the case of using any of the organically modifying agents made of the dimethyl-type ammonium salts (Examples 1 to 4) can achieve a higher value than in the case of using the organically modifying agent made of the trimethyl-type ammonium salt (Example 6). Third, the foaming ratio in the case of using any of the organically modifying agents made of the dimethyl-type ammonium salts (Examples 1 to 4) can achieve a higher value than in the case of using the organically modifying agent made of the hydroxyl-type ammonium salt (Example 5). Lastly, the foaming ratio in the case of using any of the organically modifying agents made of the dimethyl-type ammonium salts (Examples 1 to 4) can achieve a higher value than in the case of using the benzyl ammonium (Example 7). Here, the present inventors speculate that, in the case of using a clay organically modified by an organically modifying agent made of a dimethyl-type ammonium salt (Examples 1 to 4), the compatibility of the organically modified clay with the elastomer component is more improved, the foaming agent is more uniformly dispersed in the elastomer component, and therefore the foaming ratio can achieve a higher level than in the case of using a clay organically modified by any of the other types of organically modifying agents (Examples 5 to 7). In addition, it was also found that the tensile strength at break in the cases of using the clays organically modified by the organically modifying agents made of the dimethyldialkyl-type ammonium salts (Examples 1 to 3) can be at a higher level than in the cases of using the other organically modified clays (Examples 4 to 7).

(Example 8)

A composition for foam (328.71 g) was obtained by employing the same method as the method employed in Example 1 except that 2 g of an organic chemical foaming agent, specifically, azodicarbonamide (ADCA, manufactured by Otsuka Chemical Co., Ltd. under the trade name of "Unifoam AZ", foaming temperature (decomposition temperature): 195 to 202°C) was used as the foaming agent instead of using 5 g of the thermally expandable microcapsules.

Subsequently, 20 g of the composition for foam thus obtained was introduced into a mold for molding a sheet (thickness of 2 mm, length of 150 mm, and width of 150 mm), was molded by application of pressure at 16 MPa for 10 seconds while being foamed by heating at 200°C, and was then cooled by the water-cooling press at 16 MPa for 2 minutes to obtain a sheet-shaped foam (thickness of 2 mm, length of 150 mm, and width of 150 mm). Table 3 presents data such as property evaluation results of the obtained foam.

(Example 9)

A composition for foam (328.71 g) and a sheet-shaped foam (thickness of 2 mm, length of 150 mm, and width of 150 mm) were obtained by employing the same method as the method employed in Example 2 except that 2 g of the organic chemical foaming agent, specifically, azodicarbonamide (ADCA, manufactured by Otsuka Chemical Co., Ltd. under the trade name of "Unifoam AZ", foaming temperature (decomposition temperature) : 195 to 202°C) was used as the foaming agent instead of using 5 g of the thermally expandable microcapsules. Table 3 presents data such as

property evaluation results of the obtained foam.

(Example 10)

A composition for foam (328.71 g) and a sheet-shaped foam (thickness of 2 mm, length of 150 mm, and width of 150 mm) were obtained by employing the same method as the method employed in Example 3 except that 2 g of the organic chemical foaming agent, specifically, azodicarbonamide (ADCA, manufactured by Otsuka Chemical Co., Ltd. under the trade name of "Unifoam AZ", foaming temperature (decomposition temperature) : 195 to 202°C) was used as the foaming agent instead of using 5 g of the thermally expandable microcapsules. Table 3 presents data such as property evaluation results of the obtained foam.

(Example 11)

A composition for foam (328.71 g) and a sheet-shaped foam (thickness of 2 mm, length of 150 mm, and width of 150 mm) were obtained by employing the same method as the method employed in Example 4 except that 2 g of the organic chemical foaming agent, specifically, azodicarbonamide (ADCA, manufactured by Otsuka Chemical Co., Ltd. under the trade name of "Unifoam AZ", foaming temperature (decomposition temperature) : 195 to 202°C) was used as the foaming agent instead of using 5 g of the thermally expandable microcapsules. Table 3 presents data such as property evaluation results of the obtained foam.

(Example 12)

A composition for foam (328.71 g) and a sheet-shaped foam (thickness of 2 mm, length of 150 mm, and width of 150 mm) were obtained by employing the same method as the method employed in Example 5 except that 2 g of the organic chemical foaming agent, specifically, azodicarbonamide (ADCA, manufactured by Otsuka Chemical Co., Ltd. under the trade name of "Unifoam AZ", foaming temperature (decomposition temperature) : 195 to 202°C) was used as the foaming agent instead of using 5 g of the thermally expandable microcapsules. Table 3 presents data such as property evaluation results of the obtained foam.

(Example 13)

A composition for foam (328.71 g) and a sheet-shaped foam (thickness of 2 mm, length of 150 mm, and width of 150 mm) were obtained by employing the same method as the method employed in Example 6 except that 2 g of the organic chemical foaming agent, specifically, azodicarbonamide (ADCA, manufactured by Otsuka Chemical Co., Ltd. under the trade name of "Unifoam AZ", foaming temperature (decomposition temperature) : 195 to 202°C) was used as the foaming agent instead of using 5 g of the thermally expandable microcapsules. Table 3 presents data such as property evaluation results of the obtained foam.

(Example 14)

A composition for foam (328.71 g) and a sheet-shaped foam (thickness of 2 mm, length of 150 mm, and width of 150 mm) were obtained by employing the same method as the method employed in Example 7 except that 2 g of the organic chemical foaming agent, specifically, azodicarbonamide (ADCA, manufactured by Otsuka Chemical Co., Ltd. under the trade name of "Unifoam AZ", foaming temperature (decomposition temperature) : 195 to 202°C) was used as the foaming agent instead of using 5 g of the thermally expandable microcapsules. Table 3 presents data such as property evaluation results of the obtained foam.

(Comparative Example 3)

A composition for foam (328.61 g) and a sheet-shaped foam (thickness of 2 mm, length of 150 mm, and width of 150 mm) were obtained by employing the same method as the method employed in Comparative Example 1 except that 2 g of the organic chemical foaming agent, specifically, azodicarbonamide (ADCA, manufactured by Otsuka Chemical Co., Ltd. under the trade name of "Unifoam AZ", foaming temperature (decomposition temperature): 195 to 202°C) was used as the foaming agent instead of using 5 g of the thermally expandable microcapsules. Table 3 presents data such as property evaluation results of the obtained foam.

(Comparative Example 4)

A composition for foam (328.71 g) and a sheet-shaped foam (thickness of 2 mm, length of 150 mm, and width of 150 mm) were obtained by employing the same method as the method employed in Comparative Example 2 except that 2 g of the organic chemical foaming agent, specifically, azodicarbonamide (ADCA, manufactured by Otsuka Chemical Co., Ltd. under the trade name of "Unifoam AZ", foaming temperature (decomposition temperature): 195 to 202°C) was used as the foaming agent instead of using 5 g of the thermally expandable microcapsules. Table 3 presents data such as property evaluation results of the obtained foam.

| | | | Ex. 8 | Ex. 9 | Ex. 10 | Ex. 11 | Ex. 12 | Ex. 13 | Ex. 14 | Comp. Ex. 3 | Comp. Ex. 4 |
|---|---|---|---|---|---|---|---|---|---|---|---|
| Components in Composition (Unit : g) | Maleic Anhydride-Modified Ethylene-Butene Copolymer | | 100 | 100 | 100 | 100 | 100 | 100 | 100 | 100 | 100 |
| | Clay | Organically Modified Clay (A) | 0.1 | - | - | - | - | - | - | - | - |
| | | Organically Modified Clay (B) | - | 0.1 | - | - | - | - | - | - | - |
| | | Organically Modified Clay (C) | - | - | 0.1 | - | - | - | - | - | - |
| | | Organically Modified Clay (D) | - | - | - | 0.1 | - | - | - | - | - |
| | | Organically Modified Clay (E) | - | - | - | - | 0.1 | - | - | - | - |
| | | Organically Modified Clay (F) | - | - | - | - | - | 0.1 | - | - | - |
| | | Organically Modified Clay (G) | - | - | - | - | - | - | 0.1 | - | - |
| | | Clay (a) (Not Organically Modified) | - | - | - | - | - | - | - | - | 0.1 |
| | Tris(hydroxyethyl) Isocyanurate | | 1.31 | 1.31 | 1.31 | 1.31 | 1.31 | 1.31 | 1.31 | 1.31 | 1.31 |
| | Chemical Foaming Agent | | 2 | 2 | 2 | 2 | 2 | 2 | 2 | 2 | 2 |
| | Anti-Aging Agent | | 0.3 | 0.3 | 0.3 | 0.3 | 0.3 | 0.3 | 0.3 | 0.3 | 0.3 |
| | Styrene Block Copolymer (SEBS) | | 50 | 50 | 50 | 50 | 50 | 50 | 50 | 50 | 50 |
| | Paraffin Oil | | 100 | 100 | 100 | 100 | 100 | 100 | 100 | 100 | 100 |
| | Ethylene-Propylene Copolymer (EPM) | | 75 | 75 | 75 | 75 | 75 | 75 | 75 | 75 | 75 |
| | Total Amount of Composition (Unit : g) | | 328.71 | 328.71 | 328.71 | 328.71 | 328.71 | 328.71 | 328.71 | 328.61 | 328.71 |

(continued)

| | | Ex. 8 | Ex. 9 | Ex. 10 | Ex. 11 | Ex. 12 | Ex. 13 | Ex. 14 | Comp. Ex. 3 | Comp. Ex. 4 |
|---|---|---|---|---|---|---|---|---|---|---|
| Properties of Composition | JIS-A Hardness | 34 | 31 | 35 | 35 | 35 | 37 | 32 | 38 | 38 |
| | 100%Mod (MPa) | 0.49 | 0.61 | 0.48 | 0.51 | 0.49 | 0.44 | 0.45 | 0.11 | 0.23 |
| | Tensile Strength at Break (MPa) | 1.57 | 1.51 | 1.58 | 1.38 | 1.26 | 1.42 | 1.19 | 1.11 | 0.99 |
| | Compression Set (70°C,22H,25%) [Unit: %] | 63 | 40 | 73 | 73 | 55 | 75 | 57 | 92 | 86 |
| | Foaming Ratio | 1.68 | 1.89 | 1.78 | 1.69 | 1.49 | 1.39 | 1.37 | 1.20 | 1.22 |

In Table, - indicates that the corresponding component was not used.

3, it was found that the composition in the case of using any of the compositions for foam of the present invention (Examples 8 to 14) foamed at a higher foaming ratio than the compositions for foam obtained in the Comparative Examples 3 and 4. In addition, the hardness of the foam obtained in the case of using any of the compositions for foam of the present invention (Examples 8 to 14) was found to be at a level sufficiently usable as rubber products. Moreover, the modulus at 100% elongation and the tensile strength at break of the foams obtained in the case of using the compositions for foam of the present invention (Examples 8 to 14) were at higher levels than those of the foams obtained in the Comparative Examples 3 and This confirms that a foam having higher levels of tensile properties can be obtained. Moreover, in the case of using the compositions for foam of the present invention (Examples 8 to 14), the obtained foams had a compression set of 75% or less, and thereby were found to have a higher level of resistance to compression set than the foams obtained in Comparative Examples 3 and 4.

From these results, it was found that the compositions for foam in the case of using the organically modified clays (Examples 8 to 14) can foam at a higher level of foaming ratio during production of foams than those in the cases of using no clay (Comparative Example 3) and of using the simple clay (Comparative Example 4), and can also enhance all the properties, namely, the modulus at 100% elongation, the tensile strength at break, and the resistance to compression set to higher levels than in the latter cases. Thus, it was found that the composition for foam of the present invention (Examples 8 to 14) is capable of foaming at a sufficiently high level of foaming ratio, and forming a foam having higher levels of modulus at 100% elongation, tensile strength at break and resistance to compression set in a well-balanced manner.

Further, a relationship between a type of ammonium salt, and properties of a foam finally obtained was investigated based on the results presented in Table 3 and the types of ammonium salts used as the organically modifying agents as presented in Table 1, and the following findings were obtained. First, the foaming ratio in the case of using the clay organically modified by a combination of two organically modifying agents, namely, dimethyldioctadecyl ammonium and dimethylstearyl benzyl ammonium (Example 9) can achieve a higher value than in the cases of using the clays organically modified by the other organically modifying agents (Examples 8 and 10 to 14). Second, the foaming ratio in the case of using any of the organically modifying agents made of the dimethyl-type ammonium salts (Examples 8 to 11) can achieve a higher value than in the case of using any of the organically modifying agent made of the trimethyl-type ammonium salt (Example 13) . Third, the foaming ratio in the case of using any of the organically modifying agents made of the dimethyl-type ammonium salts (Examples 8 to 11) can achieve a higher value than in the case of using the organically modifying agent made of the hydroxyl-type ammonium salt (Example 12) . Lastly, the foaming ratio in the case of using any of the organically modifying agents made of dimethyl-type ammonium salts (Examples 8 to 11) can achieve a higher value than in the case of using the benzyl ammonium (Example 14) . Here, the present inventors speculate that, in the case of using a clay organically modified by an organically modifying agent made of a dimethyl-type ammonium salt (Examples 8 to 11), the compatibility of the organically modified clay with the elastomer component is more improved, the foaming agent is more uniformly dispersed in the elastomer component, and therefore the foaming ratio can achieve a higher level than in the case of using a clay organically modified by any of the other types of organically modifying agents (Examples 12 to 14). In addition, it was also found that the tensile strength at break in the cases of using the clays organically modified by the organically modifying agents made of the dimethyldialkyl-type ammonium salts (Examples 8 to 10) can be at a higher level than in the cases of using the other organically modified clays (Examples 11 to 14).

(Example 15)

First, 200 g of a styrene block copolymer (a styrene-ethylene-butylene-styrene block copolymer (SEBS) : manufactured by Kraton Corporation under the trade name of "G1633", molecular weight: 400, 000 to 500, 000, and styrene content: 30% by mass) was placed into the pressure kneader, 400 g of a paraffin oil (manufactured by JXTG Nippon Oil & Energy Corporation under the trade name of "300HV-S(J)", kinematic viscosity at 40°C: 48 $mm^2/s$, Cp value: 79%, and aniline point: 126°C) was slowly added dropwise to the pressure kneader during kneading under the condition of 180°C, and the styrene-ethylene-butylene-styrene block copolymer and the paraffin oil were mixed together for 1 minute. Thereafter, 100 g of a maleic anhydride-modified ethylene-butene copolymer (maleic EBM: manufactured by Mitsui Chemicals, Inc. under the trade name of "TAFMER MH5020", and crystallinity: 4%), 75 g of an $\alpha$-olefin-based resin, that is, an ethylene-propylene copolymer (EPM: manufactured by Mitsui Chemicals, Inc. under the trade name of "TAFMER DF7350", crystallinity: 10%, MFR: 35 g/10 min (2.16 kg, 190°C), and Mw: 100,000), and 0.8 g of an anti-aging agent (manufactured by ADEKA Corporation under the trade name of "AO-50") were further added to the pressure kneader, followed by kneading for 2 minutes at temperature of 180°C to obtain a first mixture (a step of obtaining a first mixture). Here, the first mixture was plasticized in the kneading step. Subsequently, 0.1 g of an organically modified clay (manufactured by KUNIMINE INDUSTRIES Co., Ltd. under the trade name of "Kunfil-D36") was further added to the first mixture in the pressure kneader, followed by kneading for 4 minutes at 180°C to obtain a second mixture (a step of obtaining a second mixture).

Next, 1.31 g of tris(hydroxyethyl) isocyanurate (manufactured by NISSEI CORPORATION under the trade name of "TANAC P") was added to the second mixture in the pressure kneader, followed by mixing for 8 minutes at 180°C to prepare a thermoplastic elastomer composition.

Subsequently, after the obtained thermoplastic elastomer composition was softened by kneading for 5 minutes under a temperature condition of 120°C, 40 g of a foaming agent, specifically, thermally expandable microcapsules (manufactured by Matsumoto Yushi-Seiyaku Co., Ltd. under the trade name of "Matsumoto Microsphere F-190D", foaming start temperature: 160 to 170°C, and maximum foaming temperature: 210 to 220°C) was added, followed by further kneading for 3 minutes to obtain a composition for foam (817.21 g).

Then, 20 g of the composition for foam thus obtained was introduced into a mold for molding a sheet (thickness of 2 mm, length of 150 mm, and width of 150 mm), was molded by application of pressure at 16 MPa for 30 seconds while being foamed by heating at 210°C, and was then cooled by a water-cooling press at 16 MPa for 2 minutes to obtain a sheet-shaped foam (thickness of 2 mm, length of 150 mm, and width of 150 mm). Table 4 presents data such as property evaluation results of the obtained foam.

(Comparative Example 5)

A composition for foam (817.11 g) and a sheet-shaped foam (thickness of 2 mm, length of 150 mm, and width of 150 mm) were obtained in the same manner as in Example 15 except that after the step of obtaining a first mixture was performed, the step of obtaining a second mixture was not performed (the organically modified clay (A) was not added to the first mixture), but the first mixture was used as it was in the process of preparing the thermoplastic elastomer composition, and 1.31 g of tris(hydroxyethyl) isocyanurate (manufactured by NISSEI CORPORATION under the trade name of "TANAC P") was added to the first mixture after the first mixture was plasticized, followed by mixing at 180°C for 8 minutes to prepare the thermoplastic elastomer composition (in the same manner as in Example 15 except that the organically modified clay (A) was not used). Table 4 presents data such as property evaluation results of the obtained foam.

(Example 16)

First, 200 g of a styrene block copolymer (a styrene-ethylene-butylene-styrene block copolymer (SEBS) : manufactured by Kraton Corporation under the trade name of "G1633", molecular weight: 400, 000 to 500, 000, and styrene content: 30% by mass) was placed into the pressure kneader, 400 g of a paraffin oil (manufactured by JXTG Nippon Oil & Energy Corporation under the trade name of "300HV-S (J)", kinematic viscosity at 40°C: 48 $mm^2/s$, Cp value: 79%, and aniline point: 126°C) was slowly added dropwise to the pressure kneader during kneading under the condition of 180°C and the styrene-ethylene-butylene-styrene block copolymer and the paraffin oil were mixed together for 1 minute. Thereafter, 100 g of a maleic anhydride-modified ethylene-butene copolymer (maleic EBM: manufactured by Mitsui Chemicals, Inc. under the trade name of "TAFMER MH5020", and crystallinity: 4%), 75 g of an $\alpha$-olefin-based resin, that is, polyethylene (PE: manufactured by Japan Polyethylene Corporation under the trade name of "HJ590N", crystallinity: 74%, MFR: 40 g/10 min (2.16 kg, 190°C), and Mw: 70,000), and 0.8 g of an anti-aging agent (manufactured by ADEKA Corporation under the trade name of "AO-50") were further added to the pressure kneader, followed by kneading for 2 minutes at temperature of 180°C to obtain a first mixture (a step of obtaining a first mixture). Here, the first mixture was plasticized in the kneading step. Subsequently, 0.1 g of an organically modified clay (manufactured by HOJUN Co., Ltd. under the trade name of "S-BEN WX") was further added to the first mixture in the pressure kneader, followed by kneading for 4 minutes at 180°C to obtain a second mixture (a step of obtaining a second mixture).

Next, 1.31 g of tris(hydroxyethyl) isocyanurate (manufactured by NISSEI CORPORATION under the trade name of "TANAC P") was added to the second mixture in the pressure kneader, followed by mixing for 8 minutes at 180°C to prepare a thermoplastic elastomer composition (a step of obtaining a thermoplastic elastomer composition).

Subsequently, after the obtained thermoplastic elastomer composition was softened by kneading for 5 minutes under a temperature condition of 120°C, 40 g of a foaming agent, specifically, thermally expandable microcapsules (manufactured by Matsumoto Yushi-Seiyaku Co., Ltd. under the trade name of "Matsumoto Microsphere F-190D", foaming start temperature: 160 to 170°C, and maximum foaming temperature: 210 to 220°C) was added, followed by further kneading for 3 minutes to obtain a composition for foam (817.21 g).

Then, 20 g of the composition for foam thus obtained was introduced into a mold for molding a sheet (thickness of 2 mm, length of 150 mm, and width of 150 mm), was molded by application of pressure at 16 MPa for 30 seconds while being foamed by heating at 210°C, and was then cooled by a water-cooling press at 16 MPa for 2 minutes to obtain a sheet-shaped foam (thickness of 2 mm, length of 150 mm, and width of 150 mm). Table 4 presents data such as property evaluation results of the obtained foam.

(Comparative Example 6)

A composition for foam (817.11 g) and a sheet-shaped foam (thickness of 2 mm, length of 150 mm, and width of 150 mm) were obtained in the same manner as in Example 16 except that after the step of obtaining a first mixture was performed, the step of obtaining a second mixture was not performed (the organically modified clay (B) was not added to the first mixture), but the first mixture was used as it was in the process of preparing the thermoplastic elastomer composition, and 1.31 g of tris(hydroxyethyl) isocyanurate (manufactured by NISSEI CORPORATION under the trade name of "TANAC P") was added to the first mixture after the first mixture was plasticized, followed by mixing at 180°C for 8 minutes to prepare the thermoplastic elastomer composition (in the same manner as in Example 16 except that the organically modified clay (B) was not used). Table 4 presents data such as property evaluation results of the obtained foam.

[Table 4]

| | | | Ex. 15 | Comp. Ex. 5 | Ex. 16 | Comp. Ex. 6 |
|---|---|---|---|---|---|---|
| Components in Composition (Unit : g) | Maleic Anhydride-Modified Ethylene-Butene Copolymer | | 100 | 100 | 100 | 100 |
| | Organically Modified Clay | Organically Modified Clay (A) | 0.1 | - | - | - |
| | | Organically Modified Clay (B) | - | - | 0.1 | - |
| | Tris(hydroxyethyl) Isocyanurate | | 1.31 | 1.31 | 1.31 | 1.31 |
| | Thermally Expandable Microcapsule | | 40 | 40 | 40 | 40 |
| | Anti-Aging Agent | | 0.8 | 0.8 | 0.8 | 0.8 |
| | Styrene Block Copolymer (SEBS) | | 200 | 200 | 200 | 200 |
| | Paraffin Oil | | 400 | 400 | 400 | 400 |
| | α-Olefin-Based Resin | Ethylene-Propylene Copolymer (EPM) | 75 | 75 | - | - |
| | | Polyethylene (PE) | - | - | 75 | 75 |
| | Total Amount of Composition (Unit : g) | | 817.21 | 817.11 | 817.21 | 817.11 |
| Properties of Composition | JIS-A Hardness | | 20 | 23 | 25 | 28 |
| | 100%Mod (MPa) | | 0.57 | 0.18 | 0.60 | 0.21 |
| | Tensile Strength at Break (MPa) | | 0.64 | 0.40 | 0.71 | 0.54 |
| | Compression Set (70°C,22H,25%) [Unit: %] | | 2 | 41 | 20 | 50 |
| | Foaming Ratio | | 2.74 | 1.85 | 2.64 | 1.91 |
| In Table, - indicates that the corresponding component was not used. | | | | | | |

As is apparent from the results presented in Table 4, in each of the cases of using the compositions for foam of the present invention (Examples 15 and 16), the composition for foam was found to foam at a higher foaming ratio than the corresponding one of the compositions for foam obtained in Comparative Example 5 and 6 having the same constitutions as the former compositions except for the presence and absence of the organically modified clays . In addition, the hardness of the foam obtained in the case of using any of the compositions for foam of the present invention (Examples 15 and 16) was found to be at a level sufficiently usable as rubber products. Also, the foam obtained in each of the cases of using the compositions for foam of the present invention (Examples 15 and 16) achieved higher levels of modulus at 100% elongation and tensile strength at break than the corresponding one of the foams obtained in Comparative Example 5 and 6 having the same constitutions as the former compositions except for the presence and absence of the organically modified clays. This confirms that a foam having higher levels of tensile properties can be obtained. Moreover, in the case of using the compositions for foam of the present invention (Examples 15 and 16), the

obtained foams had a compression set of 20% or less, and thereby were found to have a higher level of resistance to compression set than the foams obtained in Comparative Examples 5 and 6 having the same constitutions as the former compositions except for the presence and absence of the organically modified clays.

From these results, it was found that the compositions for foam in the case of using the organically modified clays (Examples 15 and 16) can foam at a higher level of foaming ratio during production of foams than in the cases of using no clay (Comparative Examples 5 and 6), and can also enhance all the properties of the obtained foams, namely, the modulus at 100% elongation, the tensile strength at break, and the resistance to compression set to higher levels than in the latter cases.

Thus, from the comparison between the compositions for foam having the same constitution except for the presence and absence of the organically modified clay, it was found that each of the compositions for foam of the present invention comprising the organically modified clays (Examples 15 and 16) is capable of foaming at a sufficiently high level of foaming ratio, and forming a foam having higher levels of modulus at 100% elongation, tensile strength at break and resistance to compression set in a well-balanced manner.

(Example 17)

First, a thermoplastic elastomer composition was prepared by employing the same step as the step of obtaining a thermoplastic elastomer composition employed in Example 16. In this way, the thermoplastic elastomer composition that is the same as in Example 16 was obtained.

Next, the obtained thermoplastic elastomer composition was cut into fine pieces, and the resultant fine pieces of the composition were physically mixed at room temperature with 80 g of a foaming agent, specifically, pellets of thermally expandable microcapsules (manufactured by Matsumoto Yushi-Seiyaku Co., Ltd. under the trade name of "MBF-190-EVA50", a master-batch product in which the thermally expandable microcapsules are kneaded in a resin (a content ratio of thermally expandable microcapsules: 50wt% and a content ratio of ethylene-vinyl acetate copolymer resin (EVA resin): 50wt%), and foaming start temperature: 160 to 170°C), thereby to obtain a composition for foam (857.21 g).

As for the foaming agent, the thermally expandable microcapsules per se was contained in an amount of 40 g (excluding the resin) (the same amount as in Example 16) and the type of the thermally expandable microcapsules per se was the same as the type used in Example 16 (the microcapsules used are of the same type as the type used in Example 16 except that the microcapsules are kneaded in the EVA resin). For these reasons, it is obvious that the composition for foam thus obtained is basically approximately equivalent to the composition for foam prepared in Example 16.

Subsequently, the composition for foam thus obtained was kneaded by using a single screw extruder with a diameter of 15 mm (manufactured by Unitest K.K., under the trade name of "LMEX-5", L/D = 23) under conditions at hearting temperature of 170°C and screw rotation speed of 40 rpm to obtain a strand-shaped foam with a diameter 4 mm.

The foam (Example 17) thus obtained was measured in terms of the foaming ratio, and the foaming ratio was found to be 2.58 (about 2.6 times). Although the strand-shaped foam (Example 17) cannot be directly compared with the foam obtained in Comparative Example 6 because the heating temperature for foaming was 170°C and the different processing method (molding method) was used, it is obvious that the composition for foam (Example 17) foamed at a sufficiently high level of foaming ratio in consideration of the process conditions and others. This result confirmed that the composition for foam (Example 17) of the present invention can be processed into a strand-shaped foam while foaming sufficiently by using a single screw extruder.

[Industrial Applicability]

As described above, according to the present invention, it is possible to provide a composition for foam capable of foaming at a sufficiently high level of foaming ratio and forming a foam having high levels of modulus at 100% elongation, tensile strength at break, and resistance to compression set in a well-balanced manner, a method for producing a composition for foam capable of producing the composition for foam, a foam obtained by using the composition for foam, a method for forming the foam, and a foam molded article comprising the foam.

Therefore, the composition for foam of the present invention is useful, for example, as materials or the like for manufacturing products using foams (for example: gasket/seal materials (anti-dust, waterproofing, moisture-proofing, and soundproofing), cushioning materials, and anti-vibration materials for vehicles, ships, light electrical appliances, and machineries; various kinds of joint materials, expandable pads for concrete, and floor cushioning materials for civil engineering and construction; pipe washing sponges; wrapping and packaging materials (cushioning materials for transportation and the like) for precision machineries, medical equipment, plate and sheet glasses, furniture, and the like; tires for sports and leisure; table tennis racquets; golf mats; shock-absorbent mats; cushions for stamping; and the like).

## Claims

1. A composition for foam comprising:

   at least one elastomer component selected from the group consisting of elastomeric polymers (A) each of which has a side chain containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below;
   an organically modified clay; and
   a foaming agent, wherein
   an amount of the organically modified clay contained is 20 parts by mass or less relative to 100 parts by mass of the elastomer component.

2. The composition for foam according to claim 1, wherein the organically modified clay is a clay organically modified by at least one organically modifying agent selected from ammonium salts represented by the following general formula (I):

   $$R_2N^+(CH_3)_2 \cdot X^- \quad (I),$$

   (in the formula (I), Rs each independently represent at least one selected from alkyl groups and aralkyl groups and $X^-$ represents a counter anion).

3. The composition for foam according to claim 2, wherein
   the organically modifying agent contains both an ammonium salt (A) represented by the above general formula (I) in which the two Rs in the formula (I) are alkyl groups and an ammonium salt (B) in which one of the two Rs in the general formula (I) is an alkyl group whereas the other one is an aralkyl group.

4. The composition for foam according to any one of claims 1 to 3, wherein the foaming agent is at least one kind selected from the group consisting of thermally expandable microcapsules, physical foaming agents, and chemical foaming agents.

5. The composition for foam according to any one of claims 1 to 4, wherein the elastomer component is at least one selected from the group consisting of reaction products of a maleic anhydride-modified elastomeric polymer with at least one compound selected from triazoles optionally having at least one substituent selected from hydroxy groups, thiol groups, and amino groups, pyridines optionally having at least one substituent selected from hydroxy groups, thiol groups, and amino groups, thiadiazoles optionally having at least one substituent selected from hydroxy groups, thiol groups, and amino groups, imidazoles optionally having at least one substituent selected from hydroxy groups, thiol groups, and amino groups, isocyanurates optionally having at least one substituent selected from hydroxy groups, thiol groups, and amino groups, triazines optionally having at least one substituent selected from hydroxy groups, thiol groups, and amino groups, hydantoins optionally having at least one substituent selected from hydroxy groups, thiol groups, and amino groups, tris(hydroxyethyl) isocyanurates, sulfamides, and polyether polyols.

6. A method for producing a composition for foam, comprising:

   a first step of mixing an organically modified clay into an elastomeric polymer having a cyclic acid anhydride group in a side chain to obtain a mixture;
   a second step of adding, to the mixture, at least one raw material compound of a compound (I) that forms a hydrogen-bond cross-linkable moiety upon a reaction with the cyclic acid anhydride group, and a mixed raw material of the compound (I) with a compound (II) that forms a covalent-bond cross-linking moiety upon a reaction with the cyclic acid anhydride group, to allow a reaction to proceed between the polymer and the raw material compound, thereby obtaining a thermoplastic elastomer composition; and
   a third step of adding a foaming agent to the thermoplastic elastomer composition to obtain a composition for foam, wherein
   the composition for foam is a composition comprising at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below;
the organically modified clay; and
the foaming agent, and
in the first step, the organically modified clay is mixed into the elastomeric polymer having a cyclic acid anhydride group in a side chain at such a ratio that an amount of the organically modified clay contained in the composition for foam is 20 parts by mass or less relative to 100 parts by mass of the elastomer component.

**7.** The method for producing a composition for foam according to claim 6, wherein
the elastomeric polymer having a cyclic acid anhydride group in a side chain is a maleic anhydride-modified elastomeric polymer,
the raw material compound is at least one compound selected from triazoles optionally having at least one substituent selected from hydroxy groups, thiol groups, and amino groups, pyridines optionally having at least one substituent selected from hydroxy groups, thiol groups, and amino groups, thiadiazoles optionally having at least one substituent selected from hydroxy groups, thiol groups, and amino groups, imidazoles optionally having at least one substituent selected from hydroxy groups, thiol groups, and amino groups, isocyanurates optionally having at least one substituent selected from hydroxy groups, thiol groups, and amino groups, triazines optionally having at least one substituent selected from hydroxy groups, thiol groups, and amino groups, hydantoins optionally having at least one substituent selected from hydroxy groups, thiol groups, and amino groups, tris(hydroxyethyl) isocyanurates, sulfamides, and polyether polyols, and
the elastomer component is at least one selected from the group consisting of reaction products of the maleic anhydride-modified elastomeric polymer with the raw material compound.

**8.** The method for producing a composition for foam according to claim 6 or 7, wherein
the organically modified clay is a clay organically modified by at least one organically modifying agent selected from ammonium salts represented by the following general formula:

$$R_2N^+(CH_3)_2 \cdot X^- \qquad (I)$$

(in the formula (I), Rs each independently represent at least one selected from alkyl groups and aralkyl groups and $X^-$ represents a counter anion).

**9.** A foam formed by foaming the composition for foam according to any one of claims 1 to 5.

**10.** A foam molded article comprising the foam according to claim 9.

**11.** The foam molded article according to claim 10, wherein the foam molded article is a molded article for use in any application selected from the group consisting of civil engineering and construction materials, industrial parts, electric and electronic parts, and daily necessities.

**12.** The foam molded article according to claim 10 or 11, wherein the foam molded article is a molded article for use in any application selected from the group consisting of automotive parts, gap filling materials, sealing materials for construction, sealing materials for pipe joints, pipe protecting materials, wiring protecting materials, heat insulating materials, packing materials, cushioning materials, electrical insulating materials, contact rubber sheets, sports and leisure articles, and miscellaneous goods.

**13.** A method for producing a foam, comprising obtaining a foam by foaming the composition for foam according to any one of claims 1 to 5.

## INTERNATIONAL SEARCH REPORT

International application No.
PCT/JP2017/010663

A. CLASSIFICATION OF SUBJECT MATTER
*C08J9/04*(2006.01)i, *C08F8/30*(2006.01)i, *C08K9/04*(2006.01)i, *C08L101/02* (2006.01)i

According to International Patent Classification (IPC) or to both national classification and IPC

B. FIELDS SEARCHED

Minimum documentation searched (classification system followed by classification symbols)
C08J9/00-42, C08K, C08L

Documentation searched other than minimum documentation to the extent that such documents are included in the fields searched
Jitsuyo Shinan Koho 1922-1996 Jitsuyo Shinan Toroku Koho 1996-2017
Kokai Jitsuyo Shinan Koho 1971-2017 Toroku Jitsuyo Shinan Koho 1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2007-56145 A (Asahi Kasei Chemicals Corp.), 08 March 2007 (08.03.2007), claims; paragraphs [0001], [0018], [0023], [0024], [0033], [0035], [0038], [0039], [0041], [0053]; examples (Family: none) | 1,2,4,9-13<br>3,5-8 |
| A | JP 2006-232983 A (The Yokohama Rubber Co., Ltd.), 07 September 2006 (07.09.2006), entire text (Family: none) | 1-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 June 2017 (02.06.17) | 13 June 2017 (13.06.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/010663

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-307576 A (The Yokohama Rubber Co., Ltd.), 04 November 2004 (04.11.2004), entire text (Family: none) | 1-13 |
| A | JP 2005-532449 A (Exxonmobil Chemical Patents Inc.), 27 October 2005 (27.10.2005), entire text & US 2006/0100339 A1 & WO 2004/005388 A1 & EP 1527127 A1 & CA 2489875 A & CN 1665870 A & AU 2003245373 A | 1-13 |
| P,A | WO 2016/158205 A1 (JX Nippon Oil & Energy Corp.), 06 October 2016 (06.10.2016), entire text & JP 2016-193970 A & JP 5918878 B1 | 1-13 |
| E,A | WO 2017/047274 A1 (JX Nippon Oil & Energy Corp.), 23 March 2017 (23.03.2017), entire text (Family: none) | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006090687 A
- JP 2012057132 A
- JP 2006131663 A
- JP H10230528 B